(19) Europäisches Patentamt
European Patent Office
Office européen des brevets

(11) EP 4 531 322 A1

(12) EUROPEAN PATENT APPLICATION

(43) Date of publication:
02.04.2025 Bulletin 2025/14

(21) Application number: 24203194.6

(22) Date of filing: 27.09.2024

(51) International Patent Classification (IPC):
H04L 5/00 (2006.01)        H04W 72/23 (2023.01)

(52) Cooperative Patent Classification (CPC):
H04L 5/0023; H04L 5/0053; H04L 5/0094;
H04W 72/23

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 US 202363540978 P

(71) Applicant: Comcast Cable Communications LLC
Philadelphia, Pennsylvania 19103 (US)

(72) Inventors:
• CIRIK, Ali Cagatay
  Philadelphia, 19103 (US)
• PRASAD, Gautham
  Philadelphia, 19103 (US)
• DINAN, Esmael Hejazi
  Philadelphia, 19103 (US)
• ZHOU, Hua
  Philadelphia, 19103 (US)
• JEON, Hyoungsuk
  Philadelphia, 19103 (US)
• KEATING, Ryan
  Philadelphia, 19103 (US)

(74) Representative: V.O.
P.O. Box 87930
2508 DH Den Haag (NL)

(54) ENERGY SAVING FOR REPETITIONS

(57) One or more parameters may be used to configure wireless communications between a wireless device and a base station. A transmission configuration indication selection field may indicate which of two (or more) resources is to be used for a transmission/reception. A transport block size for a transmission occasion may be determined using one of the resources, and the same transport block size may be used for another transmission occasion using another of the resources, for example, if the transmission configuration indication selection field indicates using two resources or if the transmission configuration indication selection field is absent.

FIG. 24

**Description**

CROSS-REFERENCE TO RELATED APPLICATIONS

This application claims the benefit of U.S. Provisional Application No. 63/540,978 filed on September 28, 2023. The above-referenced application is hereby incorporated by reference in its entirety.

BACKGROUND

A wireless device communicates with a base station. The wireless device receives configuration parameters for communicating via a cell. One or more transmission configuration indication parameters are used to indicate resources for a transmission.

SUMMARY

The following summary presents a simplified summary of certain features. The summary is not an extensive overview and is not intended to identify key or critical elements.

One or more parameters may configure wireless communications between a base station and a wireless device. A first parameter, such as in a transmission configuration indication field may indicate at least two resources for transmission/reception. A second parameter, such as in a transmission configuration indication selection field may indicate which (e.g., one or both) of the at least two resources to use for the transmission. A transport block size for a transmission occasion may be determined using one of the resources and a same transport block size for another transmission occasion may be used for another of the resources, for example, if the second parameter indicates using two resources or if the second parameter is absent. Additionally or alternatively, one or more parameters (e.g., transmission power, transmission/reception time, etc.) may be determined based on a resource to be used for transmission/reception. Additionally or alternatively, one or more parameters may be based on a scheduled transmission/reception resource (e.g., assuming no repetition) or may be based on a default transmission/reception resource (e.g., assuming repetition), for example, if a transmission/reception resource is not monitored (e.g., due to the transmission resource being inactive).

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of energy saving.

FIG. 18A and FIG. 18B show examples of a control command.

FIG. 19, FIG. 20, and FIG. 21 show examples of energy saving.

FIG. 22 and FIG. 23 shows example methods of energy saving.

FIG. 24 shows an example method for determining transport block size (TBS).

FIG. 25A shows an example method for receiving a phase-tracking reference signal (PT-RS).

FIG. 25B shows an example method for sending a PT-RS.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

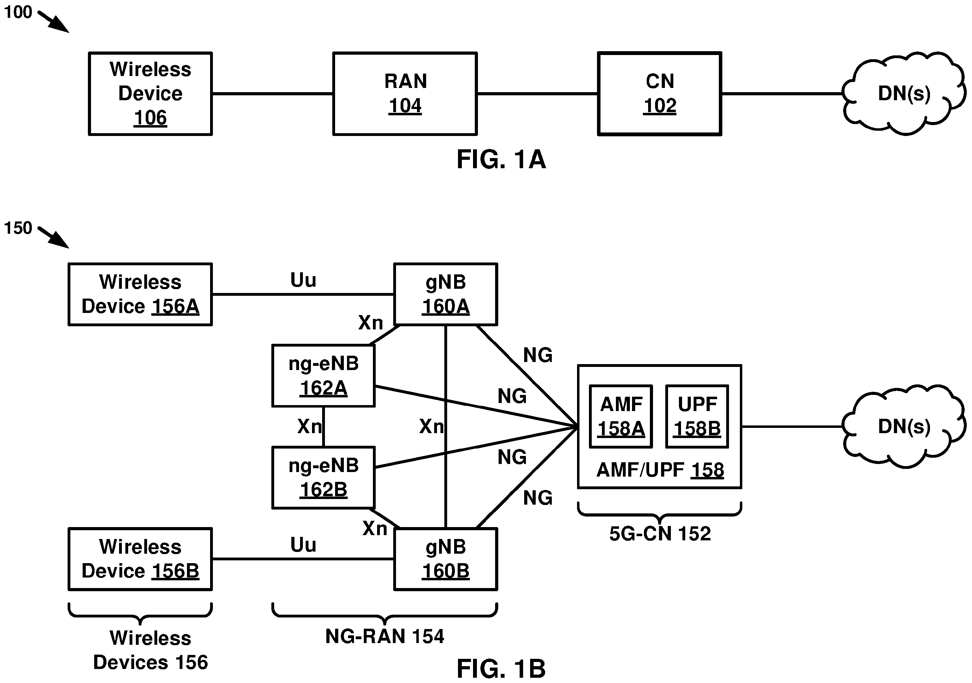

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMFIUPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

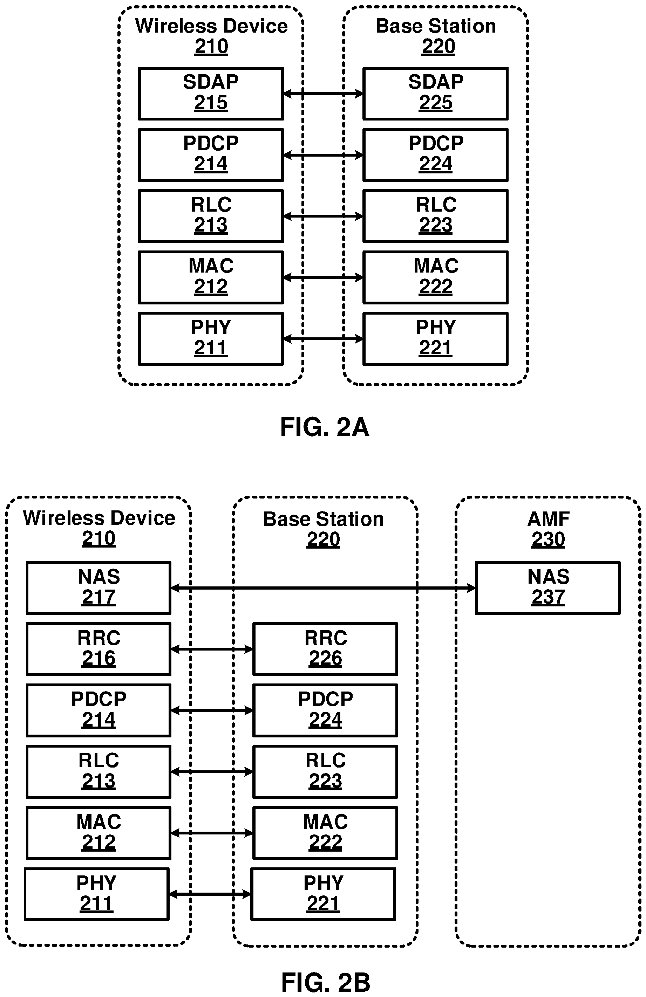

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

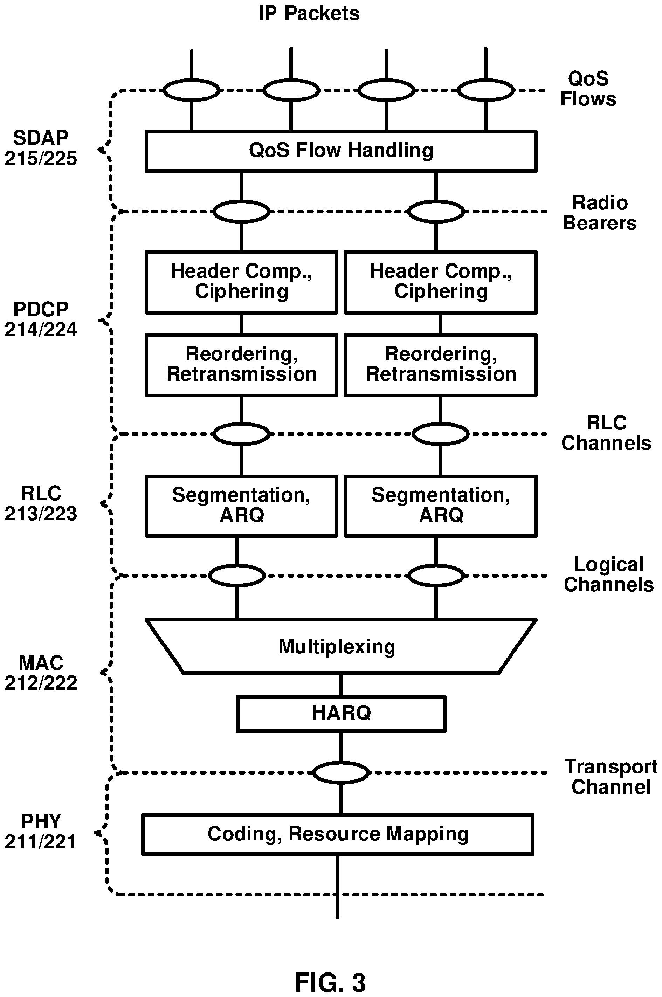

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

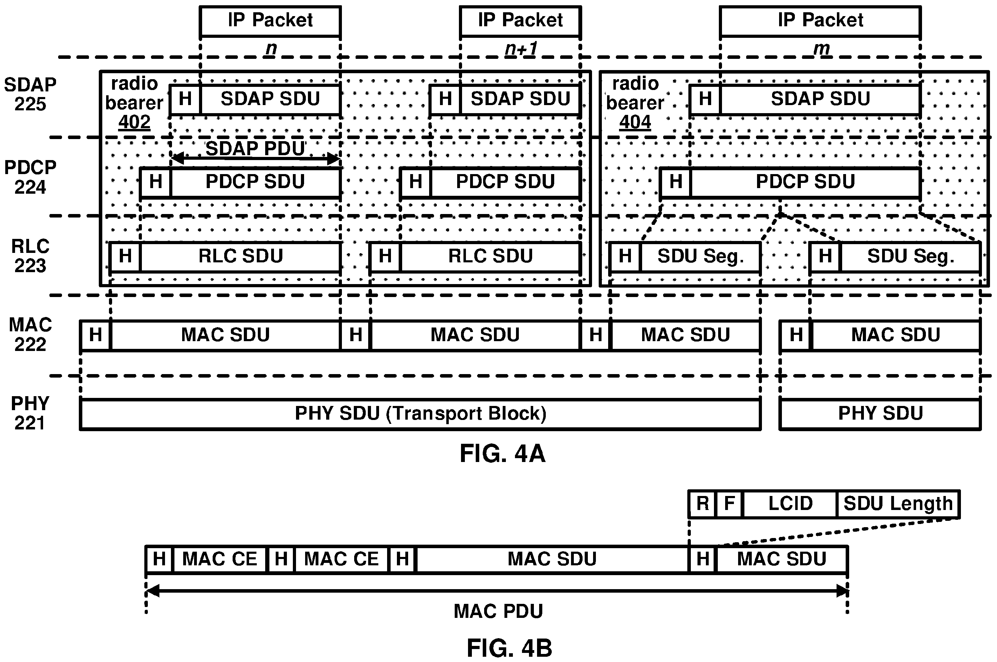

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

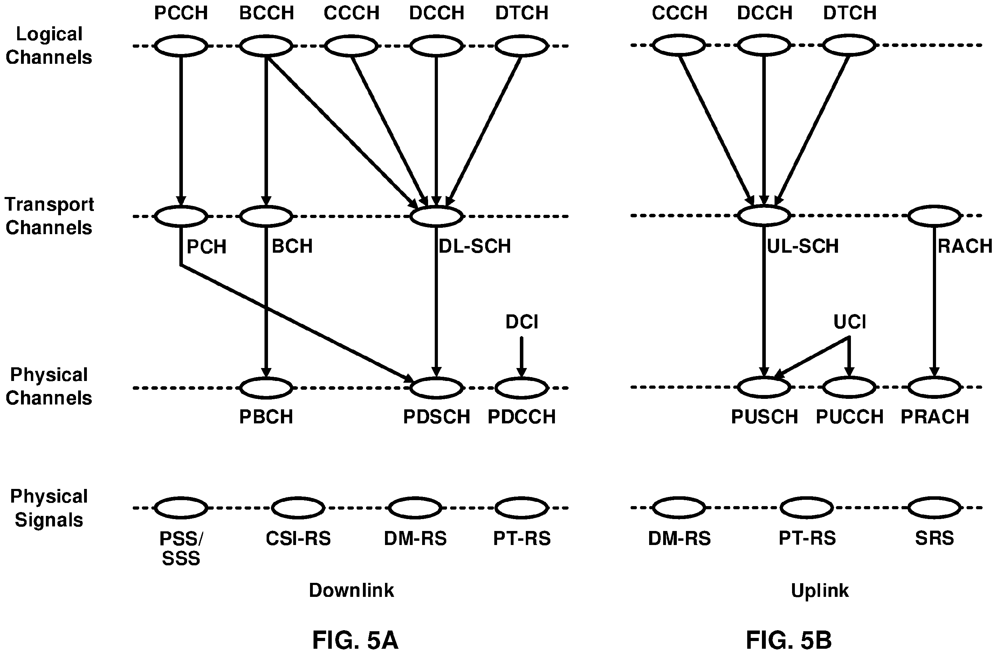

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

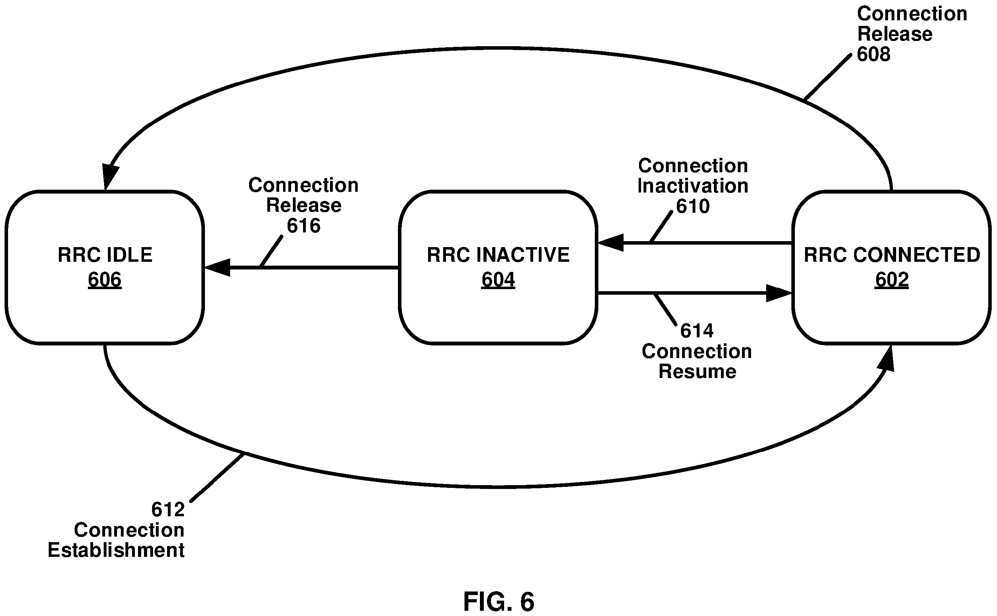

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

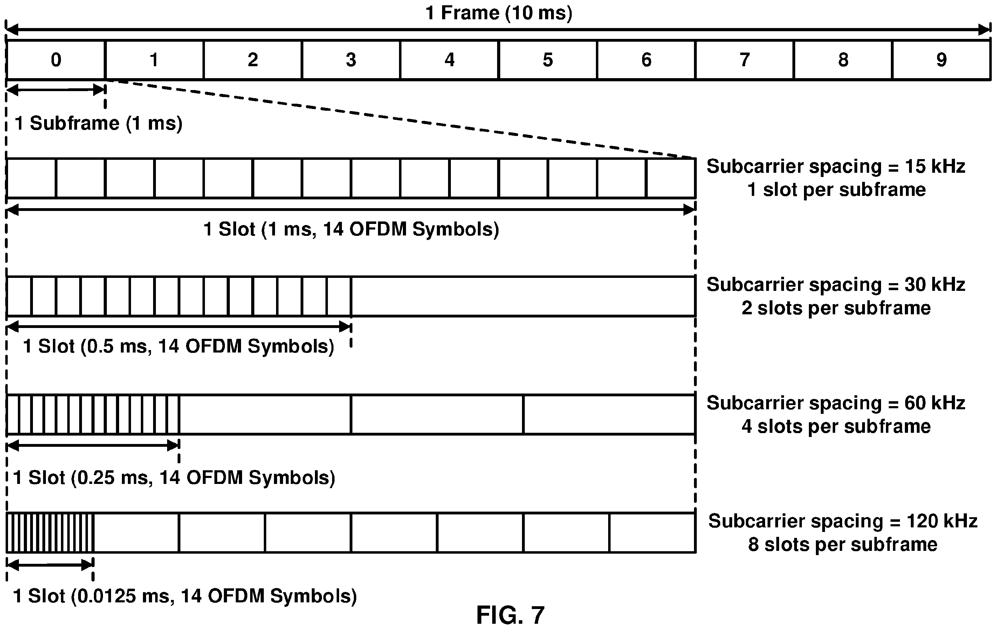

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

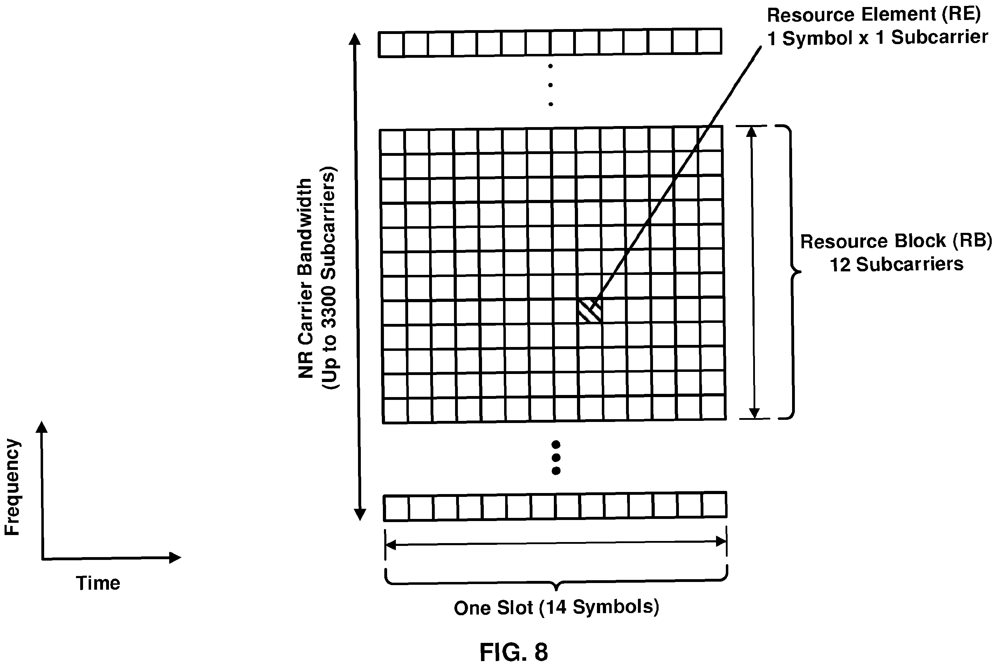

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

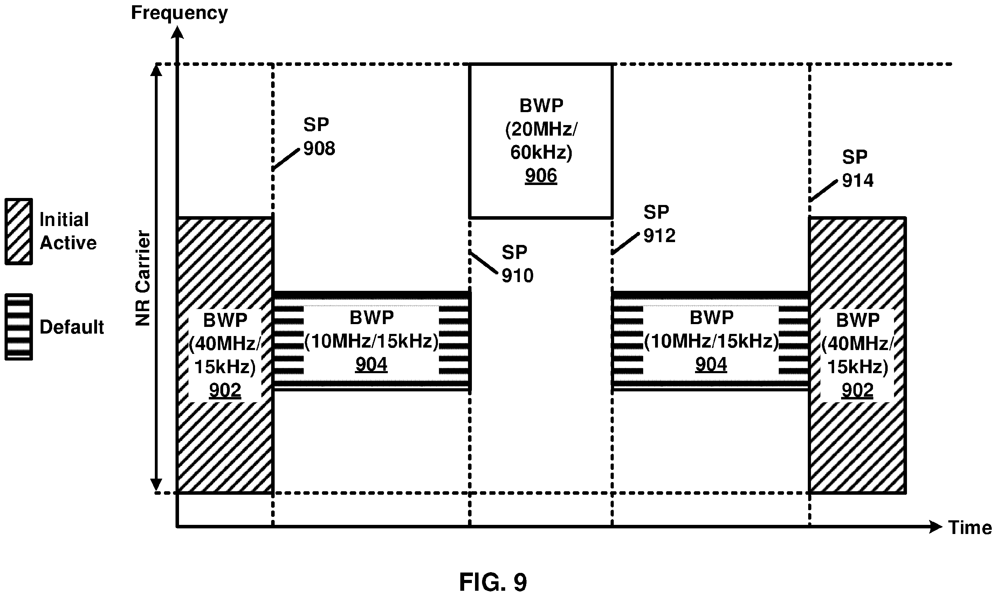

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

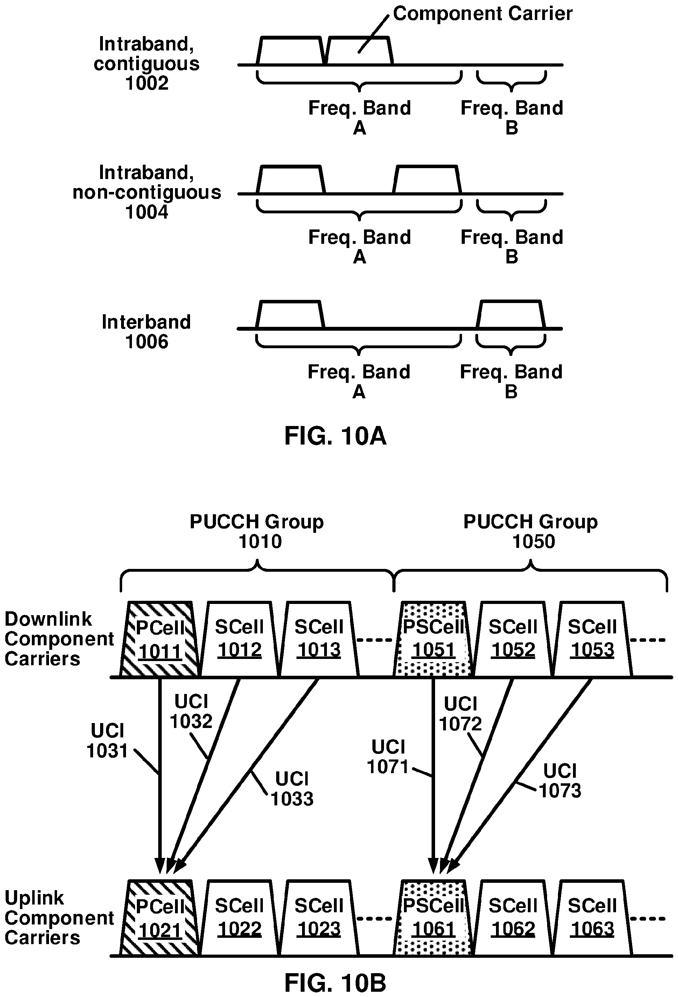

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

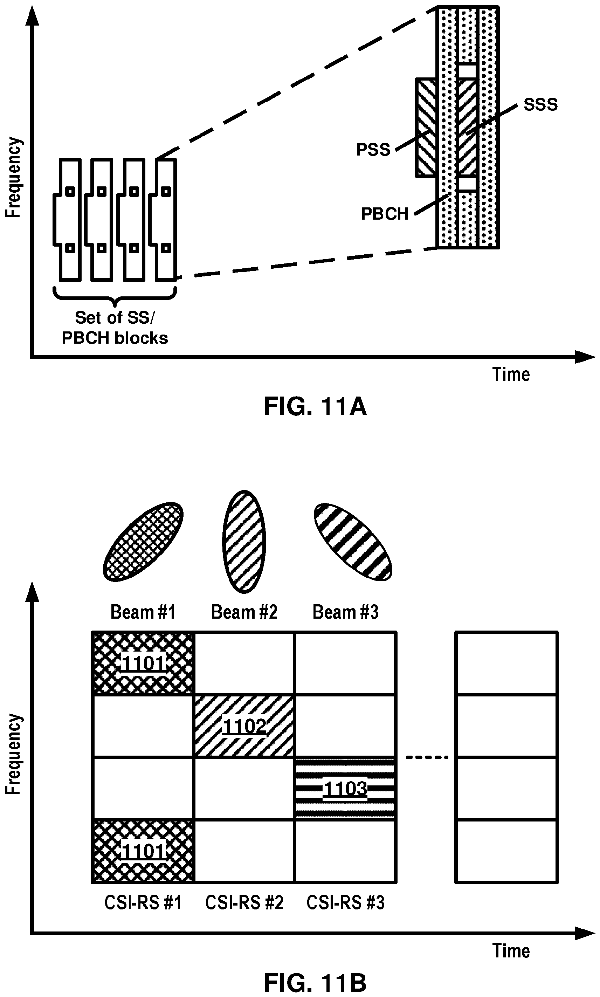

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1 The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

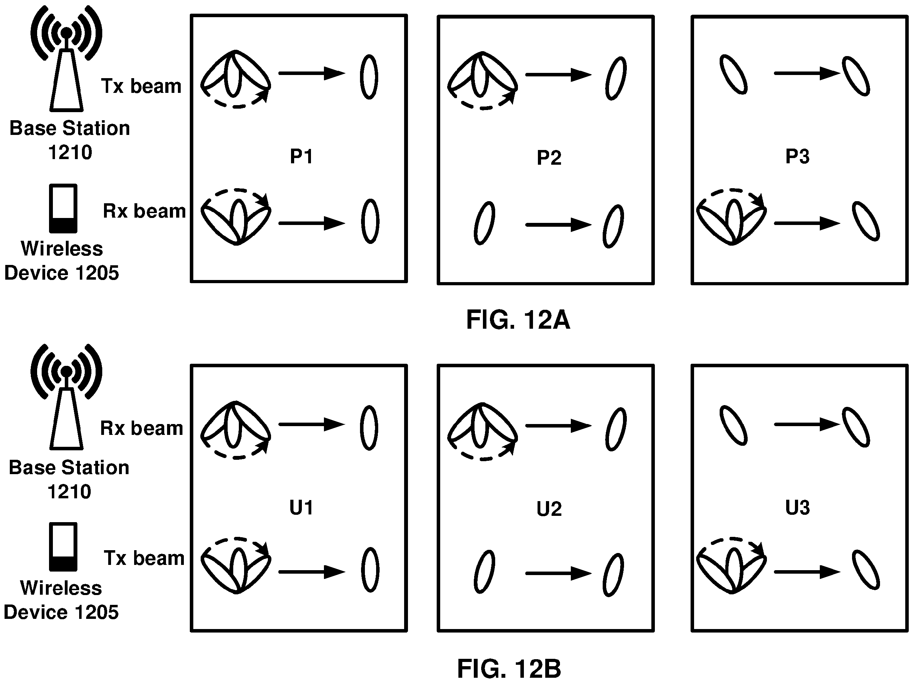

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

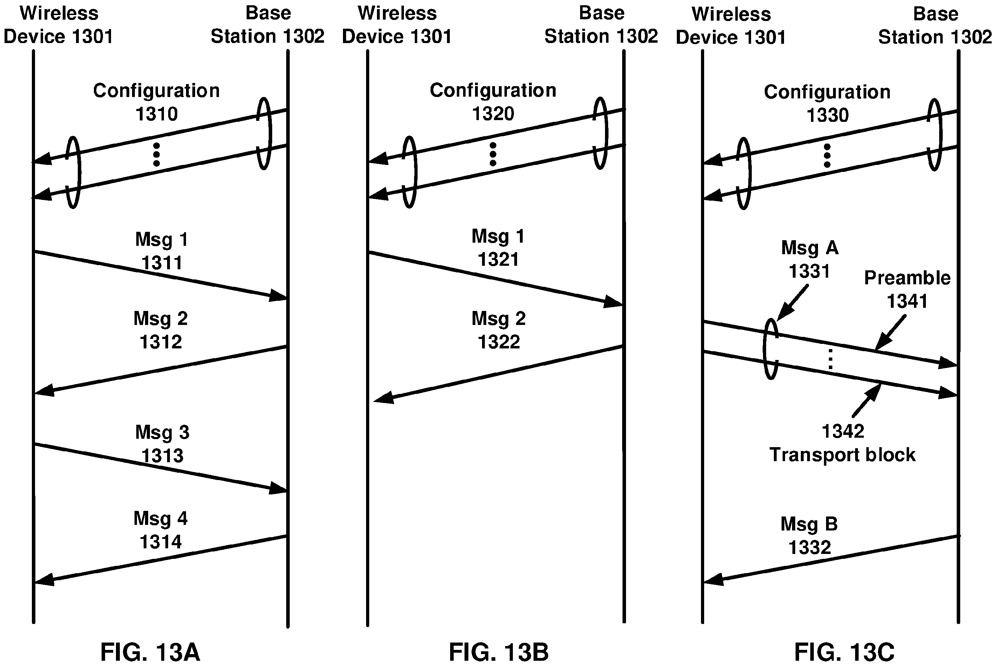

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., RACH-*ConfigCommon*); and/or dedicated parameters (e.g., *RACH-configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e. g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER).* The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*).

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

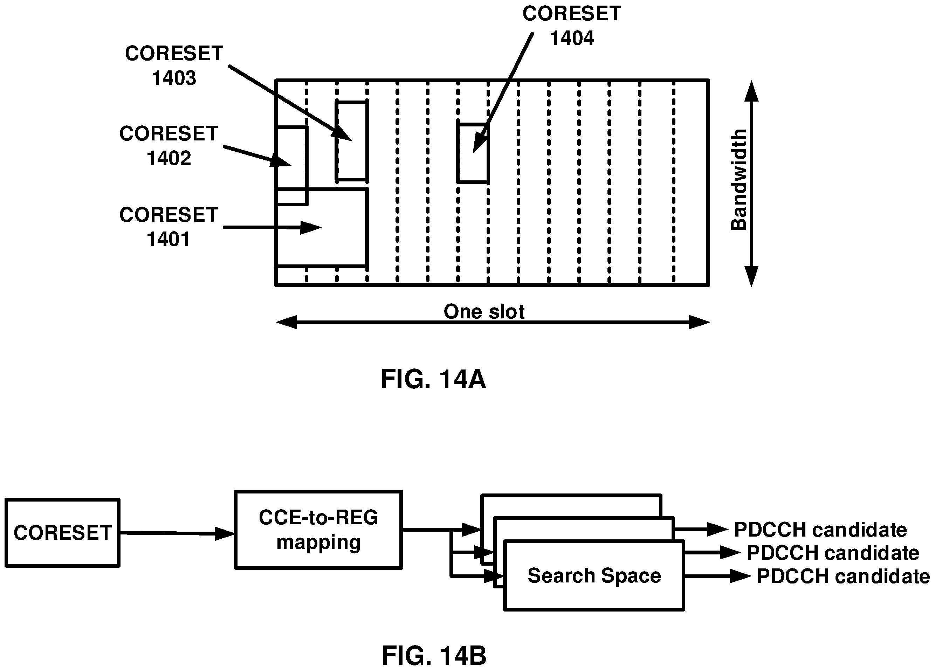

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

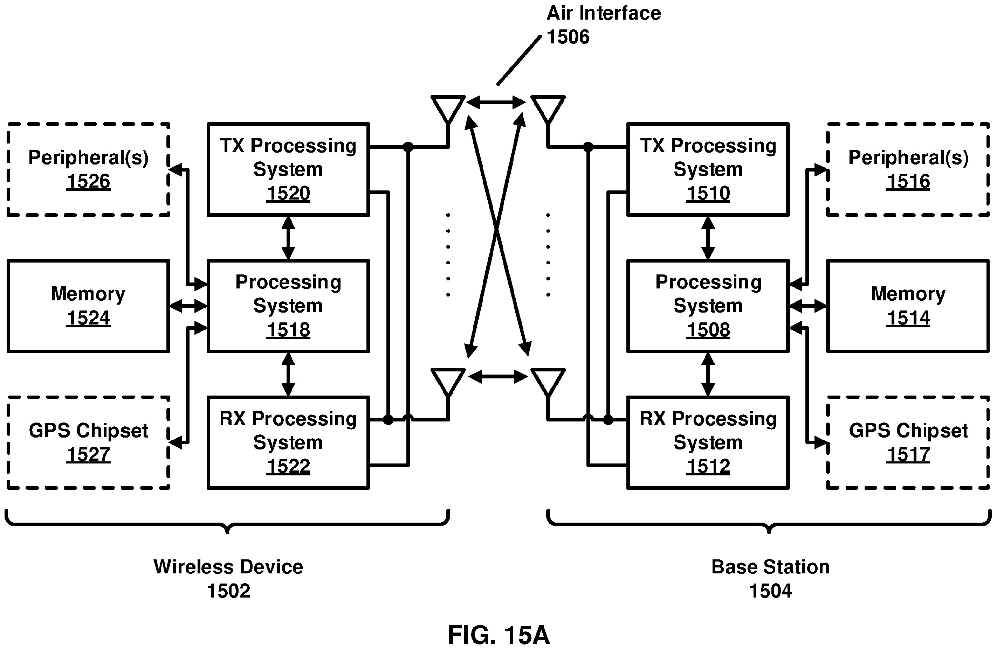

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

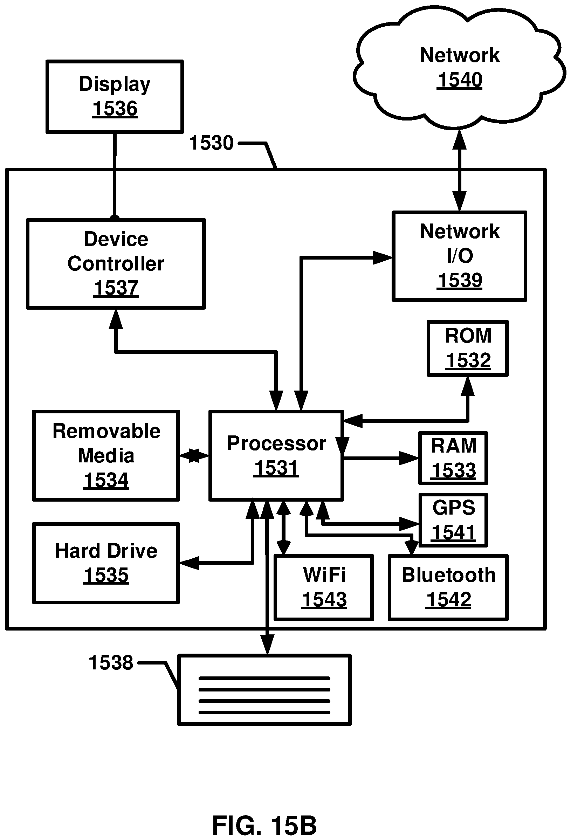

FIG. 15B shows example elements of a computing device that may be used to implement any of the various devices described herein, including, for example, the base station 160A, 160B, 162A, 162B, 220, 1210, 1302, and/or 1702, the wireless device 106, 156A, 156B, 210, 1205, 1301, and/or 1701, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

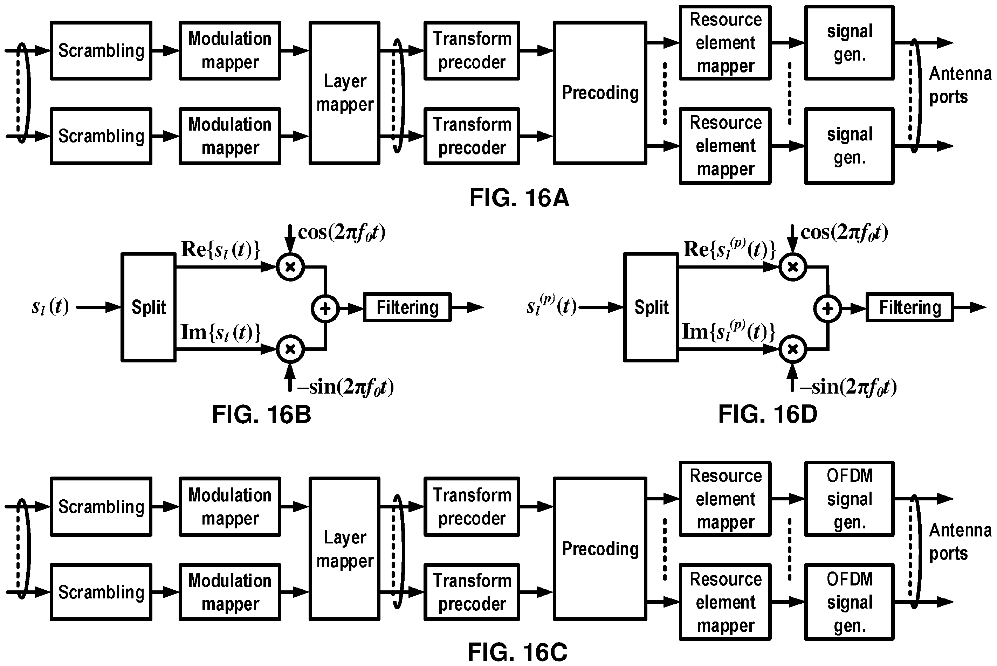

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive (e.g., from a base station) one or more messages comprising one or more configuration parameters of a cell. The one or more configuration parameters may indicate, for the cell, at least two discontinuous transmissions (DTXs) for energy saving of the cell. For example, a first discontinuous transmission (DTX) of the at least two DTXs may be for a first TRP (e.g., TRP 1) and a second DTX of the at least two DTXs may be for a second TRP (e.g., TRP 2). In at least some wireless communications, the wireless device may not monitor downlink control channels for a downlink reception (e.g., PDCCH reception, DCI), for example, during a non-active time/duration/period of a DTX of the cell.

The one or more configuration parameters may indicate a plurality of (e.g., two) search space sets linked for PDCCH repetition. The wireless device may monitor, for DCI (or a DCI format), a plurality of (e.g., two) PDCCH candidates in/from/of the plurality of (e.g., two) search space sets for repetitions of DCI.

The wireless device may receive at least one PDCCH candidate of the plurality of (e.g., two) PDCCH candidates. The wireless device may decode the at least one PDCCH candidate, for example, based on the monitored DCI format. The wireless device may receive/detect DCI with the DCI format, for example, based on the decoding.

In at least some wireless communications, the wireless device may communicate (e.g., with the base station) an uplink/downlink transmission/reception scheduled/triggered/activated by the DCI, for example, based on a PDCCH candidate, among the plurality of (e.g., two) PDCCH candidates, that ends later or that starts earlier. The PDCCH candidate may be a default PDCCH candidate. The wireless device may use the PDCCH candidate (e.g., the last symbol of the PDCCH candidate, the starting symbol of the PDCCH candidate, the search space set associated with the PDCCH candidate, the coreset associated with the PDCCH candidate, and the like) for communication with the base station, for example, even if the wireless device does not receive the PDCCH candidate. This use of the PDCCH candidate may be seen as a PDCCH repetition mode.

The wireless device may not monitor one of the plurality of (e.g., two) PDCCH candidates, for example, during a non-active time/duration/period of a DTX of the at least two DTXs of the cell. The wireless device may monitor, for DCI (or a DCI format), one of the plurality of (e.g., two) PDCCH candidates, for example, during the non-active time/duration/period of a DTX of the at least two DTXs of the cell. The wireless device may receive the (monitored) one of the plurality of (e.g., two) PDCCH candidates. The wireless device may decode the (received) one of the plurality of (e.g., two) PDCCH candidates, for example, based on the monitored DCI format. The wireless device may receive/detect DCI with the DCI format, for example, based on the decoding.

The wireless device may not monitor a second PDCCH candidate of the plurality of (e.g., two) PDCCH candidates, for example, during a non-active time/duration/period of the second DTX of the at least two DTXs of the cell. The wireless device may monitor, for DCI (or a DCI format), a first PDCCH candidate of the plurality of (e.g., two) PDCCH candidates. The wireless device may receive the first PDCCH candidate. The wireless device may decode the first PDCCH candidate, for example, based on the monitored DCI format. The wireless device may receive/detect DCI with the DCI format, for example, based on the decoding.

The wireless device may not have information on whether to communicate, with the base station, an uplink/downlink transmission/reception scheduled/triggered/activated by the DCI. The wireless device may not have information on whether to communicate, with the base station, an uplink/downlink transmission/reception scheduled/triggered/activated by the DCI, for example, based on a PDCCH candidate, among the plurality of (e.g., two) PDCCH candidates, that ends later or that starts earlier (e.g., PDCCH repetition mode), for example, if the wireless device does not monitor one of the plurality of (e.g., two) PDCCH candidates, for example, during a non-active time/duration/period of a DTX of the at least two DTXs of the cell. Alternatively, the wireless device may not have information on whether to communicate, with the base station, an uplink/downlink transmission/reception scheduled/triggered/activated by the DCI, for example, based on the (received) one of the plurality of (e.g., two) PDCCH candidates (e.g., no PDCCH repetition mode), for example, if the wireless device does not monitor one of the plurality of (e.g., two) PDCCH candidates, for example, during a non-active time/duration/period of a DTX of the at least two DTXs of the cell. The wireless device and/or the base station may not receive (e.g., successfully receive) the downlink reception and/or the uplink transmission, for example, if the base station and the wireless device are not aligned on the PDCCH repetition mode or the no PDCCH repetition mode. This misalignment may lead to issues such as increased retransmissions, increased latency, and/or increased power consumption at the wireless device and/or the base station.

The examples described herein may enhance PDCCH repetition in a non-active time/duration/period of one of the at least two DTXs. A wireless device may determine parameters (e.g., transmission power, transmission/reception time, processing time, and the like) of an uplink/downlink communication, for example, based on monitored and/or received PDCCH candidate (e.g., assuming no PDCCH repetition mode), for example, if the wireless device does not monitor one of two (or more) PDCCH candidates linked for PDCCH repetition, for example, during a non-active time/period/duration of a first DTX configuration of TRP 1 or a non-active time/period/duration of a second DTX configuration of TRP 2. Alternatively, a wireless device may determine the parameters of the uplink/downlink communication, for example, based on a default PDCCH candidate (e.g., assuming a multi-TRP PDCCH repetition mode), for example, if the wireless device does not monitor one of two (or more) PDCCH candidates linked for PDCCH repetition, for example, during a non-active time/period/duration of a first DTX configuration of TRP 1 or a non-active time/period/duration of a second DTX configuration of TRP 2.

A wireless device may communicate, with a base station, an uplink/downlink transmission/reception scheduled/triggered/activated by DCI, for example, based on a PDCCH candidate, among a plurality of (e.g., two) PDCCH candidates, that ends later (e.g., ends latest) or that starts earlier (e.g., starts earliest) (e.g., PDCCH repetition mode). The wireless device may communicate, with the base station, an uplink/downlink transmission/reception scheduled/triggered/activated by the DCI, for example, based on a PDCCH candidate, among the plurality of (e.g., two) PDCCH candidates, that ends later or that starts earlier (e.g., PDCCH repetition mode), for example, if the wireless device does not monitor one of the plurality of (e.g., two) PDCCH candidates, for example, during a non-active time/duration/period of a DTX of the at least two DTXs of the cell. The PDCCH candidate may be a default PDCCH candidate. The wireless device may use the PDCCH candidate, among the plurality of (e.g., two) PDCCH candidates, that ends later or that starts earlier, for example, regardless of the wireless device received/detected the PDCCH candidate. The wireless device may communicate, with the base station, an uplink/downlink transmission/reception scheduled/triggered/activated by the DCI, for example, based on the (received) one of the plurality of (e.g., two) PDCCH candidates (e.g., no PDCCH repetition mode). The wireless device may communicate, with the base station, an uplink/downlink transmission/reception scheduled/triggered/activated by the DCI, for example, based on the (received) one of the plurality of (e.g., two) PDCCH candidates (e.g., no PDCCH repetition mode), for example, if the wireless device does not monitor one of the plurality of (e.g., two) PDCCH candidates, for example, during/in a non-active time/duration/period of a DTX of the at least two DTXs of the cell. The examples described herein may lead to improvements such as reduced retransmissions, reduced latency, and/or reduced power consumption at the wireless device and/or the base station.

A wireless device may receive RRC configuration parameters indicating a time domain repetition scheme or a frequency domain repetition scheme. The wireless device may receive DCI scheduling a PDSCH reception, where the DCI comprises a transmission configuration indication (TCI) field. In at least some wireless communications (e.g., according to 3GPP Release 16), a wireless device may determine a transport block size (TBS) using a first PDSCH transmission occasion associated with a first TCI state of two TCI states, and may use/apply the same TBS for/to both a first PDSCH transmission occasion and a second PDSCH transmission occasion associated with a second TCI state of the two TCI states, for example, if/when the time domain repetition scheme or the frequency domain repetition scheme is configured and the TCI field of the DCI indicates the two TCI states for the PDSCH reception. Alternatively or additionally, a wireless device may receive a single phase tracking reference signal (PT-RS) associated with a lowest indexed demodulation reference signal (DM-RS) antenna port among DM-RS antenna ports assigned for the PDSCH reception. The same DCI may both schedule the PDSCH reception and indicate the two TCI states for the PDSCH reception by the TCI field.

In at least some other wireless communications (e.g., in unified TCI state framework according to 3GPP Release 18), a wireless device may receive first DCI with a TCI field indicating two unified TCI states comprising a first unified TCI state and a second unified TCI state, and the wireless device may receive second DCI (e.g., later) scheduling a PDSCH reception. The second DCI may have a TCI selection field indicating to apply/use the first unified TCI state only, the second unified TCI state only, or both of the two unified TCI states to/for the PDSCH reception. The TCI selection field is different from a TCI field. The second DCI may also have a TCI field or may not have a TCI field. The TCI selection field may indicate which TCI state(s) among the already indicated two unified TCI states to apply to the PDSCH reception. The TCI field may indicate new unified TCI state(s). The wireless device may apply/use both of the two unified TCI states as a default to/for the PDSCH reception, for example, if/when the TCI selection field is absent. In at least some other wireless communications (e.g., in Release-18), which TCI state(s) or how many TCI state(s) to apply to (or use for) a PDSCH reception may not be determined based on the TCI field but based on the TCI selection field or absence of the TCI selection field. Different DCIs may schedule the PDSCH reception and indicate the two unified TCI states.

In at least some other wireless communications (e.g., according to 3GPP Release 18), the wireless device may determine the number (or quantity) of TCI states to apply to (or use for) a PDSCH reception based on the value of the TCI selection field in a scheduling DCI, or absence of the TCI selection field in the DCI. Determining the TBS size, or determining to receive a single PT-RS, based on the number (or quantity) of indicated TCI states by the TCI field, for example, if/when the time domain repetition scheme or the frequency domain repetition scheme is configured, may be inefficient. The time domain repetition scheme and/or the frequency domain repetition scheme may not work, for example, if the TCI selection field or absence of the TCI selection field is used to indicate TCI state(s) to apply to (or use for) a PDSCH reception instead of a TCI field.

Examples described herein may provide solutions for improved communications. As described herein, a wireless device (and/or a base station) may determine a TBS for a first PDSCH transmission occasion associated with a first TCI state of two (or more) TCI states and may use/apply the same TBS for/to, for example, both the first PDSCH transmission occasion and a second PDSCH transmission occasion associated with a second TCI state of the two TCI states. A wireless device (or a base station) may determine a TBS for a first PDSCH transmission occasion associated with a first TCI state of two (or more) TCI states and may use/apply the same TBS for/to, for example, both the first PDSCH transmission occasion and a second PDSCH transmission occasion associated with a second TCI state of the two TCI states, for example, in unified TCI state framework (e.g., if/when *dl-OrJointTCI-StateList* is configured), for example, if/when a wireless device receives a DCI scheduling/activating a PDSCH reception with an antenna ports field indicating DM-RS port(s) within one CDM group. A wireless device (and/or a base station) may determine a TBS for a first PDSCH transmission occasion associated with a first TCI state of two (or more) TCI states and may use/apply the same TBS for/to, for example, both the first PDSCH transmission occasion and a second PDSCH transmission occasion associated with a second TCI state of the two TCI states, for example, if a value of a TCI selection field in the scheduling DCI indicates to use/apply two TCI states for/to the PDSCH reception, or a TCI selection field is absent in the scheduling DCI which indicates to use/apply two TCI states for/to the PDSCH reception.

A wireless device may receive a PT-RS (e.g., a single PT-RS) that is associated with a lowest indexed DM-RS port among the DM-RS port(s) assigned for the PDSCH reception. A wireless device may receive a PT-RS (e.g., a single PT-RS) that is associated with a lowest indexed DM-RS port among the DM-RS port(s) assigned for the PDSCH reception, for example, in unified TCI state framework (e.g., if/when *dl-OrJointTCI-StateList* is configured), for example, if/when a wireless device receives a DCI scheduling/activating a PDSCH reception with an antenna ports field indicating DM-RS port(s) within one CDM group. A wireless device may receive a PT-RS (e.g., a single PT-RS) that is associated with a lowest indexed DM-RS port among the DM-RS port(s) assigned for the PDSCH reception, for example, if a value of a TCI selection field in the scheduling DCI indicates to use/apply two TCI states for/to the PDSCH reception, or a TCI selection field is absent in the scheduling DCI which indicates to use/apply two TCI states for/to the PDSCH reception.

A wireless device may receive (e.g., from a base station or a network) one or more messages (e.g., RRC messages, RRC reconfiguration messages) comprising one or more configuration parameters. The one or more configuration parameters may comprise one or more MAC cell group configuration parameters (e.g., *MAC-CellGroup-Config*) of a cell group comprising a cell.

The one or more MAC cell group configuration parameters may comprise one or more cell discontinuous-transmission (DTX) configuration parameters (e.g., *celldtx-Config*) used to configure/indicate a cell DTX of the cell. The one or more MAC cell group configuration parameters may comprise one or more cell discontinuous-reception (DRX) configuration parameters (e.g., *celldrx-Config*) used to configure/indicate a cell DRX of the cell.

The one or more configuration parameters may comprise one or more serving cell configuration parameters (e.g., *ServingCellConfig*) of a cell. The one or more serving cell configuration parameters may comprise one or more cell DTX configuration parameters (e.g., *celldtx-Config*) used to configure/indicate a cell DTX of the cell. The one or more serving cell configuration parameters may comprise one or more cell DRX configuration parameters (e.g., *celldrx-Config*) used to configure/indicate a cell DRX of the cell.

The cell DTX may be activated implicitly. The cell DTX may be activated implicitly, for example, based on configuration by (or having been configured by, e.g., once configured by) the base station. The cell DTX may be activated implicitly, for example, based on sending (e.g., transmitting) the one or more cell DTX configuration parameters. The cell DTX may be activated implicitly, for example, by the wireless device. The cell DTX may be activated implicitly by the wireless device, for example, based on configuration by the base station. The cell DTX may be activated implicitly by the wireless device, for example, based on receiving the one or more cell DTX configuration parameters. The one or more cell DTX configuration parameters may indicate an on-duration timer (e.g., *celldtx-onDurationTimer*) for the cell DTX. The one or more cell DTX configuration parameters may indicate an offset for a cycle start of the cell DTX (e.g., *celldtx-CycleStartOffset*). The one or more cell DTX configuration parameters may indicate a slot offset (e.g., *celldtx-SlotOffset*) for the cell DTX. The one or more cell DTX configuration parameters may comprise a joint cell DTX-DRX configuration parameter (*e.g.,jointCellDTXDRXconfig*'). The wireless device may use the one or more cell DTX configuration parameters for a cell DRX, for example, if the joint cell DTX-DRX configuration parameter is set to true. The wireless device may use a cell DRX configuration with the same parameters as in the cell DTX configuration parameters (e.g., *CellDTX-Config*), for example, if the joint cell DTX-DRX configuration parameter is set to true. The cell DTX may be deactivated by the wireless device, for example, based on releasing the one or more cell DTX configuration parameters.

The cell DRX may be activated implicitly. The cell DRX may be activated implicitly, for example, based on configuration by (or having been configured by, e.g., once configured by) the base station. The cell DRX may be activated implicitly, for example, based on sending (e.g., transmitting) the one or more cell DRX configuration parameters. The cell DRX may be activated implicitly, for example, by the wireless device. The cell DRX may be activated implicitly by the wireless device, for example, based on configuration by the base station. The cell DRX may be activated implicitly by the wireless device, for example, based on receiving the one or more cell DRX configuration parameters. The one or more cell DRX configuration parameters may indicate an on-duration timer (e.g., *celldrx-onDurationTimer*) for the cell DRX. The one or more cell DRX configuration parameters may indicate an offset for a cycle start of the cell DRX (e.g., *celldrx-CycleStartOffset*). The one or more cell DRX configuration parameters may indicate a slot offset (e.g., *celldrx-SlotOffset*) for the cell DRX. The cell DRX may be deactivated by the wireless device, for example, based on releasing the one or more cell DRX configuration parameters.

An offset for a cycle start may be common between the cell DTX and the cell DRX, for example, if the one or more configuration parameters comprise both the one or more cell DTX configuration parameters and the one or more cell DRX configuration parameters. The offset for the cycle start of the cell DRX may be signaled in the one or more cell DTX configuration parameters. The offset for the cycle start of the cell DTX may indicate the offset for the cycle start of the cell DRX, for example, if the joint cell DTX-DRX configuration parameter is set to true. The offset for the cycle start of the cell DTX may be the offset for the cycle start of both the cell DTX and the cell DRX, for example, if the joint cell DTX-DRX configuration parameter is set to true.

An on-duration timer may be common between the cell DTX and the cell DRX, for example, if the one or more configuration parameters comprise both the one or more cell DTX configuration parameters and the one or more cell DRX configuration parameters. The on-duration timer of the cell DRX may be signaled in the one or more cell DTX configuration parameters. The on-duration timer of the cell DTX may indicate the on-duration timer of the cell DRX, for example, if the joint cell DTX-DRX configuration parameter is set to true. The on-duration timer of the cell DTX may be the on-duration timer of both the cell DTX and the cell DRX, for example, if the joint cell DTX-DRX configuration parameter is set to true.

A slot offset may be common between the cell DTX and the cell DRX, for example, if the one or more configuration parameters comprise both the one or more cell DTX configuration parameters and the one or more cell DRX configuration parameters. The slot offset of the cell DRX may be signaled in the one or more cell DTX configuration parameters. The slot offset of the cell DTX may indicate the slot offset of the cell DRX, for example, if the joint cell DTX-DRX configuration parameter is set to true. The slot offset of the cell DTX may be the slot offset of both the cell DTX and the cell DRX, for example, if the joint cell DTX-DRX configuration parameter is set to true.

A wireless device may be configured, by a base station (e.g., a gNB), with a cell DTX/DRX of a cell (e.g., by *CellDTX-Config, CellDRX-Config*), for example, to facilitate reducing downlink transmission/uplink reception activity time of the base station. The cell DTX/DRX of the cell may have a periodic cell DTX/DRX pattern (e.g., active and non-active periods). The periodic cell DTX/DRX pattern may be common for one or more wireless devices, that are configured with a cell DTX/DRX, in the cell. The periodic cell DTX pattern and the periodic cell DRX pattern may be configured and activated separately. The wireless device may not monitor PDCCH or semi-persistent scheduling (SPS) occasions, for example, if the cell DTX is configured and activated for the cell. The wireless device may not monitor PDCCH or SPS occasions, for example, during/in a non-active duration of the cell DTX, for example, unless there is a pending retransmission, or unless a random-access timer/window (e.g., *ra-ResponseWindow, ra-ContentionResolutionTimer*) is running, or unless a scheduling request (SR) is sent (e.g., transmitted) and is pending. The wireless device may not send (e.g., transmit) on/via configured grant (CG) resources or may not send (e.g., transmit) an SR during a non-active duration of the cell DRX, for example, if the cell DRX is configured and activated for the cell. A cell DTX/DRX may be applicable/usable (e.g., only applicable/usable) to/for wireless devices in an RRC connected (e.g., RRC_CONNECTED) state. The cell DTX/DRX may not impact at least the following: Random Access procedure, SSB transmission, paging, and/or system information broadcasting.

The cell DTX/DRX may be activated/deactivated by RRC signaling or layer 1 (L1) group common signaling (e.g., DCI). The one or more configuration parameters may comprise a parameter indicating whether activation/deactivation of the cell DTX/DRX is, for example, based on the RRC signaling or the L1 group common signaling. The base station and/or the wireless device may activate/deactivate the cell DTX/DRX, for example, based on the RRC signaling, for example, if the parameter is set to a first value (e.g., 0, 'RRC'). The wireless device may activate the cell DTX/DRX, for example, based on receiving the RRC signaling (e.g., *CellDTX-Config, CellDRX-Config*). The base station and/or the wireless device may activate/deactivate the cell DTX/DRX, for example, based on the L1 group common signaling, for example, if the parameter is set to a second value (e.g., 1, 'DCI', or 'L1'). The wireless device may activate the cell DTX/DRX, for example, based on receiving DCI (e.g., DCI format 2_9). The wireless device may not activate the cell DTX/DRX, for example, based on receiving the RRC signaling (e.g., *CellDTX-Config, CelDRX-Config*), for example, if the parameter is set to the second value. The wireless device may not activate the cell DTX/DRX until receiving the DCI (e.g., DCI format 2_9), for example, if the parameter is set to the second value.

The cell DTX/DRX may be characterized by active duration and/or cycle parameters. The wireless device may wait for and/or may monitor the active duration to receive PDCCHs or SPS occasions and/or send (e.g., transmit) SR or CG. The transmission/reception of PDCCH, SPS, SR and/or CG by the base station may not be impacted for the purpose of network energy saving, for example, in the active duration. The cycle may specify the periodic repetition of the active duration followed by a period of non-active duration. The active duration and cycle parameters may be common between the cell DTX and the cell DRX, for example, if both the cell DTX and the cell DRX are configured.

The network may ensure that there is no impact to the emergency call or public safety related service (e.g., the base station may release or deactivate the cell DTX/DRX), for example, based on the base station recognizing there is an emergency call or public safety related service (e.g., MPS or MCS). The base station may ensure that there is at least partial overlapping between an on-duration of a connected mode DRX of the wireless device and an active duration of a cell DTX/DRX (e.g., a periodicity of the connected mode DRX of the wireless device is a multiple of a periodicity of the cell DTX/DRX).

The wireless device may receive downlink data. The wireless device may receive a downlink reception regardless of the downlink reception overlapping (or being in) an active duration/time/period or a non-active duration/time/period of the cell DTX. The wireless device may receive the downlink reception regardless of the downlink reception overlapping (or being in) an active duration/time/period or a non-active duration/time/period of the cell DTX, for example, if a wireless device receives DCI scheduling a downlink reception (e.g., PDSCH, aperiodic CSI-RS), for example, during/in the cell DTX. The DCI may comprise/indicate a dynamic grant for the downlink reception. The wireless device may send (e.g., transmit) a HARQ-ACK information feedback. The wireless device may send (e.g., transmit) a HARQ-ACK information feedback of the downlink reception regardless of the transmission of the HARQ-ACK information overlapping (or being in) an active duration/time/period or a non-active duration/time/period of the cell DRX, for example, after the downlink reception.

The wireless device may send (e.g., transmit) an uplink transmission. The wireless device may send (e.g., transmit) the uplink transmission regardless of the uplink transmission overlapping (or being in) an active duration/time/period or a non-active duration/time/period of the cell DRX. The wireless device may send (e.g., transmit) the uplink transmission regardless of the uplink transmission overlapping (or being in) an active duration/time/period or a non-active duration/time/period of the cell DRX, for example, if the wireless device receives DCI scheduling the uplink transmission (e.g., PUSCH, PUCCH, aperiodic SRS), for example, during the cell DRX. The DCI may comprise/indicate a dynamic grant for the uplink transmission. The wireless device may receive a PDCCH reception (e.g., DCI, a response to/of the uplink transmission) from the base station regardless of the transmission of the PDCCH reception overlapping (or being in) an active duration/time/period or a non-active duration/time/period of the cell DTX, for example, after the uplink transmission. The wireless device may monitor PDCCH for DCI (or for a response to/of the uplink transmission) from the base station regardless of the transmission of the PDCCH with the DCI overlapping (or being in) an active duration/time/period or a non-active duration/time/period of the cell DTX, for example, after the uplink transmission.

A non-active period/time/duration of the cell DTX may comprise/include the time outside an active period/time/duration of the cell DTX. A non-active period/time/duration of the cell DRX may comprise/include the time outside an active period/time/duration of the cell DRX.

A wireless device may receive, from a base station, one or more messages (e.g., RRC message(s)). The one or more messages may configure/indicate a periodic cell DTX and/or a cell DRX pattern (e.g., an active period and a non-active period) for a cell DTX and/or a cell DRX of a cell (e.g., a serving cell, a non-serving cell, a candidate cell, a target cell).

The cell DTX (or a cell DTX functionality) may control monitoring activity of PDCCH and configured downlink assignments (e.g., SPS PDSCH) by the wireless device in an RRC connected (e.g., RRC_CONNECTED) mode. The wireless device may monitor PDCCH and configured downlink assignments via the cell using the cell DTX (or a cell DTX operation), for example, for the cell configured and activated with the cell DTX.

The wireless device may monitor PDCCH and configured downlink assignments using the cell DTX (or a cell DTX operation), for example, for all activated cells (e.g., activated serving cells) configured with a cell DTX. The wireless device may monitor PDCCH and configured downlink assignments using the cell DTX (or a cell DTX operation), for example, for a (e.g., each) activated cell (e.g., each activated serving cell) configured and activated with cell DTX.

The cell DRX (or a cell DRX functionality) may control transmission activity of scheduling request (SR) and configured uplink grant by the wireless device in an RRC connected (e.g., RRC_CONNECTED) mode. For the cell configured and activated with the cell DRX, the wireless device may send (e.g., transmit) scheduling request and configured uplink grant via the cell using the cell DRX (or a cell DRX operation).

The wireless device may send (e.g., transmit) scheduling request and configured uplink grant using the cell DRX (or a cell DRX operation), for example, for all activated cells (e.g., activated serving cells) configured with a cell DRX. The wireless device may send (e.g., transmit) scheduling request and configured uplink grant using the cell DRX (or a cell DRX operation), for example, for a (e.g., each) activated cell (e.g., each activated serving cell) configured and activated with cell DRX.

The one or more messages (e.g., the RRC message(s)) may control the cell DTX (or the cell DTX operation) by configuring/indicating/comprising one or more parameters in the one or more cell DTX configuration parameters (e.g., *CellDTX-Config*). The one or more parameters may comprise, for example, a cell DTX on-duration timer parameter (e.g., *celldtx-onDurationTimer*), a cell DTX start offset parameter (e.g., *celldtx-StartOffset*), a cell DTX slot offset parameter (e.g., *celldtx-SlotOffset*), and/or a cell DTX cycle parameter (e.g., *celldtx-Cycle*). The cell DTX on-duration timer parameter (e.g., *celldtx-onDurationTimer*) may indicate an active duration at the beginning of a cycle of the cell DTX (or a cell DTX cycle). The cell DTX start offset parameter (e.g., *celldtx-StartOffset*) may define the subframe where the cycle of the cell DTX (or the cell DTX cycle) starts. The cell DTX slot offset parameter (e.g., *celldtx-SlotOffset*) may indicate the delay before starting the on-duration timer of the cell DTX (e.g., *celldtx-onDurationTimer*). The cell DTX cycle parameter (e.g., *celldtx-Cycle*) may indicate the period of the cycle of the cell DTX (or a cell DTX cycle period).

The one or more messages (e.g., the RRC message(s)) may control the cell DRX (or the cell DRX operation) by configuring/indicating/comprising one or more parameters in the one or more cell DRX configuration parameters (e.g., *CellDRX-Config*). The one or more parameters may comprise, for example, a cell DRX on-duration timer parameter (e.g., *celldrx-onDurationTimer*), a cell DRX start offset parameter (e.g., *celldrx-StartOffset*), a cell DRX slot offset parameter (e.g., *celldrx-SlotOffset*), and/or a cell DRX cycle parameter (e.g., *celldrx-Cycle*). The cell DRX on-duration timer parameter (e.g., *celldrx-onDurationTimer*) may indicate an active duration at the beginning of a cycle of the cell DRX (or a cell DRX cycle). The cell DRX start offset parameter (e.g., *celldrx-StartOffset*) may define the subframe where the cycle of the cell DRX (or the cell DRX cycle) starts. The cell DRX slot offset parameter (e.g., *celldrx-SlotOffset*) may indicate the delay before starting the on-duration timer of the cell DRX (e.g., *celldrx-onDurationTimer*). The cell DRX cycle parameter (e.g., *celldrx-Cycle*) may indicate the period of the cycle of the cell DRX (or a cell DRX cycle period).

An active period/time/duration (or a cell DTX active period/time/duration) of the cell DTX may comprise/include the time, for example, if/when the one or more configuration parameters comprise one or more cell DTX configuration parameters (e.g., *CellDTX-Config*) indicating/configuring a cell DTX of a cell (e.g., a serving cell). An active period/time/duration (or a cell DTX active period/time/duration) of the cell DTX may comprise/include the time, for example, if/while a cell DTX on-duration timer parameter (e.g., *celldtx-onDurationTimer*) is running for the cell. An active period/time/duration (or a cell DTX active period/time/duration) of the cell DTX may comprise/include the time, for example, if/while a cell DTX deactivation indication (e.g., DCI format 2_9 or RRC signaling) has been received, by the wireless device, for the cell.

An active period/time/duration (or a cell DRX active period/time/duration) of the cell DRX may comprise/include the time, for example, if/when the one or more configuration parameters comprise one or more cell DRX configuration parameters (e.g., *CellDRX-Config*) indicating/configuring a cell DRX of a cell (e.g., a serving cell). An active period/time/duration (or a cell DRX active period/time/duration) of the cell DRX may comprise/include the time, for example, if/while a cell DRX on-duration timer parameter (e.g., *celldrx-onDurationTimer*) is running for the cell. An active period/time/duration (or a cell DRX active period/time/duration) of the cell DRX may comprise/include the time, for example, if/while a cell DRX deactivation indication (e.g., DCI format 2_9 or RRC signaling) has been received, by the wireless device, for the cell.

The wireless device may start the on-duration timer (e.g., *celldtx-onDurationTimer*) for the cell. The wireless device may start the on-duration timer (e.g., *celldtx-onDurationTimer*) for the cell, for example, after the slot offset (e.g., *celldtx-SlotOffset*) from the beginning of a subframe, for example, based on receiving a cell DTX activation indication (e.g.,

by DCI format 2_9 or by RRC signaling) for the cell DTX of the cell. The wireless device may start the on-duration timer (e.g., *celldtx-onDurationTimer*) for the cell, for example, after the slot offset (e.g., *celldtx-SlotOffset*) from the beginning of a subframe, for example, based on receiving an indication (e.g., by DCI format 2_9 or by RRC signaling) indicating activation of the cell DTX of the cell.

The wireless device may stop the on-duration timer (e.g., *celldtx-onDurationTimer*). The wireless device may stop the on-duration timer (e.g., *celldtx-onDurationTimer*), if running, for example, based on receiving a cell DTX deactivation indication (e.g., by DCI format 2_9 or by RRC signaling) for the cell DTX of the cell. The wireless device may stop the on-duration timer (e.g., *celldtx-onDurationTimer*), if running, for example, based on receiving an indication (e.g., by DCI format 2_9 or by RRC signaling) indicating deactivation of the cell DTX of the cell.

The wireless device may start the on-duration timer (e.g., *celldrx-onDurationTimer)* for the cell. The wireless device may start the on-duration timer (e.g., *celldrx-onDurationTimer*) for the cell, for example, after the slot offset (e.g., *celldrx-SlotOffset)* from the beginning of a subframe, for example, based on receiving a cell DRX activation indication (e.g., by DCI format 2_9 or by RRC signaling) for the cell DRX of the cell. The wireless device may start the on-duration timer (e.g., *celldrx-onDurationTimer*) for the cell, for example, after the slot offset (e.g., *celldrx-SlotOffset)* from the beginning of a subframe, for example, based on receiving an indication (e.g., by DCI format 2_9 or by RRC signaling) indicating activation of the cell DRX of the cell.

The wireless device may stop the on-duration timer (e.g., *celldrx-onDurationTimer*). The wireless device may stop the on-duration timer (e.g., *celldrx-onDurationTimer*), if running, for example, based on receiving a cell DRX deactivation indication (e.g., by DCI format 2_9 or by RRC signaling) for the cell DRX of the cell. The wireless device may stop the on-duration timer (e.g., *celldrx-onDurationTimer*), if running, for example, based on receiving an indication (e.g., by DCI format 2_9 or by RRC signaling) indicating deactivation of the cell DRX of the cell.

A MAC layer/entity of the wireless device may not instruct a physical layer/entity of the wireless device to receive a transport block on a DL-SCH. A MAC layer/entity of the wireless device may not instruct a physical layer/entity of the wireless device to receive a transport block on a DL-SCH, for example, according to (or for) a configured downlink assignment (e.g., SPS), for example, if/when the cell is not in an active duration/time/period of the cell DTX. A MAC layer/entity of the wireless device may not instruct a physical layer/entity of the wireless device to receive a transport block on a DL-SCH, for example, according to (or for) a configured downlink assignment (e.g., SPS), for example, if the cell is not in the cell DTX active period. A MAC layer/entity of the wireless device may not instruct a physical layer/entity of the wireless device to receive a transport block on a DL-SCH, for example, according to (or for) a configured downlink assignment (e.g., SPS), for example, if the cell is in a non-active duration/time/period of the cell DTX.

A MAC layer/entity of the wireless device may instruct a physical layer/entity of the wireless device to receive a transport block on a DL-SCH. A MAC layer/entity of the wireless device may instruct a physical layer/entity of the wireless device to receive a transport block on a DL-SCH, for example, according to (or for) a configured downlink assignment (e.g., SPS), for example, if/when the cell is in an active duration/time/period of the cell DTX. A MAC layer/entity of the wireless device may instruct a physical layer/entity of the wireless device to receive a transport block on a DL-SCH, for example, according to (or for) a configured downlink assignment (e.g., SPS), for example, if the cell is in the cell DTX active period. A MAC layer/entity of the wireless device may instruct a physical layer/entity of the wireless device to receive a transport block on a DL-SCH, for example, according to (or for) a configured downlink assignment (e.g., SPS), for example, if the cell is not in a non-active duration/time/period of the cell DTX.

A MAC layer/entity of the wireless device may not indicate a presence of a configured downlink assignment and/or may not deliver a stored HARQ information to a HARQ entity. A MAC layer/entity of the wireless device may not indicate a presence of a configured downlink assignment and/or may not deliver a stored HARQ information to a HARQ entity, for example, if/when the cell is not in an active duration/time/period of the cell DTX. A MAC layer/entity of the wireless device may not indicate a presence of a configured downlink assignment and/or may not deliver a stored HARQ information to a HARQ entity, for example, if the cell is not in the cell DTX active period. A MAC layer/entity of the wireless device may not indicate a presence of a configured downlink assignment and/or may not deliver a stored HARQ information to a HARQ entity, for example, if the cell is in a non-active duration/time/period of the cell DTX.

A MAC layer/entity of the wireless device may indicate a presence of a configured downlink assignment and/or may deliver a stored HARQ information to a HARQ entity. A MAC layer/entity of the wireless device may indicate a presence of a configured downlink assignment and/or may deliver a stored HARQ information to a HARQ entity, for example, if/when the cell is in an active duration/time/period of the cell DTX. A MAC layer/entity of the wireless device may indicate a presence of a configured downlink assignment and/or may deliver a stored HARQ information to a HARQ entity, for example, if the cell is in the cell DTX active period. A MAC layer/entity of the wireless device may indicate a presence of a configured downlink assignment and/or may deliver a stored HARQ information to a HARQ entity, for example, if the cell is not in a non-active duration/time/period of the cell DTX.

The wireless device may not monitor PDCCH for an RNTI. The wireless device may not monitor PDCCH for an RNTI, for example, if/when the cell is not in an active duration/time/period of the cell DTX. The wireless device may not monitor PDCCH for an RNTI, for example, if the cell is not in the cell DTX active period. The wireless device may not monitor PDCCH for an RNTI, for example, if the cell is not in the cell DTX active period. The wireless device may not monitor PDCCH for an RNTI, for example, if the cell is in a non-active duration/time/period of the cell DTX. The wireless device may not monitor PDCCH for DCI scrambled with the RNTI.

The RNTI may be/comprise various RNTIs. The RNTI may be/comprise, for example, at least one of: C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI and SL Semi-Persistent Scheduling V-RNTI.

The wireless device may monitor PDCCH for the RNTI. The wireless device may monitor PDCCH for the RNTI, for example, if a DRX retransmission timer (e.g., *drx-RetransmissionTimerDL, drx-RetransmissionTimerUL,* or *drx-RetransmissionTimerSL*) is running on at least one cell in the DRX group, for example, if the cell in a DRX group is not in an active duration/time/period of the cell DTX. The wireless device may monitor PDCCH for the RNTI. The wireless device may monitor PDCCH for the RNTI, for example, if a DRX retransmission timer (e.g., *drx-RetransmissionTimerDL, drx-RetransmissionTimerUL,* or *drx-RetransmissionTimerSL*) is running on at least one cell in the DRX group, for example, if the cell is not in the cell DTX active period. The wireless device may monitor PDCCH for the RNTI. The wireless device may monitor PDCCH for the RNTI, for example, if a DRX retransmission timer (e.g., *drx-RetransmissionTimerDL, drx-RetransmissionTimerUL,* or *drx-RetransmissionTimerSL*) is running on at least one cell in the DRX group, for example, if the cell is in a non-active duration/time/period of the cell DTX.

The wireless device may not monitor PDCCH for the RNTI. The wireless device may not monitor PDCCH for the RNTI, for example, if a DRX retransmission timer (e.g., *drx-RetransmissionTimerDL, drx-RetransmissionTimerUL,* or *drx-RetransmissionTimerSL*) is not running on any cell in the DRX group, for example, if the cell in a DRX group is not in an active duration/time/period of the cell DTX. The wireless device may not monitor PDCCH for the RNTI, for example, if a DRX retransmission timer (e.g., *drx-RetransmissionTimerDL, drx-RetransmissionTimerUL,* or *drx-RetransmissionTimerSL*) is not running on any cell in the DRX group, for example, if the cell is not in the cell DTX active period. The wireless device may not monitor PDCCH for the RNTI, for example, if a DRX retransmission timer (e.g., *drx-RetransmissionTimerDL, drx-Retransmission TimerUL,* or *drx-Retransmission TimerSL*) is not running on any cell in the DRX group, for example, if the cell is in a non-active duration/time/period of the cell DTX.

The wireless device may monitor PDCCH for the RNTI. The wireless device may monitor PDCCH for the RNTI, for example, if a random-access timer/window (e.g., *ra-ContentionResolutionTimer,* or *ra-Response Window,* or *msgB-ResponseWindow*) is running, for example, if the cell is not in an active duration/time/period of the cell DTX (or if the cell is not in the cell DTX active period or if the cell is in a non-active duration/time/period of the cell DTX).

The wireless device may not monitor PDCCH for the RNTI. The wireless device may not monitor PDCCH for the RNTI, for example, if a random-access timer/window (e.g., *ra-ContentionResolutionTimer,* and *ra-Response Window,* and *msgB-ResponseWindow*) is not running, for example, if the cell is not in an active duration/time/period of the cell DTX (or if the cell is not in the cell DTX active period or if the cell is in a non-active duration/time/period of the cell DTX).

The wireless device may monitor PDCCH for the RNTI, for example, based on sending (e.g., transmitting) a scheduling request (e.g., on PUCCH) and/or the scheduling request being pending, for example, if the cell is not in an active duration/time/period of the cell DTX (or if the cell is not in the cell DTX active period or if the cell is in a non-active duration/time/period of the cell DTX). The wireless device may monitor PDCCH for the RNTI, for example, if a scheduling request is sent (e.g., on PUCCH) by the wireless device and/or if the scheduling request is pending, for example, if the cell is not in an active duration/time/period of the cell DTX (or if the cell is not in the cell DTX active period or if the cell is in a non-active duration/time/period of the cell DTX).

The wireless device may not monitor PDCCH for the RNTI, for example, based on not sending (e.g., transmitting) a scheduling request (e.g., on PUCCH) and/or the scheduling request not being pending, for example, if the cell is not in an active duration/time/period of the cell DTX (or if the cell is not in the cell DTX active period or if the cell is in a non-active duration/time/period of the cell DTX). The wireless device may not monitor PDCCH for the RNTI, for example, if a scheduling request is not sent (e.g., transmitted) (e.g., on PUCCH) by the wireless device and/or if the scheduling request is not pending, for example, if the cell is not in an active duration/time/period of the cell DTX (or if the cell is not in the cell DTX active period or if the cell is in a non-active duration/time/period of the cell DTX).

The wireless device may monitor PDCCH for the RNTI, for example, based on not receiving, for example, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

The wireless device may not monitor PDCCH for the RNTI, for example, based on receiving, for example, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

A MAC layer/entity of the wireless device may not instruct a physical layer/entity of the wireless device to send (e.g., transmit)/signal a scheduling request on a PUCCH resource. A MAC layer/entity of the wireless device may not instruct a physical layer/entity of the wireless device to send (e.g., transmit)/signal a scheduling request on a PUCCH resource, for example, if the cell is not in an active duration/time/period of the cell DRX (or if the cell is not in the cell DRX active period or if the cell is in a non-active duration/time/period of the cell DRX).

A MAC layer/entity of the wireless device may instruct a physical layer/entity of the wireless device to send (e.g., transmit)/signal a scheduling request on a PUCCH resource A MAC layer/entity of the wireless device may instruct a physical layer/entity of the wireless device to send (e.g., transmit)/signal a scheduling request on a PUCCH resource, for example, if the cell is in an active duration/time/period of the cell DRX (or if the cell is in the cell DRX active period or if the cell is not in a non-active duration/time/period of the cell DRX).

The wireless device may not increment an SR counter for a pending SR. The wireless device may not increment an SR counter for a pending SR, for example, if the cell is not in an active duration/time/period of the cell DRX (or if the cell is not in the cell DRX active period or if the cell is in a non-active duration/time/period of the cell DRX).

The wireless device may increment an SR counter for a pending SR. The wireless device may increment an SR counter for a pending SR, for example, based on sending (e.g., transmitting) an SR, for example, if the cell is in an active duration/time/period of the cell DRX (or if the cell is in the cell DRX active period or if the cell is not in a non-active duration/time/period of the cell DRX).

The wireless device may not start a scheduling request prohibit timer (e.g., *sr-ProhibitTimer*) for a pending SR. The wireless device may not start a scheduling request prohibit timer (e.g., *sr-ProhibitTimer*) for a pending SR, for example, if the cell is not in an active duration/time/period of the cell DRX (or if the cell is not in the cell DRX active period or if the cell is in a non-active duration/time/period of the cell DRX).

The wireless device may start a scheduling request prohibit timer (e.g., *sr-ProhibitTimer)* for a pending SR. The wireless device may start a scheduling request prohibit timer (e.g., *sr-ProhibitTimer)* for a pending SR, for example, based on sending (e.g., transmitting) an SR, for example, if the cell is in an active duration/time/period of the cell DRX (or if the cell is in the cell DRX active period or if the cell is not in a non-active duration/time/period of the cell DRX).

A MAC layer/entity of the wireless device may not deliver any configured uplink grant and an associated HARQ information to a HARQ entity. A MAC layer/entity of the wireless device may not deliver any configured uplink grant and an associated HARQ information to a HARQ entity, for example, if the cell is not in an active duration/time/period of the cell DRX (or if the cell is not in the cell DRX active period or if the cell is in a non-active duration/time/period of the cell DRX).

A MAC layer/entity of the wireless device may deliver a configured uplink grant and an associated HARQ information to a HARQ entity. A MAC layer/entity of the wireless device may deliver a configured uplink grant and an associated HARQ information to a HARQ entity, for example, if the cell is in an active duration/time/period of the cell DRX (or if the cell is in the cell DRX active period or if the cell is not in a non-active duration/time/period of the cell DRX).

A MAC layer/entity of the wireless device may not obtain, from a multiplexing and assembly entity, a MAC PDU to send (e.g., transmit) for a configured uplink grant. A MAC layer/entity of the wireless device may not obtain, from a multiplexing and assembly entity, a MAC PDU to send (e.g., transmit) for a configured uplink grant, for example, if the cell is not in an active duration/time/period of the cell DRX (or if the cell is not in the cell DRX active period or if the cell is in a non-active duration/time/period of the cell DRX).

A MAC layer of the wireless device may obtain a MAC PDU to send (e.g., transmit) for a configured uplink grant. A MAC layer/entity of the wireless device may obtain, from a multiplexing and assembly entity, a MAC PDU to send (e.g., transmit) for a configured uplink grant, for example, if the cell is in an active duration/time/period of the cell DRX (or if the cell is in the cell DRX active period or if the cell is not in a non-active duration/time/period of the cell DRX).

A MAC layer/entity of the wireless device may not instruct a HARQ process associated with a configured uplink grant to trigger a new transmission or a retransmission. A MAC layer/entity of the wireless device may not instruct a HARQ process associated with a configured uplink grant to trigger a new transmission or a retransmission, for example, if the cell is not in an active duration/time/period of the cell DRX (or if the cell is not in the cell DRX active period or if the cell is in a non-active duration/time/period of the cell DRX).

A MAC layer/entity of the wireless device may instruct a HARQ process associated with a configured uplink grant to trigger a new transmission or a retransmission. A MAC layer/entity of the wireless device may instruct a HARQ process associated with a configured uplink grant to trigger a new transmission or a retransmission, for example, if the cell is in an active duration/time/period of the cell DRX (or if the cell is in the cell DRX active period or if the cell is not in a non-active duration/time/period of the cell DRX).

The wireless device may not start or restart a configured grant timer (e.g., *configuredGrantTimer)*. The wireless device may not start or restart a configured grant timer (e.g., *configuredGrantTimer)*, if configured, for example, if the cell is not in an active duration/time/period of the cell DRX (or if the cell is not in the cell DRX active period or if the cell is in a non-active duration/time/period of the cell DRX).

The wireless device may start or restart a configured grant timer (e.g., *configuredGrantTimer*). The wireless device may start or restart a configured grant timer (e.g., *configuredGrantTimer*), if configured, for example, if the cell is in an active duration/time/period of the cell DRX (or if the cell is in the cell DRX active period or if the cell is not in a non-active duration/time/period of the cell DRX).

The wireless device may not start or restart a configured grant retransmission timer (e.g., *cg-Retransmission-Timer*). The wireless device may not start or restart a configured grant retransmission timer (e.g., *cg-RetransmissionTimer*), if configured, for example, if the cell is not in an active duration/time/period of the cell DRX (or if the cell is not in the cell DRX active period or if the cell is in a non-active duration/time/period of the cell DRX).

The wireless device may start or restart a configured grant retransmission timer (e.g., *cg-RetransmissionTimer*). The wireless device may start or restart a configured grant retransmission timer (e.g., *cg-RetransmissionTimer*), if configured, for example, if the cell is in an active duration/time/period of the cell DRX (or if the cell is in the cell DRX active period or if the cell is not in a non-active duration/time/period of the cell DRX).

A wireless device configured and activated with a cell DTX may not expect to receive a reference signal configured in a report configuration associated with a higher layer parameter. The wireless device configured (e.g., *celldtx-Config*) and activated with the cell DTX may not expect to receive a periodic CSI-RS and/or a semi-persistent CSI-RS configured in a CSI report configuration (e.g., in *CSI-ReportConfig*) associated with a higher layer parameter (e.g., *reportQuantity*) comprising at least rank indicator (RI), for example, during/in a non-active period/time/duration of the cell DTX.

A base station may not send (e.g., transmit), to a wireless device configured and activated with a cell DTX, a reference signal configured in a report configuration associated with a higher layer parameter. The base station may not send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a higher layer parameter (e.g., *reportQuantity*) comprising at least rank indicator (RI), for example, during/in a non-active period/time/duration of the cell DTX.

A wireless device configured and activated with a cell DTX may expect to receive a reference signal configured in a report configuration associated with a higher layer parameter. The wireless device configured (e.g., *celldtx-Config*) and activated with the cell DTX may expect to receive a periodic CSI-RS and/or a semi-persistent CSI-RS configured in a CSI report configuration (e.g., in *CSI-ReportConfig*) associated with a higher layer parameter *reportQuantity* comprising at least rank indicator (RI), for example, in an active period/time/duration of the cell DTX.

A base station may send (e.g., transmit), to a wireless device configured and activated with a cell DTX, a reference signal configured in a report configuration associated with a higher layer parameter. The base station may send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a higher layer parameter *reportQuantity* comprising at least rank indicator (RI), for example, during/in an active period/-time/duration of the cell DTX.

The wireless device configured (e.g., *celldrx-Config*) and activated with the cell DRX may not expect to send (e.g., transmit) an SRS (e.g., a periodic SRS and/or a semi-persistent SRS) for channel acquisition. The wireless device configured (e.g., *celldrx-Config*) and activated with the cell DRX may not expect to send (e.g., transmit) an SRS (e.g., a periodic SRS and/or a semi-persistent SRS) for channel acquisition, for example, during/in a non-active period/time/duration of the cell DRX. The wireless device configured (e.g., *celldrx-Config*) and activated with the cell DRX may send (e.g., transmit) an SRS for positioning. The wireless device configured (e.g., *celldrx-Config*) and activated with the cell DRX may send (e.g., transmit) an SRS for positioning, for example, during/in a non-active period/time/duration of the cell DRX. SRS transmission for positioning may not be impacted by the cell DRX (or the cell DRX operation).

The base station may not receive, from the wireless device configured (e.g., *celldrx-Config*) and activated with the cell DRX, an SRS (e.g., a periodic SRS or a semi-persistent SRS) for channel acquisition. The base station may not receive, from the wireless device configured (e.g., *celldrx-Config*) and activated with the cell DRX, an SRS (e.g., a periodic SRS or a semi-persistent SRS) for channel acquisition, for example, during/in a non-active period/time/duration of the cell DRX. The base station may receive, from the wireless device configured (e.g., *celldrx-Config*) and activated with the cell DRX, an SRS for positioning. The base station may receive, from the wireless device configured (e.g., *celldrx-Config*) and activated with the cell DRX, an SRS for positioning, for example, during/in a non-active period/time/duration of the cell DRX. SRS transmission for positioning may not be impacted by the cell DRX (or the cell DRX operation).

The wireless device configured (e.g., *celldrx-Config*) and activated with the cell DRX may expect to send (e.g., transmit) an SRS (e.g., a periodic SRS and/or a semi-persistent SRS) for channel acquisition. The wireless device configured (e.g., *celldrx-Config*) and activated with the cell DRX may expect to send (e.g., transmit) an SRS (e.g., a periodic SRS and/or a semi-persistent SRS) for channel acquisition, for example, during/in an active period/time/duration of the cell DRX.

The base station may receive, from the wireless device configured (e.g., *celldrx-Config*) and activated with the cell DRX, an SRS (e.g., a periodic SRS or a semi-persistent SRS) for channel acquisition. The base station may receive, from the wireless device configured (e.g., *celldrx-Config*) and activated with the cell DRX, an SRS (e.g., a periodic SRS or a semi-persistent SRS) for channel acquisition, for example, during/in an active period/time/duration of the cell DRX.

A wireless device configured for operation on a cell according to one or both of a cell DTX operation (e.g., by *cellDTXConfig*) and a cell DRX operation (e.g., by *cellDRXConfig*) for the cell may be additionally provided (e.g., by *dci-Format2-9*) a search space set to monitor PDCCH for detection of a DCI format (e.g., DCI format 2_9) according to a common search space, and a location in the DCI format (e.g., DCI format 2_9) (e.g., by *position-inDCI-NES* of a cell DTX/DRX indicator field for the cell). The one or more configuration parameters may comprise a parameter (e.g., *dci-Format2-9*) indicating a search space set (e.g., a common search space set) to monitor PDCCH for detection of a DCI format (e.g., a DCI format 2_9). The one or more configuration parameters may comprise a location parameter (e.g., *position-inDCI-NES*) indicating a location of a cell DTX/DRX indicator field for/of the cell in the DCI format (e.g., the DCI format 2_9).

The cell DTX/DRX indicator field may comprise/include two (or other quantity of) bits, for example, if the wireless device is configured with both the cell DTX operation (e.g., by *cellDTXConfig*) and the cell DRX operation (e.g., by *cellDRXConfig*) for the cell. The first bit of the two bits may indicate the cell DTX operation and the second bit of the two bits may indicate the cell DRX operation.

The cell DTX/DRX indicator field may comprise/include one (or other quantity of) bit indicating one of the cell DTX operation and the cell DRX operation for the cell. The cell DTX/DRX indicator field may comprise/include one bit indicating one of the cell DTX operation and the cell DRX operation, respectively, for the cell, for example, if the wireless device is configured with only one of the cell DTX operation (e.g., by *cellDTXConfig*) and the cell DRX operation (e.g., by *cellDRXConfig*) for the cell.

A first value (e.g., '0' or any other value) for a bit of the cell DTX/DRX indicator field may indicate deactivation of the cell DTX and/or of the cell DRX. A second value (e.g., '1' or any other value) for a bit of the cell DTX/DRX indicator field may indicate activation of the cell DTX and/or of the cell DRX.

The cell DTX/DRX indicator field indication for activation or deactivation of the cell DRX may be used for both the UL carrier and the SUL carrier. The cell DTX/DRX indicator field indication for activation or deactivation of the cell DRX may be used for both the UL carrier and the SUL carrier, for example, if the cell is configured with an SUL carrier (in addition to an UL carrier (e.g., NUL)).

A wireless device may not expect to monitor PDCCH for detection of a DCI format (e.g., the DCI format 2_9) on more than one cell (e.g., more than one serving cells). The wireless device may operate on a second cell (e.g., a second serving cell) according to an indicated cell DTX operation or an indicated cell DRX operation starting from a slot on an active downlink BWP or on an active uplink BWP of the second cell, respectively, for example, if a wireless device receives, in slot *m* on an active downlink BWP of a first cell (e.g., a first serving cell), a PDCCH providing/with a DCI format 2_9 that indicates a change in activation or deactivation of a current cell DTX operation or a current cell DRX operation for the second cell. The slot is not, for example, before the beginning of the slot *m+d* on the active downlink BWP of the first cell where d is a number of slots determined, for example, based on a subcarrier spacing (SCS) of the active downlink BWP of the first cell. The number of slots may be equal to 3 (or any other value), for example, if the SCS of the active downlink BWP is 15kHz. The number of slots may be equal to 6 (or any other value), for example, if the SCS of the active downlink BWP is 30kHz.

The wireless device may not receive, on/via the cell, PDCCH candidates for search space sets associated with detection of a DCI format, and/or CSI-RS. The wireless device may not receive, on/via the cell, PDCCH candidates for search space sets associated with detection of a DCI format (e.g., DCI format 2_0, DCI format 2_1, DCI format 2_2, DCI format 2_3, DCI format 2_4, and DCI format 2_5, DCI format 1_0, DCI format 1_1, DCI format 1_2, DCI format 1_3, DCI format 0_0, DCI format 0_1, DCI format 0_2, DCI format 0_3), for example, outside of an active time/period/duration (e.g., a DTX active time/period/duration) during/of the cell DTX of the cell. The wireless device may not receive CSI-RS in resources provided by a CSI report configuration (e.g., *CSI-ReportConfig*) with a higher layer parameter (e.g., *report-Quantity*) that includes rank indication, for example, outside of an active time/period/duration (e.g., a DTX active time/period/duration) during/of the cell DTX of the cell.

The wireless device may not send (e.g., transmit), on/via the cell, periodic or semi-persistent PUCCH or PUSCH (e.g., CSI report, configured uplink grant), and/or periodic or semi-persistent SRS. The wireless device may not send (e.g., transmit), on/via the cell, periodic or semi-persistent PUCCH or PUSCH (e.g., CSI report, configured uplink grant), for example, outside of an active time/period/duration (e.g., a DRX active time/period/duration) during/of the cell DRX of the cell. The wireless device may not send (e.g., transmit), on/via the cell, periodic or semi-persistent SRS except for SRS in resources provided by SRS positioning resource set (e.g., *SRS-posResourceSet*), for example, outside of an active time/period/duration (e.g., a DRX active time/period/duration) during/of the cell DRX of the cell.

A cell DTX may be (or may be interchangeably used with) a cell DTX operation. A cell DRX may be (or may be interchangeably used with) a cell DRX operation.

A DCI format (e.g., DCI format 2_9) may be used for activating or deactivating a cell DTX/DRX (or a cell DTX/DRX configuration or a cell DTX/DRX operation) of one or multiple cells (e.g., one or multiple serving cells) for one or more wireless devices. One or more block numbers may be sent (e.g., transmitted) by means of the DCI format 2_9 with CRC scrambled by a network energy saving RNTI (NES-RNTI). The one or more block numbers may comprise, for example, block number 1, block number 2,... , block number N. A starting position of a block may be determined, by the wireless device and/or the base station, by a position parameter (e.g., *positionInDCI=cellDTRX*). The one or more configuration parameters may comprise the position parameter.

One or more blocks may be configured for the wireless device. One or more blocks may be configured for the wireless device, for example, if the wireless device is configured with a DTX/DRX parameter (e.g., NES-RNTI, *cellDTRX-DCI-config*). One or more blocks may be configured for the wireless device, for example, by higher layers, with a field defined for each block. The field may comprise cell DTX/DRX indication. The cell DTX/DRX indication may be two (2) bits (or other quantity of bits), for example, if cell DTX operation (e.g., *cellDTXConfig*) and cell DRX operation (e.g., *cellDRXConfig*) are both configured for a cell, with the most-significant bit (MSB) corresponding to a cell DTX (or a cell DTX configuration) of the cell and the least significant bit (LSB) corresponding to a cell DRX (or a cell DRX configuration) of the cell. The cell DTX/DRX indication may be one (1) bit (or other quantity of bits), for example, if either cell DTX operation (e.g., *cellDTXConfig*) or cell DRX operation (e.g., *cellDRXConfig*) is configured for a cell. The one or more configuration parameters may comprise the DTX/DRX parameter.

A size of a DCI format (e.g., the DCI format 2_9) may be indicated by a higher layer parameter (e.g., *sizeDCI*-2-9). The one or more configuration parameters may comprise the higher layer parameter *sizeDCI-2-9*.

A number of information bits in a DCI format (e.g., the DCI format 2_9) may be equal to or less than a payload size of the DCI format (e.g., DCI format 2_9). The remaining bits may be reserved, for example, if the number/quantity of information bits in the DCI format (e.g., DCI format 2_9) is less than a size of the DCI format (e.g., DCI format 2_9).

A wireless device may receive (e.g., from a base station) one or more messages (e.g., RRC messages, RRC reconfiguration messages) comprising one or more configuration parameters of a cell. The one or more configuration parameters may indicate, for a downlink BWP of the cell, at least two (e.g., 2) search space sets (e.g., provided/indicated by a higher layer parameter *SearchSpace*). The at least two (e.g., 2) search space sets may comprise a first search space set and a second search space set.

The one or more configuration parameters may comprise a search space linking index/identifier (e.g., provided/indicated by a higher layer parameter *SearchSpaceLinkingId*) of the first search space set. The one or more configuration parameters may indicate, for the first search space set, the search space linking index/identifier.

The one or more configuration parameters may comprise a search space linking index/identifier (e.g., provided/indicated by a higher layer parameter *SearchSpaceLinkingId*) of the second search space set. The one or more configuration parameters may indicate, for the second search space set, the search space linking index/identifier.

The wireless may determine/assume that the first search space set and the second search space set are linked for PDCCH repetition. The wireless may determine/assume that the first search space set and the second search space set are linked for PDCCH repetition, for example, based on the search space linking index/identifier of the first search space set and the search space linking index/identifier of the second search space set being the same/equal. The wireless device does not expect a third search space set (or a third monitored search space set) to be linked, for PDCCH repetition, with either the first search space set or the second search space set, for example, if the wireless device monitors the first search space set and the second search space set that are linked for PDCCH repetition.

The first search space set and the second search space set that are linked for PDCCH repetition may have the same search space set type (e.g., indicated/provided by a higher layer parameter *searchSpaceType*). Both the first search space set and the second search space set may be user-specific search space (USS) set. Both the first search space set and the second search space set may be common search space (CSS) set.

The wireless device may monitor, via/in the at least two (linked) search space sets (e.g., the first search space set and the second search space set), the same DCI format. For example, the wireless device may monitor, via/in each of the at least two (linked) search space sets, DCI format 1_1. For example, the wireless device may monitor, via/in each of the at least two (linked) search space sets, DCI format 0_0.

The one or more configuration parameters may indicate periodicity, offset, and/or duration, for example, for the at least two (linked) search space sets. For example, the one or more configuration parameters may indicate, for the at least two (linked) search space sets, the same periodicity and offset (e.g., provided/indicated by a higher layer parameter *monitoringSlotPeriodicityAndOffset*), and the same duration (e.g., provided/indicated by a higher layer parameter *duration*). The first search space set and the second search space set that are linked for PDCCH repetition may have the same number/quantity of monitoring occasions within a time slot. The first search space set and the second search space set may have $N$ (e.g., N = 1, 2, 3, 4, ... ) monitoring occasions within the time slot. *n*-th monitoring occasion of the first search space set may be linked to n-th monitoring occasion of the second search space set, where n = 1, ..., N.

A search space set indicated by a higher layer parameter may not be linked to/with another search space set for PDCCH repetition. For example, a search space set indicated by a higher layer parameter: search space set 0, *searchSpaceSIB1, searchSpaceOtherSystemInformation, pagingSearchSpace, ra-SearchSpace, searchSpaceMCCH, searchSpaceMTCH, peiSearchSpace, sdt-SearchSpace* or *recoverySeαrchSpαceI* may not be linked to/with another search space set for PDCCH repetition.

PDCCH candidates (e.g., two or more PDCCH candidates) may be linked, for example, if (e.g., only if) search space sets with search space IDs in a scheduling cell (e.g., a scheduling serving cell) are linked for PDCCH repetition and search space sets with the (same) search space IDs in a scheduled cell (e.g., a scheduled serving cell) are linked for PDCCH repetition. For example, two PDCCH candidates (with the same aggregation level and candidate index associated with the scheduled cell) may be linked, for example, if (e.g., only if) two search space sets with search space IDs (e.g., *searchSpaceId*) in the scheduling cell are linked for PDCCH repetition and two search space sets, in the scheduled cell, with the (same) search space IDs are also linked for PDCCH repetition, for example, if the scheduled cell is configured, by the one or more configuration parameters, to be cross-carrier scheduled by the scheduling cell.

A higher layer parameter may not be used for a search space configured for monitoring DCI format 3-0 and/or 3-1. For example, a higher layer parameter *SearchSpaceLinkingId* may not be used for (or applicable to) a search space configured/indicated, by the one or more configuration parameters, (e.g., with *dci-FormatsSL*) for monitoring DCI format 3-0 and/or DCI format 3-1. The one or more configuration parameters may indicate, for the first search space set, a first coreset (e.g., by a higher layer parameter *controlResourceSetId*). The first search space set may be associated with the first coreset. The one or more configuration parameters may indicate, for the second search space set, a second coreset (e.g., by a higher layer parameter *controlResourceSetId*). The second search space set may be associated with the second coreset. The first coreset and the second coreset may be, for example, different.

A search space set (e.g., indicated/configured/provided by a higher layer parameter *SearchSpace*) may define/indicate how/where to search, by the wireless device, for PDCCH candidates. A (e.g., each) search space set may be associated with one coreset (e.g., indicated/configured/provided by a higher layer parameter *ControlResource-Set*).

A wireless device may receive at least two (e.g., 2) PDCCH transmissions, for example, in a PDCCH repetition, one from each TRP, carrying/with the same DCI. The wireless device may receive the at least two PDCCH transmissions carrying/with the same DCI from at least two linked search space sets (e.g., by a higher layer parameter *SearchSpaceLinkingId*) each associated with a different coreset. The wireless device may receive, from/via the first search space set associated with the first coreset, a first PDCCH transmission, of the at least two PDCCH transmissions, carrying/with DCI. The wireless device may receive the first PDCCH transmission from a first TRP. The wireless device may receive, from/via the second search space set associated with the second coreset, a second PDCCH transmission, of the two PDCCH transmissions, carrying/with the (same) DCI. The wireless device may receive the first PDCCH transmission from a second TRP.

The PDCCH repetition may be operated by using at least two search space sets (or at least two search spaces) that are explicitly linked by an RRC configuration (e.g., provided by a higher layer parameter *SearchSpaceLinkingId*), and are associated with corresponding coresets. For the PDCCH repetition, linked search space sets (e.g., two linked search space sets) may be configured, by the RRC configuration, with the same number (or quantity) of candidates (e.g., by a higher layer parameter *nrofCandidates*), and PDCCH candidates (e.g., two PDCCH candidates) in search spaces (e.g., two search spaces) may be linked with the same candidate index. An intra-slot repetition may be allowed, for example, if a PDCCH repetition is scheduled/configured to a wireless device. Each repetition may have the same number (or quantity) of CCEs and coded bits, for example, if a PDCCH repetition is scheduled/configured to a wireless device. Each repetition may correspond to the same DCI payload, for example, if a PDCCH repetition is scheduled/configured to a wireless device.

A wireless device may monitor PDCCH candidates for detection of a DCI format with same information (e.g., repetitions of the DCI format). For example, for a first search space set (e.g., $s_i$) and a second search space set (e.g., $s_j$) that include/comprise (or is configured/indicated with) a higher layer parameter (e.g., *searchSpaceLinkingId*) with the same value, a wireless device may monitor, in PDCCH monitoring occasions with same index according to each of the first search space set and the second search space set in a slot, PDCCH candidates, for detection of a DCI format with same information (e.g., repetitions of the DCI format). The wireless device may expect the same number (quantity) of non-overlapping PDCCH monitoring occasions per slot. The wireless device may expect the same number (or quantity) of non-overlapping PDCCH monitoring occasions per slot, for example, based on a corresponding higher layer parameter (e.g., *monitoringSymbolsWithinSlot*), for the first search space set and the second search space set. For a first coreset (e.g., CORESET $p_i$) associated with the first search space set and for a second coreset (e.g., CORESET $p_j$) associated with the second search space set, the wireless device may be provided/indicated with a higher layer parameter (e.g., a higher layer parameter *tci-PresentInDCI* or a higher layer parameter *tci-PresentDCI-1-2*) *for* either none or both of the first coreset and the second coreset. For the first coreset associated with the first search space set and for the second coreset associated with the second search space set, the wireless device is either not provided/indicated with a higher layer parameter (e.g., *coresetPoolIndex*) value of one (1) for any of the two coresets, or is provided/indicated with a higher layer parameter (e.g., *coresetPoolIndex*) value of one (1) for both coresets. The wireless device may monitor PDCCH candidates for detection of a DCI format, for example, for search space sets that include/comprise (or are configured/indicated with) a higher layer parameter (e.g., *searchSpaceLinkingId*) with the same value. The wireless device may monitor a PDCCH candidate for detection of a DCI format, for example, in a PDCCH monitoring occasion according to a search space set in a slot. For example, for the first search space set (e.g., $s_i$) and the second search space set (e.g., $s_j$) that include/comprise (or are configured/indicated with) the higher layer parameter (e.g., *searchSpaceLinkingId*) with the same value, the wireless device may monitor, in a first PDCCH monitoring occasion according to the first search space set in a slot, a first PDCCH candidate, for detection of a DCI format, and may monitor, in a second PDCCH monitoring occasion according to the second search space set in the slot, a second PDCCH candidate for detection of the (same) DCI format.

A PDCCH monitoring occasion may be the union of PDCCH monitoring occasions of/for at least two PDCCH candidates, for example, if a PDCCH reception (e.g., by a wireless device) includes/comprises the at least two PDCCH candidates from at least two search space sets that are linked for PDCCH repetition. The start of a PDCCH reception may be the start of a PDCCH candidate, among at least two PDCCH candidates (e.g., two PDCCH candidates), that starts earlier, for example, if the PDCCH reception (e.g., by a wireless device) includes/comprises the at least two PDCCH candidates from at least two search space sets that are linked for PDCCH repetition. The end of a PDCCH reception may be the end of a PDCCH candidate, among at least two PDCCH candidates (e.g., two PDCCH candidates), that ends later, for example, if the PDCCH reception (e.g., by a wireless device) includes/comprises the at least two PDCCH candidates from at least two search space sets that are linked for PDCCH repetition.

The wireless device may monitor a first PDCCH candidate of at least two (e.g., two) PDCCH candidates. The wireless device may monitor a first PDCCH candidate of at least two (e.g., two) PDCCH candidates, for example, in a first PDCCH monitoring occasion of/for the first search space set. The wireless device may monitor a second PDCCH candidate of at least two (e.g., two) PDCCH candidates. The wireless device may monitor a second PDCCH candidate of at least two (e.g., two) PDCCH candidates, for example, in a second PDCCH monitoring occasion of/for the second search space set linked to the first search space set for PDCCH repetition. A PDCCH monitoring occasion may be the union of all the PDCCH monitoring occasions, for example, the first PDCCH monitoring occasion of/for the first PDCCH candidate and the second PDCCH monitoring occasion of/for the second PDCCH candidate.

The wireless device may receive, via the PDCCH monitoring occasion, a PDCCH reception (e.g., the first PDCCH candidate only, the second PDCCH candidate only, or both the first PDCCH candidate and the second PDCCH candidate). A start of the PDCCH reception may be the start of a PDCCH candidate, among the PDCCH candidates (e.g., the first PDCCH candidate and the second PDCCH candidate), that starts earlier (e.g., earliest). The end of the PDCCH reception may be the end of a PDCCH candidate, among the PDCCH candidates (e.g., the first PDCCH candidate and the second PDCCH candidate), that ends later (e.g., latest). The PDCCH reception may include/comprise the at least two PDCCH candidates, for example, if the wireless device is not required to monitor one of the at least two PDCCH candidates (e.g., monitor the first PDCCH candidate only, or monitor the second PDCCH candidate only).

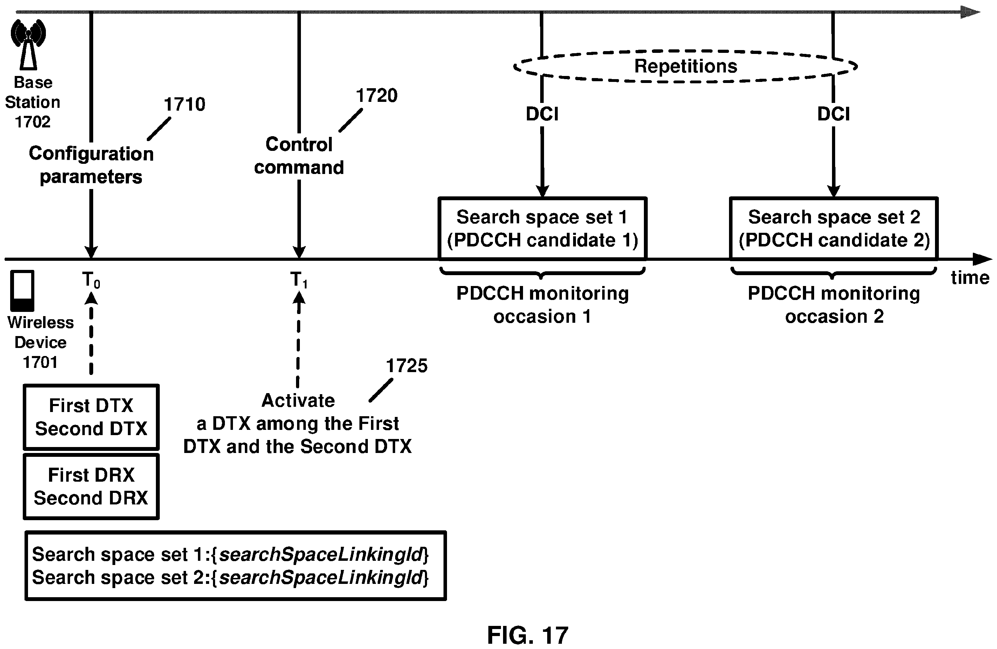

FIG. 17 shows an example of energy saving. A wireless device (e.g., wireless device 1701) may receive one or more messages. The wireless device may receive the one or more messages from a base station (e.g., base station 1702). The base station may send (e.g., transmit) the one or more messages. The wireless device may receive the one or more messages from a relay node. The wireless device may receive the one or more messages from another wireless device (e.g., TRP, vehicle, remote radio head, and the like). The one or more messages may comprise one or more configuration parameters (e.g., configuration parameters 1710 at time T0 in FIG. 17).

The one or more configuration parameters may be one or more RRC configuration parameters. The one or more configuration parameters may be one or more RRC reconfiguration parameters (e.g., *RRCReconfiguration, reconfigurationWithSync*).

The one or more messages may be one or more RRC messages. The one or more messages may be one or more RRC reconfiguration messages (e.g., *RRCReconfiguration, reconfigurationWithSync*). The one or more configuration parameters may be for a cell. The cell may be, for example, a serving cell. At least one configuration parameter of the one or more configuration parameters may be for the cell. The cell may be a primary cell (PCell). The cell may be a primary secondary cell (PSCell). The cell may be a secondary cell (SCell). The cell may be a secondary cell configured with PUCCH (e.g., PUCCH SCell).

The cell may be a special Cell (SpCell). The SpCell may refer to (or indicate) the PCell of the MCG or the PSCell of the SCG, for example, for dual connectivity (DC) operation. The SpCell may refer to (or indicate) the PCell, for example, in at least some other situations.

The cell may be a primary SCG cell (PSCell). For dual connectivity operation, the wireless device may, for example, perform a random-access procedure via the PSCell, for example, if performing the Reconfiguration with Sync procedure.

The cell may be an unlicensed cell (e.g., operating in an unlicensed band). The cell may be a licensed cell (e.g., operating in a licensed band). The cell may operate in a first frequency range (FR1). The FR1 may, for example, comprise frequency bands below 6 GHz. The cell may operate in a second frequency range (FR2). The FR2 may, for example, comprise frequency bands from 24 GHz to 52.6 GHz. The cell may operate in a third frequency range (FR3). The FR3 may, for example, comprise frequency bands from 52.6 GHz to 71 GHz. The FR3 may, for example, comprise frequency bands starting from (or above) 52.6 GHz.

The wireless device may perform uplink transmissions (e.g., PUSCH, PUCCH) via/of the cell in a first time and in a first frequency. The wireless device may perform downlink receptions (e.g., PDCCH, PDSCH) via/of the cell in a second time and in a second frequency. The cell may operate in a time-division duplex (TDD) mode. In the TDD mode, the first frequency and the second frequency may be the same. In the TDD mode, the first time and the second time may be different. The cell may operate in a frequency-division duplex (FDD) mode. In the FDD mode, the first frequency and the second frequency may be different. In the FDD mode, the first time and the second time may be the same.

The wireless device may be in an RRC connected mode/state. The wireless device may be in an RRC idle mode/state. The wireless device may be in an RRC inactive mode/state.

The cell may comprise a plurality of BWPs. The one or more configuration parameters may indicate, for the cell, the plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state (or in a deactivated state). The wireless device may monitor a downlink channel/signal (e.g., PDCCH, DCI, CSI-RS, PDSCH) on/for/via the downlink BWP. The wireless device may monitor a downlink channel/signal (e.g., PDCCH, DCI, CSI-RS, PDSCH) on/for/via the downlink BWP, for example, in the active state of a downlink BWP of the one or more downlink BWPs. The wireless device may receive a PDSCH on/via/for the downlink BWP. The wireless device may receive a PDSCH on/via/for the downlink BWP, for example, in the active state of a downlink BWP of the one or more downlink BWPs. The wireless device may not monitor a downlink channel/signal (e.g., PDCCH, DCI, CSI-RS, PDSCH) on/via/for the downlink BWP. The wireless device may not monitor a downlink channel/signal (e.g., PDCCH, DCI, CSI-RS, PDSCH) on/via/for the downlink BWP, for example, in the inactive state of a downlink BWP of the one or more downlink BWPs. The wireless device may stop monitoring (or receiving) a downlink channel/signal (e.g., PDCCH, DCI, CSI-RS, PDSCH) on/via/for the downlink BWP. The wireless device may stop monitoring (or receiving) a downlink channel/signal (e.g., PDCCH, DCI, CSI-RS, PDSCH) on/via/for the downlink BWP, for example, in the inactive state of a downlink BWP of the one or more downlink BWPs. The wireless device may not receive a PDSCH on/via/for the downlink BWP. The wireless device may not receive a PDSCH on/via/for the downlink BWP, for example, in the inactive state of a downlink BWP of the one or more downlink BWPs. The wireless device may stop receiving a PDSCH on/via/for the downlink BWP. The wireless device may stop receiving a PDSCH on/via/for the downlink BWP, for example, in the inactive state of a downlink BWP of the one or more downlink BWPs.

The wireless device may send (e.g., transmit) an uplink signal/channel (e.g., PUCCH, preamble, PUSCH, PRACH, PUCCH, etc.) on/via the uplink BWP. The wireless device may send (e.g., transmit) an uplink signal/channel (e.g., PUCCH, preamble, PUSCH, PRACH, PUCCH, etc.) on/via the uplink BWP, for example, in the active state of an uplink BWP of the one or more uplink BWPs. The wireless device may not send (e.g., transmit) an uplink signal/channel (e.g., PUCCH, preamble, PUSCH, PRACH, PUCCH, etc.) on/via the uplink BWP. The wireless device may not send (e.g., transmit) an uplink signal/channel (e.g., PUCCH, preamble, PUSCH, PRACH, PUCCH, etc.) on/via the uplink BWP, for example, in the inactive state of an uplink BWP of the one or more uplink BWPs.

The wireless device may activate the downlink BWP of the one or more downlink BWPs of the cell. The activating the downlink BWP may comprise setting (or switching to) the downlink BWP as an active downlink BWP of the cell. The activating the downlink BWP may comprise setting the downlink BWP in the active state. The activating the downlink BWP may comprise switching the downlink BWP from the inactive state to the active state.

The wireless device may activate the uplink BWP of the one or more uplink BWPs of the cell. The activating the uplink BWP may comprise that the wireless device sets (or switches to) the uplink BWP as an active uplink BWP of the cell. The activating the uplink BWP may comprise setting the uplink BWP in the active state. The activating the uplink BWP may comprise switching the uplink BWP from the inactive state to the active state.

The one or more configuration parameters may be for the (active) downlink BWP of the cell. At least one configuration parameter of the one or more configuration parameters may be for the downlink BWP of the cell.

The one or more configuration parameters may be for the (active) uplink BWP of the cell. At least one configuration parameter of the one or more configuration parameters may be for the uplink BWP of the cell.

The one or more configuration parameters may indicate one or more control resource sets (coresets). The one or more configuration parameters may indicate the one or more coresets for a downlink BWP of the cell. The downlink BWP may comprise the one or more coresets.

The one or more configuration parameters may indicate one or more coreset indexes/identifiers/indicators (e.g., provided by a higher layer parameter *ControlResourceSetId*) for the one or more coresets. A (e.g., each) coreset of the one or more coresets may be identified/indicated by a respective coreset index of the one or more coreset indexes. A first coreset of the one or more coresets may be identified by a first coreset index of the one or more coreset indexes. A second coreset of the one or more coresets may be identified by a second coreset index of the one or more coreset indexes.

The one or more configuration parameters may indicate, for the downlink BWP of the cell, a plurality of search space sets (e.g., by a higher layer parameter *SearchSpace*). For example, the one or more configuration parameters may indicate, for the cell, a plurality of search space sets (e.g., by a higher layer parameter *SearchSpace*).

The one or more configuration parameters may indicate a plurality of search space set indexes/identifiers (e.g., provided by a higher layer parameter *searchSpaceId*) for the plurality of search space sets. A (e.g., each) search space set of the plurality of search space sets may be identified/indicated by a respective search space set index of the plurality of search space set indexes. A first search space set of the plurality of search space sets may be identified by a first search space set index of the plurality of search space set indexes. A second search space set of the plurality of search space sets may be identified by a second search space set index of the plurality of search space set indexes.

A search space set of the plurality of search space sets may be associated with (or linked to) a coreset of the one or more coresets. The one or more configuration parameters may indicate the coreset (or a coreset index of the coreset) for the search space set (e.g., provided by a higher layer parameter *controlResourceSetId* in the higher layer parameter *SearchSpace*). The association (or the linkage) may be one-to-one. The association being one-to-one may comprise the search space set associated with (or linked to) the coreset not being associated (or linked to) a second coreset that is different from the coreset. The one or more coresets may comprise the second coreset.

The wireless device may monitor, for DCI, PDCCH transmissions/receptions in/via a coreset of the one or more coresets. The monitoring, for the DCI, the PDCCH transmissions/receptions in the coreset may comprise monitoring, for the DCI, PDCCH candidate(s) in PDCCH monitoring occasion(s) for/of (or associated with) a search space set associated with (or linked to) the coreset. The plurality of search space sets may comprise the search space set. The wireless device may monitor, for DCI, PDCCH candidate(s) in PDCCH monitoring occasion(s) for/of the search space set in the coreset, for example, based on the search space set being associated with (or linked to) the coreset. The wireless device may monitor, for DCI, PDCCH transmissions/receptions for the search space set in the coreset, for example, based on the search space set being associated with (or linked to) the coreset.

The wireless device may monitor, for DCI, downlink control channels in/via a coreset of the one or more coresets. The monitoring, for the DCI, the downlink control channels in the coreset may comprise monitoring, for the DCI, one or more PDCCH candidates in one or more PDCCH monitoring occasions for/of one or more search space sets associated with the coreset. The plurality of search space sets may comprise the one or more search space sets. The wireless device may monitor, for the DCI, respective PDCCH candidate(s) of the one or more PDCCH candidates in a (e.g., each) PDCCH monitoring occasion of the one or more PDCCH monitoring occasions. The one or more configuration parameters may indicate, for the one or more search space sets, the one or more PDCCH candidates. The one or more configuration parameters may indicate, for each search space set of the one or more search space sets, respective PDCCH candidate(s) of the one or more PDCCH candidates. The wireless device may determine the one or more PDCCH monitoring occasions of the one or more search space sets. The wireless device may determine the one or more PDCCH monitoring occasions of the one or more search space sets, for example, based on one or more search space set configuration parameters (e.g., IE *SearchSpace*) of the one or more configuration parameters. The one or more search space set configuration parameters may indicate one or more PDCCH monitoring periodicities (e.g., *monitoringSlotPeriodicityAndOffset*) for the one or more search space sets. The one or more search space set configuration parameters may indicate a respective PDCCH monitoring periodicity of the one or more PDCCH monitoring periodicities for a (e.g., each) search space set of the one or more search space sets. The wireless device may determine the one or more PDCCH monitoring occasions, for example, based on the one or more PDCCH monitoring periodicities. The one or more search space set configuration parameters may indicate PDCCH monitoring symbols (e.g., *monitoringSymbolsWithinSlot*) for the one or more search space sets. The one or more search space set configuration parameters may indicate respective PDCCH monitoring symbol(s) of the PDCCH monitoring symbols (e.g., *monitoringSymbolsWithinSlot*) for a (e.g., each) search space set of the one or more search space sets. The wireless device may determine the one or more PDCCH monitoring occasions, for example, based on the PDCCH monitoring symbols.

The one or more configuration parameters may indicate the one or more coreset indexes for the plurality of search space sets (e.g., provided by a higher layer parameter *controlResourceSetId* in the higher layer parameter *SearchSpace*). A (e.g., each) search space set of the plurality of search space sets may be associated with (or linked to) a respective coreset of the one or more coresets. The one or more configuration parameters may indicate, for the first search space set, the first coreset index of the first coreset. The one or more configuration parameters may indicate the first coreset index of the first coreset in a coreset index field (e.g., provided by a higher layer parameter *controlResourceSetId* in the higher layer parameter *SearchSpace*) of the first search space set. The first search space set may be associated with (or linked to) the first coreset. The first search space set may be associated with (or linked to) the first coreset, for example, based on the one or more configuration parameters indicating the first coreset index of the first coreset for the first search space set. The one or more configuration parameters may indicate, for the second search space set, the first coreset index of the first coreset. The one or more configuration parameters may indicate the first coreset index of the first coreset in a coreset index field (e.g., provided by a higher layer parameter *controlResourceSetId* in the higher layer parameter *SearchSpace*) of the second search space set. The second search space set may be associated with (or linked to) the first coreset. The second search space set may be associated with (or linked to) the first coreset, for example, based on the one or more configuration parameters indicating the first coreset index of the first coreset for the second search space set. The one or more configuration parameters may indicate the second coreset index of the second coreset for the first search space set. The first search space set may be associated with (or linked to) the second coreset. The first search space set may be associated with (or linked to) the second coreset, for example, based on the one or more configuration parameters indicating the second coreset index of the second coreset for the first search space set. The one or more configuration parameters may indicate the second coreset index of the second coreset for the second search space set. The second search space set may be associated with (or linked to) the second coreset. The second search space set may be associated with (or linked to) the second coreset, for example, based on the one or more configuration parameters indicating the second coreset index of the second coreset for the second search space set.

One or more first search space sets of the plurality of search space sets may be common search space (CSS) set(s). The one or more configuration parameters may comprise, for the one or more first search space sets, a search space type parameter (e.g., *searchSpaceType*) that is equal/set to 'CSS' (or 'common'). The one or more configuration parameters may comprise, for a (e.g., each) search space set of the one or more first search space sets, a search space type parameter that is equal/set to 'CSS'. The one or more configuration parameters may comprise, for a (e.g., each) search space set of the one or more first search space sets, a respective search space type parameter that is equal/set to 'CSS'.

The CSS set(s) may comprise a Type0-PDCCH CSS set (configured by *pdcch-ConfigSIB1* in *MIB* or by *searchSpaceSIB1* in *PDCCH-ConfigCommon* or by *searchSpaceZero* in *PDCCH-ConfigCommon*). The wireless device may monitor, for a DCI format with CRC scrambled by a SI-RNTI, PDCCH transmissions/receptions in the Type0-PDCCH CSS set.

The CSS set(s) may comprise a Type0A-PDCCH CSS set (configured by *searchSpaceOtherSystemInformation* in *PDCCH-ConfigCommon*). The wireless device may monitor, for a DCI format with CRC scrambled by a SI-RNTI, PDCCH transmissions/receptions in the Type0A-PDCCH CSS set.

The CSS set(s) may comprise a Type1-PDCCH CSS set (configured by *ra-SearchSpace* in *PDCCH-ConfigCommon*). The wireless device may monitor, for a DCI format with CRC scrambled by a RA-RNTI, MsgB-RNTI, or a TC-RNTI, PDCCH transmissions/receptions in the Type1-PDCCH CSS set.

The CSS set(s) may comprise a Type2-PDCCH CSS set (configured by *pagingSearchSpace* in *PDCCH-ConfigCommon*). The wireless device may monitor, for a DCI format with CRC scrambled by a P-RNTI, PDCCH transmissions/receptions in the Type2-PDCCH CSS set.

The CSS set(s) may comprise a Type3-PDCCH CSS set (configured by *SearchSpace* in *PDCCH-Config* with *searchSpaceType = common*). The wireless device may monitor, for a DCI format with CRC scrambled by an RNTI, PDCCH transmissions/receptions in the Type3-PDCCH CSS set. The RNTI may be, for example, INT-RNTI, SFI-RNTI, TPC-PUSCH-RNTI, TPC-PUCCH-RNTI, TPC-SRS-RNTI, or CI-RNTI. The RNTI may be, for example, C-RNTI, MCS-C-RNTI, CS-RNTI(s), or PS-RNTI. The RNTI may be C-RNTI, MCS-C-RNTI, CS-RNTI(s), or PS-RNTI, for example, if the cell is a primary cell.

One or more second search space sets of the plurality of search space sets may be user specific search space (USS) set(s). The one or more configuration parameters may comprise, for the one or more second search space sets, a search space type parameter (e.g., *searchSpaceType*) that is equal/set to 'USS' (or 'ue-specific'). The one or more configuration parameters may comprise, for a (e.g., each) search space set of the one or more second search space sets, a search space type parameter that is equal/set to 'USS'. The one or more configuration parameters may comprise, for a (e.g., each) search space set of the one or more second search space sets, a respective search space type parameter that is equal/set to 'USS'. The wireless device may monitor, for a DCI format with CRC scrambled by an RNTI, PDCCH transmissions/receptions in a USS set. The USS set(s) may comprise the USS set. The RNTI may be, for example, C-RNTI, MCS-C-RNTI, SP-CSI-RNTI, CS-RNTI(s), SL-RNTI, SL-CS-RNTI, or SL Semi-Persistent Scheduling V-RNTI.

The plurality of search space sets may comprise two search space sets. The two search space sets may comprise a first search space set (e.g., Search space set 1 in FIG. 17) and a second search space set (e.g., Search space set 2 in FIG. 17).

The one or more configuration parameters may indicate, for the first search space set (e.g., Search space set 1 in FIG. 17), a first search space linking index/identifier/identity (e.g., *searchSpaceLinkingId* in FIG. 17). The one or more configuration parameters may comprise a search space linking ID parameter, of/for the first search space set, equal to the first search space linking index/identifier/identity. A value of the search space linking ID parameter of the first search space set may be equal to the first search space linking index/identifier/identity. The first search space set may be associated with (or linked to or mapped to) a first coreset of the one or more coresets.

The one or more configuration parameters may indicate, for the second search space set (e.g., Search space set 2 in FIG. 17), a second search space linking index/identifier/identity (e.g., *searchSpaceLinkingId* in FIG. 17). The one or more configuration parameters may comprise a search space linking ID parameter, of/for the second search space set, equal to the second search space linking index/identifier/identity. A value of the search space linking ID parameter of the second search space set may be equal to the second search space linking index/identifier/identity. The second search space set may be associated with (or may be linked to or mapped to) a second coreset of the one or more coresets.

The first search space set and the second search space set may be different. The first coreset and the second coreset may be different.

The first search space linking index/identifier/identity of the first search space set and the second search space linking index/identifier/identity of the second search space set may be the same (or may be equal). The first search space set and the second search space set may be linked for PDCCH repetition. The first search space set and the second search space set may be linked for PDCCH repetition, for example, based on the first search space linking index/identifier/identity of the first search space set and the second search space linking index/identifier/identity of the second search space set being the same (or being equal). The two search space sets may be linked for PDCCH repetition. The two search space sets may be linked for PDCCH repetition, for example, based on the first search space linking index/identifier/identity of the first search space set and the second search space linking index/identifier/identity of the second search space set being the same (or being equal).

The value of the search space linking ID parameter of the first search space set and the value of the search space linking ID parameter of the second search space set may be the same (or may be equal). The first search space set and the second search space set may be linked for PDCCH repetition. The first search space set and the second search space set may be linked for PDCCH repetition, for example, based on the value of the search space linking ID parameter of the first search space set and the value of the search space linking ID parameter of the second search space set being the same (or being equal). The two search space sets may be linked for PDCCH repetition. The two search space sets may be linked for PDCCH repetition, for example, based on the value of the search space linking ID parameter of the first search space set and the value of the search space linking ID parameter of the second search space set being the same (or being equal).

The first search space set may be a first USS set. The one or more second search space sets of the plurality of search space sets may comprise the first USS set (or the first search space set). The second search space set may be a second USS set. The one or more second search space sets of the plurality of search space sets may comprise the second USS set (or the second search space set).

The first search space set may be a first Type3-PDCCH CSS set. The one or more first search space sets of the plurality of search space sets may comprise the first Type3-PDCCH CSS set (or the first search space set). The second search space set may be a second Type3-PDCCH CSS set. The one or more first search space sets of the plurality of search space sets may comprise the second Type3-PDCCH CSS set (or the second search space set).

The one or more configuration parameters may indicate at least two DTXs for the cell. The at least two DTXs of the cell may be (or may be interchangeably used with) at least two DTX configurations of the cell. The at least two DTXs of the cell may be (or may be interchangeably used with) at least two DTX operations of the cell.

The one or more configuration parameters may comprise one or more DTX configuration parameters indicating a DTX of the cell. For example, the one or more configuration parameters may comprise one or more first DTX configuration parameters (e.g., *TRP-DTX-Config, TRP-DTX-Config1 TRP1-DTX-Config, DTX-Config, DTX-Config1,* and the like) indicating a first DTX of the cell (e.g., First DTX in FIG. 17). The at least two DTXs of the cell may comprise the first DTX of the cell.

The first DTX of the cell may be (or may be interchangeably used with) a first DTX configuration of the cell. The first DTX of the cell may be (or may be interchangeably used with) a first DTX operation of the cell.

The first DTX may be associated with a first TRP (e.g., TRP 1). The one or more configuration parameters may indicate the first DTX for an energy saving of the first TRP. The one or more configuration parameters may comprise one or more second DTX configuration parameters (e.g., *TRP-DTX-Config2, TRP2-DTX-Config, DTX-Config2,* and the like) indicating a second DTX of the cell (e.g., Second DTX in FIG. 17). The at least two DTXs of the cell may comprise the second DTX of the cell.

The second DTX of the cell may be (or may be interchangeably used with) a second DTX configuration of the cell. The second DTX of the cell may be (or may be interchangeably used with) a second DTX operation of the cell.

The second DTX may be associated with a second TRP (e.g., TRP 2). The one or more configuration parameters may indicate the second DTX for an energy saving of the second TRP.

The wireless device may send (e.g., transmit)/report a capability message (e.g., a UE capability message) indicating support/capability (e.g., *twoDTXcapability*) of two DTX configurations for/per a cell. The one or more configuration parameters may comprise the one or more second DTX configuration parameters indicating the second DTX. The one or more configuration parameters may comprise the one or more second DTX configuration parameters indicating the second DTX, for example, based on transmitting/reporting the capability message indicating support/capability (e.g., *twoDTXcapability*) of two DTX configurations for/per the cell. The base station may send (e.g., transmit), to the wireless device, the one or more second DTX configuration parameters indicating the second DTX, for example, based on receiving the capability message indicating support/capability (e.g., *twoDTXcapability*) of two DTX configurations for/per the cell. The base station may send (e.g., transmit), to the wireless device, the one or more configuration parameters indicating at most two DTXs (e.g., no DTX configuration, the first DTX only, the second DTX only, both the first DTX and the second DTX) for the cell, for example, based on receiving the capability message indicating support/capability (e.g., *twoDTXcapability*) of two DTX configurations for/per the cell.

The wireless device may not send (e.g., transmit)/report a capability message (e.g., a UE capability message) indicating support/capability (e.g., *twoDTXcapability*) of two DTX configurations for/per a cell. The one or more configuration parameters may not comprise one or more second DTX configuration parameters indicating a second DTX. The one or more configuration parameters may not comprise one or more second DTX configuration parameters indicating a second DTX, for example, based on not transmitting/reporting the capability message indicating support/capability (e.g., *twoDTXcapability*) of two DTX configurations for/per the cell. The base station may not send (e.g., transmit) the one or more second DTX configuration parameters indicating the second DTX. The base station may not send (e.g., transmit), to the wireless device, the one or more second DTX configuration parameters indicating the second DTX, for example, based on not receiving the capability message indicating support/capability (e.g., *twoDTXcapability*) of two DTX configurations for/per the cell. The base station may send (e.g., transmit), to the wireless device, the one or more first DTX configuration parameters indicating the first DTX, for example, based on not receiving the capability message indicating support/capability (e.g., *twoDTXcapability*) of two DTX configurations for/per the cell. The base station may send (e.g., transmit) the one or more configuration parameters indicating at most one DTX for the cell. The base station may send (e.g., transmit), to the wireless device, the one or more configuration parameters indicating at most one DTX (e.g., the first DTX only or no DTX configuration) for the cell, for example, based on not receiving the capability message indicating support/capability (e.g., *twoDTXcapability*) of two DTX configurations for/per the cell.

The one or more configuration parameters may indicate at least two DRXs for the cell. The at least two DRXs of the cell may be (or may be interchangeably used with) at least two DRX configurations of the cell. The at least two DRXs of the cell may be (or may be interchangeably used with) at least two DRX operations of the cell.

The one or more configuration parameters may comprise one or more first DRX configuration parameters (e.g., *TRP-DRX-Config, TRP-DRX-Config1 TRP 1-DRX-Config, DRX-Config, DRX-Config1,* and the like) indicating a first DRX of the cell (e.g., First DRX in FIG. 17). The at least two DRXs of the cell may comprise the first DRX of the cell.

The first DRX of the cell may be (or may be interchangeably used with) a first DRX configuration of the cell. The first DRX of the cell may be (or may be interchangeably used with) a first DRX operation of the cell.

The first DRX may be associated with a first TRP (e.g., TRP 1). The one or more configuration parameters may indicate the first DRX for an energy saving of the first TRP.

The one or more configuration parameters may comprise one or more second DRX configuration parameters (e.g., *TRP-DRX-Config2, TRP2-DRX-Config, DRX-Config2,* and the like) indicating a second DRX of the cell (e.g., Second DRX in FIG. 17). The at least two DRXs of the cell may comprise the second DRX of the cell.

The second DRX of the cell may be (or may be interchangeably used with) a second DRX configuration of the cell. The second DRX of the cell may be (or may be interchangeably used with) a second DRX operation of the cell.

The second DRX may be associated with a second TRP (e.g., TRP 2). The one or more configuration parameters may indicate the second DRX for an energy saving of the second TRP.

The wireless device may receive a control command (e.g., control command 1720 at time T1 in FIG. 17). The control command may be, for example, DCI (e.g., DCI format 2_9, DCI format 2_10, and the like). The control command may indicate activation of a DTX of the at least two DTXs of the cell. The control command may comprise a DTX/DRX indicator field (e.g., TRP DTX/DRX indicator field) with a value (e.g., 1) indicating activation of the DTX of the cell. The DTX/DRX indicator field may be associated with (or correspond to) the DTX of the cell. The wireless device may activate the DTX of the cell, for example, based on receiving the control command. For example, as shown by 1725 in FIG. 17, the wireless may activate a DTX among the first DTX and the second DTX at time T1.

A value (e.g., '1') for/of a bit of the DTX/DRX indicator field in a block of the one or more blocks may indicate activation of the DTX of the cell. The block may be associated with the cell. The one or more configuration parameters may indicate, for the cell, a starting position of the block or a starting position of the DTX. The bit may be associated with (or may correspond to) the DTX of the cell.

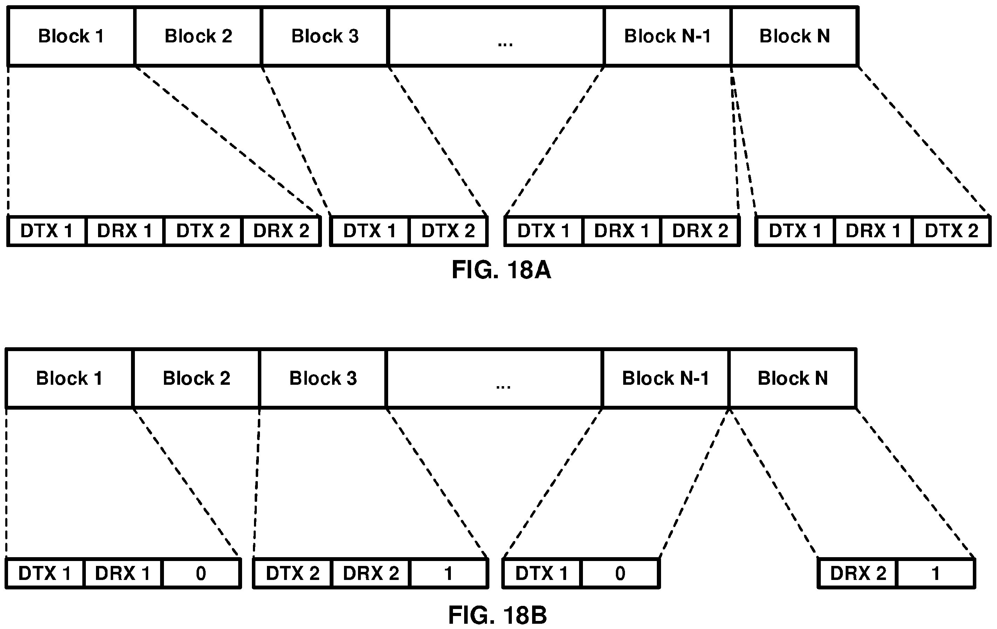

The DTX may be, for example, the first DTX. The DTX may be, for example, the second DTX. FIG. 18A and FIG. 18B show examples of the control command.

The DTX of the cell may be (or may be interchangeably used with) a DTX configuration of the cell. The DTX of the cell may be (or may be interchangeably used with) a DTX operation of the cell.

The control command (e.g., control command 1720 at time T1 in FIG. 17) may comprise one or more blocks (e.g., Block 1, Block 2, Block 3, ..., Block N-1, Block N in FIG. 18A and FIG. 18B). A size/length of each block of the one or more blocks may be one or more bits (e.g., 1 bit, 2 bits, 3 bits, 4 bits). Each block may comprise/indicate respective DTX/DRX indicator field (e.g., TRP DTX/DRX indicator field). Each bit of a DTX/DRX indicator field (e.g., TRP DTX/DRX indicator field) in a block of the one or more blocks may indicate activation or deactivation of one of: the first DTX, the second DTX, the first DRX, and the second DRX. A first value (e.g., '0') for a bit of the DTX/DRX indicator field may indicate deactivation of a DTX or of a DRX among the first DTX, the second DTX, the first DRX, and the second DRX, where the bit corresponds to (or is associated with) the DTX or the DRX. A second value (e.g., '1') for a bit of the DTX/DRX indicator field may indicate activation of a DTX or of a DRX among the first DTX, the second DTX, the first DRX, and the second DRX, where the bit corresponds to (or is associated with) the DTX or the DRX.

A block (e.g., Block 1 in FIG. 18A or a DTX/DRX indicator field in Block 1) of the one or more blocks may be 4 (or any other value) bits, for example, if the first DTX, the second DTX, the first DRX, and the second DRX are configured/indicated, by the one or more configuration parameters, for the cell. The most-significant bit (MSB) of the 4 bits of the block may correspond to the first DTX (e.g., DTX 1 in FIG. 18A). The second MSB of the 4 bits of the block may correspond to the first DRX (e.g., DRX 1 in FIG. 18A). The least-significant bit (LSB) of the 4 bits of the block may correspond to the second DRX (e.g., DRX 2 in FIG. 18A). The third MSB or the second LSB of the 4 bits of the block may correspond to the second DTX (e.g., DTX 2 in FIG. 18A). The block may comprise a DTX/DRX indicator field (e.g., 4 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., '1') for the second MSB of the DTX/DRX indicator field may indicate activation of the first DRX.

A first value (e.g., '0') for the LSB of the DTX/DRX indicator field may indicate deactivation of the second DRX. A second value (e.g., '1') for the LSB of the DTX/DRX indicator field may indicate activation of the second DRX.

A first value (e.g., '0') for the second LSB of the DTX/DRX indicator field may indicate deactivation of the second DTX. A second value (e.g., '1') for the second LSB of the DTX/DRX indicator field may indicate activation of the second DTX.

A block (e.g., Block 3 in FIG. 18A or a DTX/DRX indicator field in Block 3) of the one or more blocks may be 2 (or any other value) bits, for example, if the first DTX and the second DTX are configured/indicated, by the one or more configuration parameters, for the cell. The MSB of the 2 bits of the block may correspond to the first DTX (e.g., DTX 1 in FIG. 18A). The LSB of the 2 bits of the block may correspond to the second DTX (e.g., DTX 2 in FIG. 18A). The first DRX and the second DRX may not be configured/indicated, by the one or more configuration parameters, for the cell. The block may comprise a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the LSB of the DTX/DRX indicator field may indicate deactivation of the second DTX. A second value (e.g., '1') for the LSB of the DTX/DRX indicator field may indicate activation of the second DTX.

A block of the one or more blocks may be 2 (or any other value) bits, for example, if the first DRX and the second DRX are configured/indicated, by the one or more configuration parameters, for the cell. The MSB of the 2 bits of the block may correspond to the first DRX. The LSB of the 2 bits of the block may correspond to the second DRX. The first DTX and the second DTX may not be configured/indicated, by the one or more configuration parameters, for the cell.

A block of the one or more blocks may be 2 (or any other value) bits, for example, if the first DTX and the second DRX are configured/indicated, by the one or more configuration parameters, for the cell. The MSB of the 2 bits of the block may correspond to the first DTX. The LSB of the 2 bits of the block may correspond to the second DRX. The second DTX and the first DRX may not be configured/indicated, by the one or more configuration parameters, for the cell.

A block of the one or more blocks may be 2 (or any other value) bits, for example, if two of: the first DTX, the second DTX, the first DRX, and the second DRX are configured/indicated, by the one or more configuration parameters, for the cell. For example, the block may be/comprise one of {[DTX 1, DRX 1], [DTX 1, DRX 2], [DTX 1, DTX 2], [DRX 1, DRX 2], [DRX 1, DTX 2], [DTX 2, DRX 2]}.

A block (e.g., Block N-1 in FIG. 18A or a DTX/DRX indicator field in Block N-1) of the one or more blocks may be 3 (or any other value) bits, for example, if the first DTX, the first DRX, and the second DRX are configured/indicated, by the one or more configuration parameters, for the cell. The MSB of the 3 bits of the block may correspond to the first DTX (e.g., DTX 1 in FIG. 18A). The second MSB of the 3 bits of the block may correspond to the first DRX (e.g., DRX 1 in FIG. 18A). The LSB of the 3 bits of the block may correspond to the second DRX (e.g., DRX 2 in FIG. 18A). The second DTX may not be configured/indicated, by the one or more configuration parameters, for the cell.

A block (e.g., Block N in FIG. 18A or a DTX/DRX indicator field in Block N) of the one or more blocks may be 3 (or any other value) bits, for example, if the first DTX, the first DRX, and the second DTX are configured/indicated, by the one or more configuration parameters, for the cell. The MSB of the 3 bits of the block may correspond to the first DTX (e.g., DTX 1 in FIG. 18A). The second MSB of the 3 bits of the block may correspond to the first DRX (e.g., DRX 1 in FIG. 18A). The LSB of the 3 bits of the block may correspond to the second DTX (e.g., DTX 2 in FIG. 18A). The second DRX may not be configured/indicated, by the one or more configuration parameters, for the cell.

A block of the one or more blocks may be 3 (or any other value) bits, for example, if three of: the first DTX, the second DTX, the first DRX, and the second DRX are configured/indicated, by the one or more configuration parameters, for the cell. For example, the block may be/comprise one of {[DTX 1, DRX 1, DTX 2], [DTX 1, DRX 1, DRX 2], [DTX 1, DTX 2, DRX 2], [DRX 1, DTX 2, DRX 2]}.

A block of the one or more blocks may be 1 (or any other value) bit, for example, if one of: the first DTX, the second DTX, the first DRX, and the second DRX are configured/indicated, by the one or more configuration parameters, for the cell. For example, the block may be/comprise one of {[DTX 1], [DRX 1], [DTX 2], [DRX 2]}.

A starting position of a DTX/DRX (or a DTX/DRX indicator field) of a TRP in a block of the one or more blocks may be determined, by the wireless device and/or the base station, by a position parameter (e.g., *positionInDCI-TRPDTRX*). The one or more configuration parameters may comprise the position parameter. For example, a wireless device configured with (or served by) both the first TRP and the second TRP may be indicated by a starting position of the block (e.g., starting position of DTX 1 in Block 1 in FIG. 18A). The position parameter may indicate the starting position of the block. For example, a wireless device configured with (or served by) the first TRP only may be indicated by a starting position of the block (e.g., starting position of DTX 1 in Block 1 in FIG. 18A). The position parameter may indicate the starting position of the block. The wireless device may discard/ignore DTX 2 and DRX 2, in the block, associated with the second TRP. For example, a wireless device configured with (or served by) the second TRP only may be indicated by a starting position of the DTX/DRX (or a DTX/DRX indicator field in the block) associated with the second TRP (e.g., starting position of DTX 2 in Block 1 in FIG. 18A). The position parameter may indicate the starting position of the DTX/DRX, in the block, associated with the second TRP. The wireless device may discard/ignore DTX 1 and DRX 1, in the block, associated with the first TRP.

A size/length of each block of the one or more blocks may be at least two bits (e.g., 2 bits, 3 bits). Each block may comprise/indicate a respective DTX/DRX indicator field (e.g., DTX/DRX indicator field) and a respective index/indicator field (e.g., TRP index/indicator, coreset pool index, SRS resource set index/indicator, antenna panel index/indicator, physical cell index/identifier, and the like). An index/indicator field in a block of the one or more blocks may be 1 bit. A respective index/indicator field in each block of the one or more blocks may be 1 bit.

A (e.g., each) bit of a DTX/DRX indicator field (e.g., DTX/DRX indicator field) in the block may indicate activation or deactivation of one of: the first DTX and the first DRX. A (e.g., each) bit of a DTX/DRX indicator field (e.g., DTX/DRX indicator field) in the block may indicate activation or deactivation of one of: the first DTX and the first DRX, for example, if a value of an index/indicator field in a block of the one or more blocks is equal/set to a first value (e.g., '0'). A first value (e.g., '0') for a bit of the DTX/DRX indicator field in the block may indicate deactivation of the first DTX or the first DRX, where the bit corresponds to (or is associated with) the first DTX or the first DRX, respectively. A second value (e.g., '1') for a bit of the DTX/DRX indicator field in the block may indicate activation of the first DTX and the first DRX, where the bit corresponds to (or is associated with) the first DTX or the first DRX, respectively.

A (e.g., each) bit of a DTX/DRX indicator field in the block may indicate the activation or deactivation of the second DTX and/or the second DRX. A (e.g., each) bit of a DTX/DRX indicator field (e.g., DTX/DRX indicator field) in the block may indicate activation or deactivation of one of: the second DTX and the second DRX, for example, if a value of an index/indicator field in a block of the one or more blocks is equal/set to a second value (e.g., '1'). A first value (e.g., '0') for a bit of the DTX/DRX indicator field may indicate deactivation of the second DTX or the second DRX, where the bit corresponds to (or is associated with) the second DTX or the second DRX, respectively. A second value (e.g., '1') for a bit of the DTX/DRX indicator field may indicate activation of the second DTX and the second DRX, where the bit corresponds to (or is associated with) the second DTX or the second DRX, respectively.

The index/indicator field in the block may be located/positioned, for example, after the DTX/DRX indicator field in the block. The index/indicator field in the block may not be located/positioned, for example, before the DTX/DRX indicator field in the block.

The block may be at least three (e.g., 3) bits, for example, if the first DTX and the first DRX are configured/indicated, by the one or more configuration parameters, for the cell. The block may be at least three (e.g., 3) bits, for example, if the first DTX and the first DRX are configured/indicated, by the one or more configuration parameters, for the cell, for example, if an index/indicator field in a block (e.g., Block 1 in FIG. 18B) of the one or more blocks is equal/set to a first value (e.g., '0'). The most-significant bit (MSB) of the 3 bits of the block may correspond to the first DTX (e.g., DTX 1 in FIG. 18B). The second MSB of the 3 bits of the block may correspond to the first DRX (e.g., DRX 1 in FIG. 18B). The least-significant bit (LSB) of the 3 bits of the block may correspond to the index/indicator field (e.g., 0 in Block 1 in FIG. 18B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., '1') for the second MSB of the DTX/DRX indicator field may indicate activation of the first DRX.

The block may be at least three (e.g., 3) bits, for example, if the second DTX and the second DRX are configured/indicated, by the one or more configuration parameters, for the cell. The block may be at least three (e.g., 3) bits if the second DTX and the second DRX are configured/indicated, by the one or more configuration parameters, for the cell, for example, if an index/indicator field in a block (e.g., Block 3 in FIG. 18B) of the one or more blocks is equal/set to a second value (e.g., '1'). The most-significant bit (MSB) of the 3 bits of the block may correspond to the second DTX (e.g., DTX 2 in FIG. 18B). The second MSB of the 3 bits of the block may correspond to the second DRX (e.g., DRX 2 in FIG. 18B). The least-significant bit (LSB) of the 3 bits of the block may correspond to the index/indicator field (e.g., 1 in Block 3 in FIG. 18B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the second DTX. A second value (e.g., '1') for the MSB of the DTX/DRX indicator field may indicate activation of the second DTX.

A first value (e.g., '0') for the second MSB of the DTX/DRX indicator field may indicate deactivation of the second DRX. A second value (e.g., '1') for the second MSB of the DTX/DRX indicator field may indicate activation of the second DRX.

The block may be 2 (or any other value) bits, for example, if either the first DTX or the first DRX (e.g., only one of the first DTX and the first DRX) is configured/indicated, by the one or more configuration parameters, for the cell. The block may be 2 (or any other value) bits, for example, if either the first DTX or the first DRX (e.g., only one of the first DTX and the first DRX) is configured/indicated, by the one or more configuration parameters, for the cell, for example, if an index/indicator field in a block (e.g., Block N-1 in FIG. 18B) of the one or more blocks is equal/set to a first value (e.g., '0'). The most-significant bit (MSB) of the 2 bits of the block may correspond to the first DTX (e.g., DTX 1 in FIG. 18B) or the first DRX. The least-significant bit (LSB) of the 2 bits of the block may correspond to the index/indicator field (e.g., 0 in Block N-1 in FIG. 18B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the first DTX or the first DRX. A second value (e.g., '1') for the MSB of the DTX/DRX indicator field may indicate activation of the first DTX or the first DRX.

The block may be 2 (or any other value) bits, for example, if either the second DTX or the second DRX (e.g., only one of the second DTX and the second DRX) is configured/indicated, by the one or more configuration parameters, for the cell. The block may be 2 (or any other value) bits, for example, if either the second DTX or the second DRX (e.g., only one of the second DTX and the second DRX) is configured/indicated, by the one or more configuration parameters, for the cell, for example, if an index/indicator field in a block (e.g., Block N in FIG. 18B) of the one or more blocks is equal/set to a second value (e.g., ' 1'). The most-significant bit (MSB) of the 2 bits of the block may correspond to the second DTX or the second DRX (e.g., DRX 2 in FIG. 18B). The least-significant bit (LSB) of the 2 bits of the block may correspond to the index/indicator field (e.g., 1 in Block N in FIG. 18B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the second DTX or the second DRX. A second value (eg, '1') for the MSB of the DTX/DRX indicator field may indicate activation of the second DTX or the second DRX.

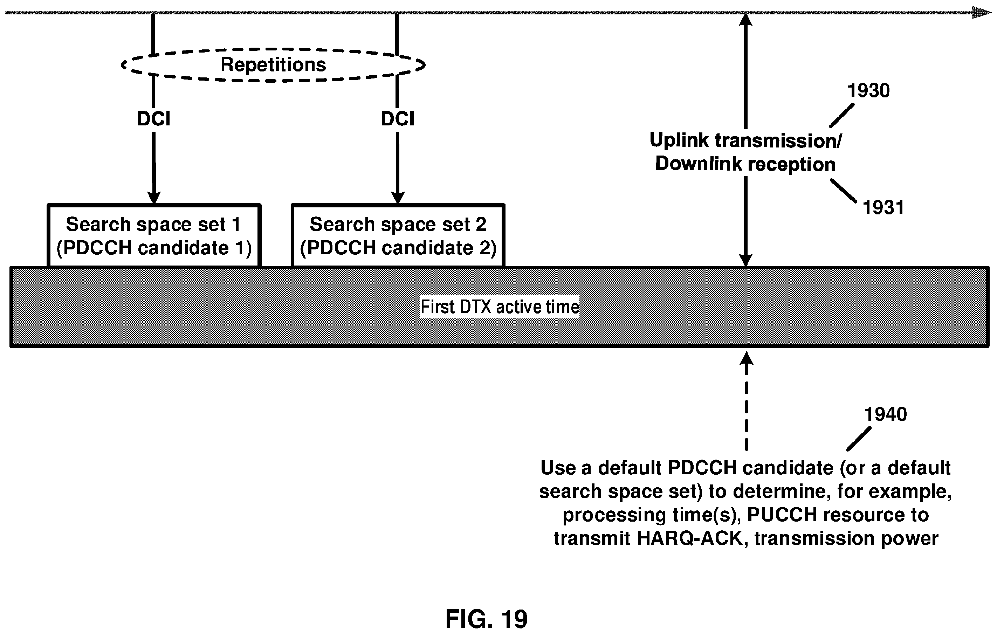

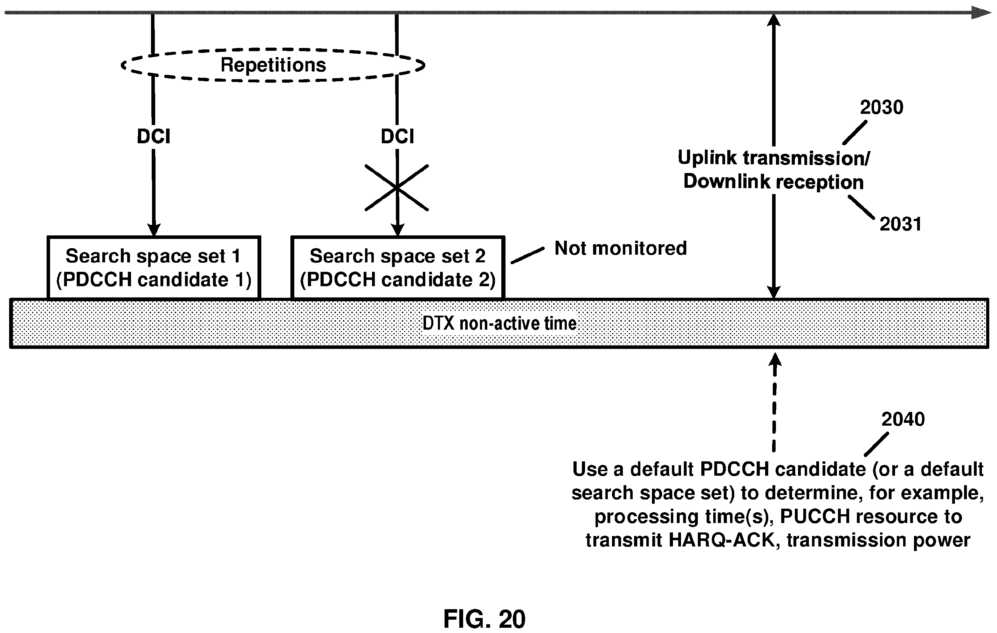

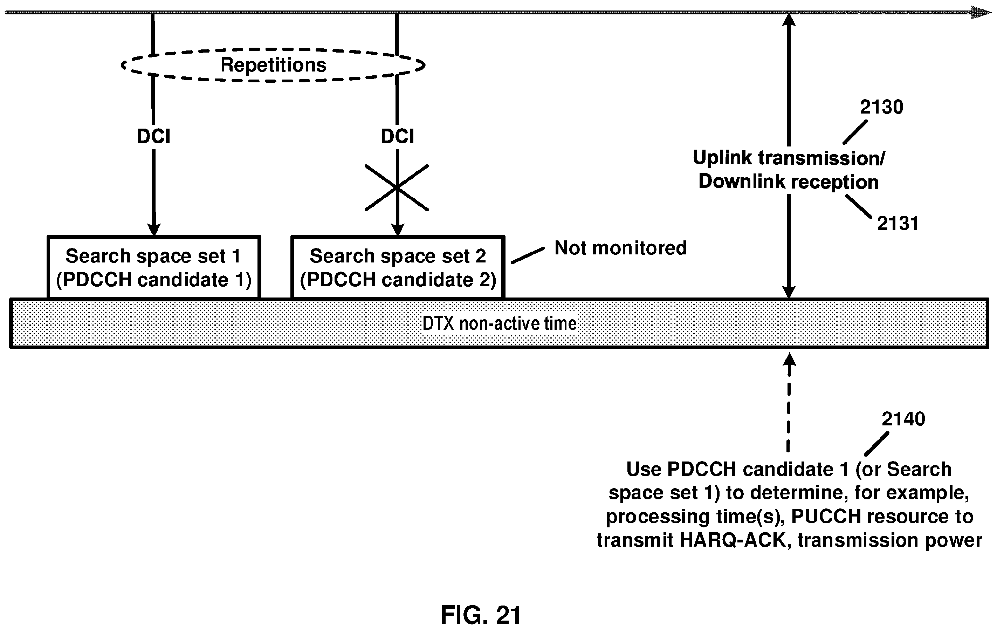

FIG. 19, FIG. 20, and FIG. 21 show examples of energy saving. In FIG. 19, a first PDCCH monitoring occasion of the first search space set and a second PDCCH monitoring occasion of the second search space set are in an active time/duration/period of the DTX (e.g., DTX active time). In FIG. 20 and FIG. 21, a first PDCCH monitoring occasion of the first search space set and a second PDCCH monitoring occasion of the second search space set are in a non-active time/duration/period of the DTX (e.g., DTX non-active time).

The wireless device may monitor at least two (e.g. 2) PDCCH candidates in/for/of the at least two (e.g., 2) search space sets. The wireless device may monitor two PDCCH candidates in/for/of the two search space sets, for example, during/in an active time/duration/period of the DTX (e.g., DTX active time in FIG. 19). The wireless device may monitor the two PDCCH candidates in/for/of the two search space sets, for example, during/in the active time/duration/period of the DTX and for detection of DCI (or a DCI format) with the same information. The wireless device may monitor the two PDCCH candidates in/for/of the two search space sets, for example, during/in the active time/duration/period of the DTX and for detection of repetitions of DCI (or a DCI format). The wireless device may monitor the two PDCCH candidates in/for/of the two search space sets, for example, during/in the active time/duration/period of the DTX and in two PDCCH monitoring occasions.

The wireless device may monitor, in a time slot, the two PDCCH candidates in/for/of the two search space sets. The wireless device may monitor the two PDCCH candidates in/for/of the two search space sets, for example, based on the two search space sets being linked for PDCCH repetition.

The wireless device may monitor a first PDCCH candidate (e.g., PDCCH candidate 1 in FIG. 17 and FIG. 19) in/for/of the first space set. The wireless device may monitor a first PDCCH candidate (e.g., PDCCH candidate 1 in FIG. 17 and FIG. 19) in/for/of the first space set, for example, during/in the active time/duration/period of the DTX. The wireless device may monitor the first PDCCH candidate in/for/of the first space set associated with the first coreset. The wireless device may monitor the first PDCCH candidate in/for/of the first space set associated with the first coreset, for example, during/in the active time/duration/period of the DTX. The wireless device may monitor the first PDCCH candidate in/for/of the first search space set. The wireless device may monitor the first PDCCH candidate in/for/of the first search space set, for example, during/in the active time/duration/period of the DTX and for detection of the DCI (or the DCI format). The wireless device may monitor the first PDCCH candidate in/for/of the first search space set. The wireless device may monitor the first PDCCH candidate in/for/of the first search space set, for example, during/in the active time/duration/period of the DTX and for detection of a first repetition of the DCI (or the DCI format). The wireless device may monitor the first PDCCH candidate in/for/of the first search space set. The wireless device may monitor the first PDCCH candidate in/for/of the first search space set, for example, during/in the active time/duration/period of the DTX and in a first PDCCH monitoring occasion (e.g., PDCCH monitoring occasion 1 in FIG. 17). The wireless device may monitor, in the time slot, the first PDCCH candidate.

The wireless device may monitor a second PDCCH candidate (e.g., PDCCH candidate 2 in FIG. 17 and FIG. 19) in/for/of the second space set. The wireless device may monitor a second PDCCH candidate (e.g., PDCCH candidate 2 in FIG. 17 and FIG. 19) in/for/of the second space set, for example, during/in the active time/duration/period of the DTX. The wireless device may monitor the second PDCCH candidate in/for/of the second space set associated with the second coreset. The wireless device may monitor the second PDCCH candidate in/for/of the second space set associated with the second coreset, for example, during/in the active time/duration/period of the DTX. The wireless device may monitor the second PDCCH candidate in/for/of the second search space set. The wireless device may monitor the second PDCCH candidate in/for/of the second search space set, for example, during/in the active time/duration/period of the DTX and for detection of the DCI (or the DCI format). The wireless device may monitor the second PDCCH candidate in/for/of the second search space set, for example, during/in the active time/duration/period of the DTX and for detection of a second repetition of the DCI (or the DCI format). The wireless device may monitor the second PDCCH candidate in/for/of the second search space set. The wireless device may monitor the second PDCCH candidate in/for/of the second search space set, for example, during/in the active time/duration/period of the DTX and in a second PDCCH monitoring occasion (e.g., PDCCH monitoring occasion 2 in FIG. 17). The wireless device may monitor the second PDCCH candidate, for example, in the time slot.

The two PDCCH candidates may comprise the first PDCCH candidate and the second PDCCH candidate. The repetitions of the DCI (or the DCI format) may comprise the first repetition of the DCI (or the DCI format) and the second repetition of the DCI (or the DCI format). The first repetition of the DCI and the second repetition of the DCI may be the same (or may comprise the same information or may be with the same DCI format).

The two or more (e.g., 2) PDCCH monitoring occasions may comprise the first PDCCH monitoring occasion and the second PDCCH monitoring occasion. The DTX may be the first DTX of the cell. The first PDCCH monitoring occasion may be in/during/within the active time/duration/period of the first DTX. The first PDCCH monitoring occasion may overlap in time with the active time/duration/period of the first DTX. At least one symbol of the first PDCCH monitoring occasion may be in/during/within the active time/duration/period of the first DTX. A (e.g., each) symbol of the first PDCCH monitoring occasion may be in/during/within the active time/duration/period of the first DTX.

The one or more configuration parameters may not comprise one or more second DTX configuration parameters of a second DTX of the cell (e.g., the second DTX is not configured). The one or more configuration parameters may comprise the one or more second DTX configuration parameters of the second DTX of the cell. The second DTX may not be activated by the wireless device and/or the base station. The wireless device may not receive a control command (e.g., DCI format 2_9, DCI format 2_10, and the like) indicating activation of the second DTX.

The one or more configuration parameters may comprise the one or more second DTX configuration parameters of the second DTX of the cell. The second DTX may be activated by the wireless device and/or the base station. The wireless device may receive a control command (e.g., control command 1720 in FIG. 17, DCI format 2_9, DCI format 2_10, and the like) indicating activation of the second DTX. The second PDCCH monitoring occasion may be in/during/within an active time/duration/period of the second DTX. The second PDCCH monitoring occasion may overlap in time with the active time/duration/period of the second DTX. For example, at least one symbol of the second PDCCH monitoring occasion may be in/during/within the active time/duration/period of the second DTX. For example, each symbol of the second PDCCH monitoring occasion may be in/during/within the active time/duration/period of the second DTX. The second PDCCH monitoring occasion may be in/during/within the active time/duration/period of the first DTX and the active time/duration/period of the second DTX. The second PDCCH monitoring occasion may overlap in time with the active time/duration/period of the first DTX and the active time/duration/period of the second DTX. At least one symbol of the second PDCCH monitoring occasion may be in/during/within the active time/duration/period of the first DTX and the active time/duration/period of the second DTX. For example, a (e.g., each) symbol of the second PDCCH monitoring occasion may be in/during/within the active time/duration/period of the first DTX and the active time/duration/period of the second DTX.

The DTX may be the second DTX of the cell. The second PDCCH monitoring occasion may be in/during/within the active time/duration/period of the second DTX. The second PDCCH monitoring occasion may overlap in time with the active time/duration/period of the second DTX. For example, at least one symbol of the second PDCCH monitoring occasion may be in/during/within the active time/duration/period of the second DTX. For example, a (e.g., each) symbol of the second PDCCH monitoring occasion may be in/during/within the active time/duration/period of the second DTX.

The one or more configuration parameters may not comprise one or more first DTX configuration parameters of a first DTX of the cell (e.g., the first DTX is not configured). The one or more configuration parameters may comprise the one or more first DTX configuration parameters of the first DTX of the cell. The first DTX may not be activated by the wireless device and/or the base station. The wireless device may not receive a control command (e.g., DCI format 2_9, DCI format 2_10, and the like) indicating activation of the first DTX.

The one or more configuration parameters may comprise the one or more first DTX configuration parameters of the first DTX of the cell. The first DTX may be activated by the wireless device and/or the base station. The wireless device may receive a control command (e.g., control command 1720 in FIG. 17, DCI format 2_9, DCI format 2_10, and the like) indicating activation of the first DTX. The first PDCCH monitoring occasion may be in/during/within an active time/duration/period of the first DTX. The first PDCCH monitoring occasion may overlap in time with the active time/duration/period of the first DTX. At least one symbol of the first PDCCH monitoring occasion may be in/during/within the active time/duration/period of the first DTX. A (e.g., each) symbol of the first PDCCH monitoring occasion may be in/during/within the active time/duration/period of the first DTX. The first PDCCH monitoring occasion may be in/during/within the active time/duration/period of the first DTX and the active time/duration/period of the second DTX. The first PDCCH monitoring occasion may overlap in time with the active time/duration/period of the first DTX and the active time/duration/period of the second DTX. At least one symbol of the first PDCCH monitoring occasion may be in/during/within the active time/-duration/period of the first DTX and the active time/duration/period of the second DTX. EA (e.g., each) symbol of the first PDCCH monitoring occasion may be in/during/within the active time/duration/period of the first DTX and the active time/duration/period of the second DTX.

The wireless device may receive the DCI. The wireless device may receive, via PDCCH, the DCI. The wireless device may receive a PDCCH reception with/comprising/carrying the DCI. The wireless device may receive the DCI, for example, in/during/within the active time/duration/period of the DTX.

The wireless device may receive the DCI, for example, via at least one PDCCH candidate of the two PDCCH candidates. The wireless device may receive the DCI, for example, via at least one PDCCH monitoring occasion of the two PDCCH monitoring occasions. The wireless device may receive at least one repetition of the repetitions of the DCI.

The wireless device may receive the DCI (or the first repetition of the DCI), for example, via the first PDCCH candidate and in the first PDCCH monitoring occasion. The wireless device may receive the DCI (or the second repetition of the DCI), for example, via the second PDCCH candidate and in the second PDCCH monitoring occasion. The at least one PDCCH candidate may be the first PDCCH candidate and the second PDCCH candidate. The at least one PDCCH monitoring occasion may be the first PDCCH monitoring occasion and the second PDCCH monitoring occasion. The at least one repetition may be the first repetition and the second repetition.

The wireless device may receive the DCI (or the first repetition of the DCI), for example, via the first PDCCH candidate and in the first PDCCH monitoring occasion. The wireless device may not receive the DCI (or the second repetition of the DCI), for example, via the second PDCCH candidate and in the second PDCCH monitoring occasion. The at least one PDCCH candidate may be the first PDCCH candidate. The at least one PDCCH monitoring occasion may be the first PDCCH monitoring occasion. The at least one repetition may be the first repetition.

The wireless device may not receive the DCI (or the first repetition of the DCI), for example, via the first PDCCH candidate and in the first PDCCH monitoring occasion. The wireless device may receive the DCI (or the second repetition of the DCI), for example, via the second PDCCH candidate and in the second PDCCH monitoring occasion. The at least one PDCCH candidate may be the second PDCCH candidate. The at least one PDCCH monitoring occasion may be the second PDCCH monitoring occasion. The at least one repetition may be the second repetition.

The PDCCH reception with/carrying/comprising the DCI may include/comprise (or be associated with) the at least two PDCCH candidates from the at least two search space sets. The PDCCH reception with/carrying/comprising the DCI may include/comprise (or be associated with) the at least two PDCCH candidates from the at least two search space sets, for example, based on monitoring the at least two PDCCH candidates in/of/for/from the at least two search space sets for detection of the DCI (e.g., in FIG. 19). For example, the PDCCH reception with/carrying/comprising the DCI may include/comprise (or be associated with) the two PDCCH candidates from the two search space sets, for example, based on monitoring both the first PDCCH candidate in/of/for/from the first search space set and the second PDCCH candidate in/of/for/from the second search space set for detection of the DCI.

The PDCCH reception with/carrying/comprising the DCI may include/comprise (or be associated with) the at least two PDCCH candidates from the at least two search space sets. The PDCCH reception with/carrying/comprising the DCI may include/comprise (or be associated with) the at least two PDCCH candidates from the at least two search space sets, for example, when/if the wireless device monitors the at least two PDCCH candidates in/of/for/from the at least two search space sets for detection of the DCI (e.g., in FIG. 19). For example, the PDCCH reception with/carrying/comprising the DCI may include/comprise (or be associated with) the two PDCCH candidates from the two search space sets, for example, when/if the wireless device monitors both the first PDCCH candidate in/of/for/from the first search space set and the second PDCCH candidate in/of/for/from the second search space set for detection of the DCI.

The wireless device may assume as PDCCH repetition, for example, if the PDCCH reception with/carrying/-comprising the DCI may include/comprise (or be associated with) the at least two PDCCH candidates from the at least two search space sets. A PDCCH monitoring occasion may be the union of the at least two PDCCH monitoring occasions of/for the at least two PDCCH candidates. A PDCCH monitoring occasion may be the union of the at least two PDCCH monitoring occasions of/for the at least two PDCCH candidates, for example, if the PDCCH reception includes/comprises (or is associated with) the at least two PDCCH candidates from the at least two search space sets. For example, the PDCCH monitoring occasion is the union of the first PDCCH monitoring occasion and the second PDCCH monitoring occasion.

The start of the PDCCH reception may be the start of a PDCCH candidate, among at least two (e.g., two) PDCCH candidates, that starts earlier (e.g., earliest) in time, for example, if the PDCCH reception includes/comprises (or is associated with) at least two (e.g., two) PDCCH candidates from at least two (e.g., two) search space sets. The end of the PDCCH reception may be the end of a PDCCH candidate that ends later in time. The end of the PDCCH reception may be the end of a PDCCH candidate, among at least two (e.g., two) PDCCH candidates, that ends later (e.g., latest) in time, for example, if the PDCCH reception includes/comprises (or is associated with) at least two (e.g., two) PDCCH candidates from at least two (e.g., two) search space sets.

The wireless device may monitor one of at least two (e.g., two) PDCCH candidates in/for/of at least two (e.g., two) search space sets. The wireless device may monitor one of the at least two PDCCH candidates in/for/of the at least two search space sets, for example, during/in a non-active time/duration/period of the DTX (e.g., DTX non-active time in FIG. 20 and FIG. 21). The wireless device may monitor one of the at least two PDCCH candidates in/for/of the at least two search space sets, for example, during/in the non-active time/duration/period of the DTX and for detection of DCI (or a DCI format). The wireless device may monitor one of the at least two PDCCH candidates in/for/of the at least two search space sets, for example, during/in the non-active time/duration/period of the DTX and for detection of DCI (or a DCI format). The wireless device may monitor one of the at least two PDCCH candidates in/for/of the at least two search space sets, for example, during/in the non-active time/duration/period of the DTX and in one of the at least two PDCCH monitoring occasions.

The wireless device may not monitor one of at least two (e.g., two) PDCCH candidates in/for/of at least two (e.g., two) search space sets. The wireless device may not monitor one of the at least two PDCCH candidates in/for/of the at least two search space sets, for example, during/in the non-active time/duration/period of the DTX (e.g., DTX non-active time in FIG. 20 and FIG. 21). The wireless device may not monitor one of the at least two PDCCH candidates in/for/of the at least two search space sets, for example, during/in the non-active time/duration/period of the DTX and for detection of a DCI (or a DCI format). The wireless device may not monitor one of the at least two PDCCH candidates in/for/of the at least two search space sets, for example, during/in the non-active time/duration/period of the DTX and for detection of a DCI (or a DCI format). The wireless device may not monitor one of the at least two PDCCH candidates in/for/of the at least two search space sets, for example, during/in the non-active time/duration/period of the DTX and in one of the two PDCCH monitoring occasions.

The wireless device may monitor the one of the two PDCCH candidates in/for/of the two search space sets, for example, based on the non-active time/duration/period of the DTX. The wireless device may monitor the one of the two PDCCH candidates in/for/of the two search space sets, for example, based on not monitoring the other PDCCH candidate of the two PDCCH candidates, for example, during/in/within the non-active time/duration/period of the DTX. The wireless device may monitor the one of the two PDCCH candidates in/for/of the two search space sets, for example, based on a PDCCH monitoring occasion of the other PDCCH candidate of the two PDCCH candidates overlapping in at least one symbol with the non-active time/duration/period of the DTX. The wireless device may monitor the one of the two PDCCH candidates in/for/of the two search space sets, for example, based on a PDCCH monitoring occasion of the other PDCCH candidate of the two PDCCH candidates being in/within/during the non-active time/duration/period of the DTX.

The one of the two PDCCH candidates that is monitored by the wireless device may be the first PDCCH candidate. The other PDCCH candidate of the two PDCCH candidates that is not monitored by the wireless device may be the second PDCCH candidate. The one of the two PDCCH monitoring occasions that is monitored by the wireless device may be a first PDCCH monitoring occasion of the two PDCCH monitoring occasions. The one of the two PDCCH monitoring occasions, of the other PDCCH candidate of the two PDCCH candidates, that is not monitored by the wireless device may be a second PDCCH monitoring occasion.

The wireless device may monitor the first PDCCH candidate (e.g., PDCCH candidate 1 in FIG. 20 and FIG. 21) of the two PDCCH candidates in/for/of the first space set, for example, during/in the non-active time/duration/period of the DTX. The wireless device may monitor the first PDCCH candidate in/for/of the first space set associated with the first coreset, for example, during/in the non-active time/duration/period of the DTX. The wireless device may monitor the first PDCCH candidate in/for/of the first search space set, for example, during/in the non-active time/duration/period of the DTX and for detection of the DCI (or the DCI format). The wireless device may monitor the first PDCCH candidate in/for/of the first search space set, for example, during/in the non-active time/duration/period of the DTX and in a first PDCCH monitoring occasion (e.g., PDCCH monitoring occasion 1 in FIG. 17).

The wireless device may not monitor a second PDCCH candidate (e.g., PDCCH candidate 2 in FIG. 20 and FIG. 21) of the two PDCCH candidates in/for/of the second space set, for example, during/in the non-active time/duration/period of the DTX. The wireless device may not monitor the second PDCCH candidate in/for/of the second space set associated with the second coreset, for example, during/in the non-active time/duration/period of the DTX. The wireless device may not monitor the second PDCCH candidate in/for/of the second search space set, for example, during/in the non-active time/duration/period of the DTX and for detection of the DCI (or the DCI format). The wireless device may not monitor the second PDCCH candidate in/for/of the second search space set, for example, during/in the non-active time/duration/period of the DTX and for detection of a second repetition of the DCI (or the DCI format). The wireless device may not monitor the second PDCCH candidate in/for/of the second search space set, for example, during/in the non-active time/duration/period of the DTX and in a second PDCCH monitoring occasion (e.g., PDCCH monitoring occasion 2 in FIG. 17).

The wireless device may receive/detect the DCI. The wireless device may receive the DCI, for example, via PDCCH,. The wireless device may receive a PDCCH reception with/comprising/carrying the DCI. The PDCCH reception may be the DCI. The wireless device may receive the DCI, for example, in/during/within the non-active time/duration/period of the DTX.

The wireless device may receive/detect the DCI, for example, via a PDCCH candidate of the two PDCCH candidates. The PDCCH reception may be the PDCCH candidate. The PDCCH candidate may be the one of the two PDCCH candidates monitored by the wireless device, for example, during in/during/within the non-active time/duration/period of the DTX.

The wireless device may receive the DCI, for example, via a PDCCH monitoring occasion of the two PDCCH monitoring occasions. The PDCCH monitoring occasion may be the one of the two PDCCH monitoring occasions monitored by the wireless device, for example, during in/during/within the non-active time/duration/period of the DTX.

The DTX may be the first DTX of the cell. The first PDCCH monitoring occasion may be, for example, in/during/within the non-active time/duration/period of the first DTX. The first PDCCH monitoring occasion may overlap in time (e.g., in at least one symbol) with the non-active time/duration/period of the first DTX. At least one symbol of the first PDCCH monitoring occasion may be, for example, in/during/within the non-active time/duration/period of the first DTX. EA (e.g., each) symbol of the first PDCCH monitoring occasion may be, for example, in/during/within the non-active time/duration/period of the first DTX.

The wireless device may not monitor the first PDCCH candidate of the two PDCCH candidates, for example, during/in the non-active time/duration/period of the first DTX. The wireless device may not monitor the first PDCCH candidate in/for/of the first space set associated with the first coreset, for example, during/in the non-active time/duration/period of the first DTX. The wireless device may not monitor the first PDCCH candidate in/for/of the first search space set, for example, during/in the non-active time/duration/period of the first DTX and for detection of the DCI (or the DCI format). The wireless device may not monitor the first PDCCH candidate in/for/of the first search space set, for example, during/in the non-active time/duration/period of the first DTX and for detection of a first repetition of the DCI (or the DCI format). The wireless device may not monitor the first PDCCH candidate in/for/of the first search space set, for example, during/in the non-active time/duration/period of the first DTX and in the first PDCCH monitoring occasion (e.g., PDCCH monitoring occasion 1 in FIG. 17).

The wireless device may not monitor the first PDCCH candidate, for example, during/in the non-active time/duration/period of the first DTX, for example, based on the first PDCCH monitoring occasion being, for example, in/during/within the non-active time/duration/period of the first DTX. The wireless device may not monitor the first PDCCH candidate, for example, during/in the non-active time/duration/period of the first DTX, for example, based on the first PDCCH monitoring occasion overlapping in time (e.g., in at least one symbol) with the non-active time/duration/period of the first DTX. The wireless device may not monitor the first PDCCH candidate, for example, during/in the non-active time/duration/period of the first DTX, for example, based on the first PDCCH candidate overlapping in time (e.g., in at least one symbol) with the non-active time/duration/period of the first DTX.

The one or more configuration parameters may not comprise one or more second DTX configuration parameters of a second DTX of the cell (e.g., the second DTX is not configured). The wireless device may monitor the second PDCCH candidate of the two PDCCH candidates. The wireless device may monitor the second PDCCH candidate of the two PDCCH candidates, for example, based on the one or more configuration parameters not comprising the one or more second DTX configuration parameters of the second DTX of the cell.

The one or more configuration parameters may comprise the one or more second DTX configuration parameters of the second DTX of the cell. The second DTX may not be activated by the wireless device and/or the base station. The wireless device may not receive a control command (e.g., DCI format 2_9, DCI format 2_10, and the like) indicating activation of the second DTX. The wireless device may monitor the second PDCCH candidate of the two PDCCH candidates. The wireless device may monitor the second PDCCH candidate of the two PDCCH candidates, for example, based on the second DTX not being activated.

The one or more configuration parameters may comprise the one or more second DTX configuration parameters of the second DTX of the cell. The second DTX may be activated by the wireless device and/or the base station. The wireless device may receive a control command (e.g., control command 1720 in FIG. 17, DCI format 2_9, DCI format 2_10, and the like) indicating activation of the second DTX. The second PDCCH monitoring occasion may be, for example, in/during/within an active time/duration/period of the second DTX. The second PDCCH monitoring occasion may overlap in time with the active time/duration/period of the second DTX. At least one symbol of the second PDCCH monitoring occasion may be, for example, in/during/within the active time/duration/period of the second DTX. EA (e.g., each) symbol of the second PDCCH monitoring occasion may be, for example, in/during/within the active time/duration/period of the second DTX. The second PDCCH monitoring occasion may be, for example, in/during/within the active time/duration/period of the second DTX and the non-active time/duration/period of the first DTX. The second PDCCH monitoring occasion may overlap in time with the active time/duration/period of the second DTX and the non-active time/duration/period of the first DTX. At least one symbol of the second PDCCH monitoring occasion may be, for example, in/during/within the active time/duration/period of the second DTX and the non-active time/duration/period of the first DTX. EA (e.g., each) symbol of the second PDCCH monitoring occasion may be, for example, in/during/within the active time/duration/period of the second DTX and the non-active time/duration/period of the first DTX.

The wireless device may monitor the second PDCCH candidate of the two PDCCH candidates. The wireless device may monitor the second PDCCH candidate of the two PDCCH candidates, for example, during/in the active time/duration/period of the second DTX. The wireless device may monitor the second PDCCH candidate in/for/of the second space set associated with the second coreset, for example, during/in the active time/duration/period of the second DTX. The wireless device may monitor the second PDCCH candidate in/for/of the second search space set, for example, during/in the active time/duration/period of the second DTX and for detection of the DCI (or the DCI format). The wireless device may monitor the second PDCCH candidate in/for/of the second search space set, for example, during/in the active time/duration/period of the second DTX and in the second PDCCH monitoring occasion (e.g., PDCCH monitoring occasion 2 in FIG. 17).

The wireless device may monitor the second PDCCH candidate, for example, during/in the active time/duration/period of the second DTX, for example, based on the second PDCCH monitoring occasion being, for example, in/during/within the active time/duration/period of the second DTX. The wireless device may monitor the second PDCCH candidate, for example, during/in the active time/duration/period of the second DTX, for example, based on the second PDCCH monitoring occasion overlapping in time (e.g., in at least one symbol) with the active time/duration/period of the second DTX. The wireless device may monitor the second PDCCH candidate, for example, during/in the active time/duration/period of the second DTX, for example, based on the second PDCCH candidate overlapping in time (e.g., in at least one symbol) with the active time/duration/period of the second DTX.

The wireless device may monitor the second PDCCH candidate of the two PDCCH candidates, for example, during/in the non-active time/duration/period of the first DTX. The wireless device may monitor the second PDCCH candidate in/for/of the second space set associated with the second coreset, for example, during/in the non-active time/duration/period of the first DTX. The wireless device may monitor the second PDCCH candidate in/for/of the second search space set, for example, during/in the non-active time/duration/period of the first DTX and for detection of the DCI (or the DCI format). The wireless device may monitor the second PDCCH candidate in/for/of the second search space set, for example, during/in the non-active time/duration/period of the first DTX and in the second PDCCH monitoring occasion (e.g., PDCCH monitoring occasion 2 in FIG. 17).

The wireless device may receive/detect the DCI. The wireless device may receive the DCI, for example, via PDCCH. The wireless device may receive a PDCCH reception. The PDCCH reception may be, for example, the DCI. The PDCCH reception may be, for example, the second PDCCH candidate. The PDCCH reception may, for example, comprise/carry (or may be with) the DCI. The wireless device may receive the DCI, for example, in/during/within the non-active time/duration/period of the first DTX. The wireless device may receive the DCI, for example, in/during/within the active time/duration/period of the second DTX.

The wireless device may receive/detect the DCI. The wireless device may receive/detect the DCI, for example, via the second PDCCH candidate of the at least two PDCCH candidates and in the second PDCCH monitoring occasion. The second PDCCH candidate may be the one of the at least two PDCCH candidates monitored by the wireless device. The second PDCCH candidate may be the one of the at least two PDCCH candidates monitored by the wireless device, for example, during in/during/within the non-active time/duration/period of the first DTX. The second PDCCH candidate may be the one of the at least two PDCCH candidates monitored by the wireless device, for example, in/during/within the active time/duration/period of the second DTX. The first PDCCH candidate may be the one of the at least two PDCCH candidates that is not monitored by the wireless device. The first PDCCH candidate may be the one of the at least two PDCCH candidates that is not monitored by the wireless device, for example, in/during/within the non-active time/duration/period of the first DTX.

The wireless device may receive the DCI, for example, via the second PDCCH monitoring occasion of the at least two PDCCH monitoring occasions. The second PDCCH monitoring occasion may be the one of the at least two PDCCH monitoring occasions monitored by the wireless device. The second PDCCH monitoring occasion may be the one of the at least two PDCCH monitoring occasions monitored by the wireless device, for example, in/during/within the non-active time/duration/period of the first DTX. The second PDCCH monitoring occasion may be the one of the at least two PDCCH monitoring occasions monitored by the wireless device, for example, in/during/within the active time/duration/period of the second DTX. The first PDCCH monitoring occasion may be the one of the at least two PDCCH monitoring occasions that is not monitored by the wireless device. The first PDCCH monitoring occasion may be the one of the at least two PDCCH monitoring occasions that is not monitored by the wireless device, for example, in/during/within the non-active time/duration/period of the first DTX.

The PDCCH candidate of the two PDCCH candidates received/detected in the PDCCH monitoring occasion may be the second PDCCH candidate received/detected in the second PDCCH monitoring occasion. The DTX may be the second DTX of the cell. The second PDCCH monitoring occasion may be in/during/within the non-active time/duration/period of the second DTX. The second PDCCH monitoring occasion may overlap in time with the non-active time/duration/period of the second DTX. For example, at least one symbol of the second PDCCH monitoring occasion may be, for example, in/during/within the non-active time/duration/period of the second DTX. For example, each symbol of the second PDCCH monitoring occasion may be, for example, in/during/within the non-active time/duration/period of the second DTX.

The wireless device may not monitor the second PDCCH candidate (e.g., PDCCH candidate 2 in FIG. 20 and FIG. 21) of the two PDCCH candidates. The wireless device may not monitor the second PDCCH candidate (e.g., PDCCH candidate 2 in FIG. 20 and FIG. 21) of the two PDCCH candidates, for example, during/in the non-active time/duration/period of the second DTX. The wireless device may not monitor the second PDCCH candidate in/for/of the second space set associated with the second coreset. The wireless device may not monitor the second PDCCH candidate in/for/of the second space set associated with the second coreset, for example, during/in the non-active time/duration/period of the second DTX. The wireless device may not monitor the second PDCCH candidate in/for/of the second search space set. The wireless device may not monitor the second PDCCH candidate in/for/of the second search space set, for example, during/in the non-active time/duration/period of the second DTX and for detection of the DCI (or the DCI format). The wireless device may not monitor the second PDCCH candidate in/for/of the second search space set. The wireless device may not monitor the second PDCCH candidate in/for/of the second search space set, for example, during/in the non-active time/duration/period of the second DTX and for detection of a second repetition of the DCI (or the DCI format). The wireless device may not monitor the second PDCCH candidate in/for/of the second search space set. The wireless device may not monitor the second PDCCH candidate in/for/of the second search space set, for example, during/in the non-active time/duration/period of the second DTX and in the second PDCCH monitoring occasion (e.g., PDCCH monitoring occasion 2 in FIG. 17).

The wireless device may not monitor the second PDCCH candidate. The wireless device may not monitor the second PDCCH candidate, for example, during/in the non-active time/duration/period of the second DTX, for example, based on the second PDCCH monitoring occasion being, for example, in/during/within the non-active time/duration/period of the second DTX. The wireless device may not monitor the second PDCCH candidate, for example, during/in the non-active time/duration/period of the second DTX, for example, based on the second PDCCH monitoring occasion overlapping in time (e.g., in at least one symbol) with the non-active time/duration/period of the second DTX. The wireless device may not monitor the second PDCCH candidate, for example, during/in the non-active time/duration/period of the second DTX, for example, based on the second PDCCH candidate overlapping in time (e.g., in at least one symbol) with the non-active time/duration/period of the second DTX.

The one or more configuration parameters may not comprise one or more first DTX configuration parameters of a first DTX of the cell (e.g., the first DTX is not configured). The wireless device may monitor the first PDCCH candidate (e.g., PDCCH candidate 1 in FIG. 20 and FIG. 21) of the two PDCCH candidates. The wireless device may monitor the first PDCCH candidate, for example, based on the one or more configuration parameters not comprising the one or more first DTX configuration parameters of the first DTX of the cell.

The one or more configuration parameters may comprise the one or more first DTX configuration parameters of the first DTX of the cell. The first DTX may not be activated by the wireless device and/or the base station. The wireless device may not receive a control command (e.g., DCI format 2_9, DCI format 2_10, and the like) indicating activation of the first DTX. The wireless device may monitor the first PDCCH candidate (e.g., PDCCH candidate 1 in FIG. 20 and FIG. 21) of the two PDCCH candidates. The wireless device may monitor the first PDCCH candidate, for example, based on the first DTX not being activated.

The one or more configuration parameters may comprise the one or more first DTX configuration parameters of the first DTX of the cell. The first DTX may be activated by the wireless device and/or the base station. The wireless device may receive a control command (e.g., control command 1720 in FIG. 17, DCI format 2_9, DCI format 2_10, and the like) indicating activation of the first DTX. The first PDCCH monitoring occasion may be, for example, in/during/within an active time/duration/period of the first DTX. The first PDCCH monitoring occasion may overlap in time with the active time/duration/period of the first DTX. At least one symbol of the first PDCCH monitoring occasion may be, for example, in/during/within the active time/duration/period of the first DTX. EA (e.g., each) symbol of the first PDCCH monitoring occasion may be, for example, in/during/within the active time/duration/period of the first DTX. The first PDCCH monitoring occasion may be, for example, in/during/within the active time/duration/period of the first DTX and the non-active time/duration/period of the second DTX. The first PDCCH monitoring occasion may overlap in time with the active time/duration/period of the first DTX and the non-active time/duration/period of the second DTX. At least one symbol of the first PDCCH monitoring occasion may be, for example, in/during/within the active time/duration/period of the first DTX and the non-active time/duration/period of the second DTX. EA (e.g., each) symbol of the first PDCCH monitoring occasion may be, for example, in/during/within the active time/duration/period of the first DTX and the non-active time/duration/period of the second DTX.

The wireless device may monitor the first PDCCH candidate (e.g., PDCCH candidate 1 in FIG. 20 and FIG. 21) of the two PDCCH candidates. The wireless device may monitor the first PDCCH candidate of the two PDCCH candidates, for example, during/in the active time/duration/period of the first DTX. The wireless device may monitor the first PDCCH candidate in/for/of the first space set associated with the first coreset. The wireless device may monitor the first PDCCH

EP 4 531 322 A1

candidate in/for/of the first space set associated with the first coreset, for example, during/in the active time/duration/period of the first DTX. The wireless device may monitor the first PDCCH candidate in/for/of the first search space set. The wireless device may monitor the first PDCCH candidate in/for/of the first search space set, for example, during/in the active time/duration/period of the first DTX and for detection of the DCI (or the DCI format). The wireless device may monitor the first PDCCH candidate in/for/of the first search space set, for example, during/in the active time/duration/period of the first DTX and in the first PDCCH monitoring occasion (e.g., PDCCH monitoring occasion 1 in FIG. 17).

The wireless device may monitor the first PDCCH candidate. The wireless device may monitor the first PDCCH candidate, for example, during/in the active time/duration/period of the first DTX, for example, based on the first PDCCH monitoring occasion being, for example, in/during/within the active time/duration/period of the first DTX. The wireless device may monitor the first PDCCH candidate, for example, during/in the active time/duration/period of the first DTX, for example, based on the first PDCCH monitoring occasion overlapping in time (e.g., in at least one symbol) with the active time/duration/period of the first DTX. The wireless device may monitor the first PDCCH candidate, for example, during/in the active time/duration/period of the first DTX, for example, based on the first PDCCH candidate overlapping in time (e.g., in at least one symbol) with the active time/duration/period of the first DTX.

The wireless device may monitor the first PDCCH candidate of the two PDCCH candidates, for example, during/in the non-active time/duration/period of the second DTX. The wireless device may monitor the first PDCCH candidate in/for/of the first space set associated with the first coreset, for example, during/in the non-active time/-duration/period of the second DTX. The wireless device may monitor the first PDCCH candidate in/for/of the first search space set, for example, during/in the non-active time/duration/period of the second DTX and for detection of the DCI (or the DCI format). The wireless device may monitor the first PDCCH candidate in/for/of the first search space set, for example, during/in the non-active time/duration/period of the second DTX and in the first PDCCH monitoring occasion (e.g., PDCCH monitoring occasion 1 in FIG. 17).

The wireless device may receive/detect the DCI. The wireless device may receive the DCI, for example, via PDCCH. The wireless device may receive a PDCCH reception. The PDCCH reception may be, for example, the DCI. The PDCCH reception may be, for example, the first PDCCH candidate. The PDCCH reception may, for example, comprise/carry (or may be with) the DCI. The wireless device may receive the DCI, for example, in/during/within the non-active time/duration/period of the second DTX. The wireless device may receive the DCI, for example, in/during/within the active time/duration/period of the first DTX.

The wireless device may receive/detect the DCI, for example, via the first PDCCH candidate of the two PDCCH candidates and in the first PDCCH monitoring occasion. The first PDCCH candidate may be the one of the two PDCCH candidates monitored by the wireless device. The first PDCCH candidate may be the one of the two PDCCH candidates monitored by the wireless device, for example, in/during/within the non-active time/duration/period of the second DTX. The first PDCCH candidate may be the one of the two PDCCH candidates monitored by the wireless device, for example, in/during/within the active time/duration/period of the first DTX. The second PDCCH candidate may be the one of the two PDCCH candidates that is not monitored by the wireless device. The second PDCCH candidate may be the one of the two PDCCH candidates that is not monitored by the wireless device, for example, in/during/within the non-active time/-duration/period of the second DTX.

The wireless device may receive the DCI, for example, via the first PDCCH monitoring occasion of the two PDCCH monitoring occasions. The first PDCCH monitoring occasion may be the one of the two PDCCH monitoring occasions monitored by the wireless device. The first PDCCH monitoring occasion may be the one of the two PDCCH monitoring occasions monitored by the wireless device, for example, in/during/within the non-active time/duration/period of the second DTX. The first PDCCH monitoring occasion may be the one of the two PDCCH monitoring occasions monitored by the wireless device, for example, in/during/within the active time/duration/period of the first DTX. The second PDCCH monitoring occasion may be the one of the two PDCCH monitoring occasions that is not monitored by the wireless device. The second PDCCH monitoring occasion may be the one of the two PDCCH monitoring occasions that is not monitored by the wireless device, for example, in/during/within the non-active time/duration/period of the second DTX. The PDCCH candidate of the two PDCCH candidates received/detected in the PDCCH monitoring occasion may be the first PDCCH candidate received/detected in the first PDCCH monitoring occasion.

The PDCCH reception with/carrying/comprising the DCI may include/comprise (or be associated with) the two PDCCH candidates from the two search space sets. The PDCCH reception with/carrying/comprising the DCI may include/comprise (or be associated with) the two PDCCH candidates from the two search space sets, for example, based on monitoring the one of the two PDCCH candidates in/of/for/from the two search space sets for detection of the DCI (e.g., in FIG. 20), for example, during/in the non-active time/duration/period of the DTX. The PDCCH reception with/carrying/-comprising the DCI may include/comprise (or be associated with) the two PDCCH candidates from the two search space sets, for example, when/if the wireless device monitors the one of the two PDCCH candidates in/of/for/from the two search space sets, for example, during/in the non-active time/duration/period of the DTX. The PDCCH reception with/carrying/-comprising the DCI may include/comprise (or be associated with) the two PDCCH candidates from the two search space sets, for example, based on monitoring either the first PDCCH candidate in/of/for/from the first search space set or the second PDCCH candidate in/of/for/from the second search space set for detection of the DCI, for example, during/in the non-active time/duration/period of the DTX. The PDCCH reception with/carrying/comprising the DCI may include/comprise (or be associated with) the two PDCCH candidates from the two search space sets, for example, when/if the wireless device monitors either the first PDCCH candidate in/of/for/from the first search space set or the second PDCCH candidate in/of/for/from the second search space set for detection of the DCI, for example, during/in the non-active time/duration/period of the DTX.

The PDCCH reception with/carrying/comprising the DCI may include/comprise (or be associated with) the two PDCCH candidates from the two search space sets, for example, when/if the wireless device is not required to monitor the one of the two PDCCH candidates in/of/for/from the two search space sets, for example, during/in the non-active time/duration/period of the DTX. The PDCCH reception with/carrying/comprising the DCI may include/comprise (or be associated with) the two PDCCH candidates from the two search space sets, for example, when/if the wireless device is not required to monitor either the first PDCCH candidate in/of/for/from the first search space set or the second PDCCH candidate in/of/for/from the second search space set for detection of the DCI, for example, during/in the non-active time/duration/period of the DTX.

The wireless device may assume as PDCCH repetition, for example, if the PDCCH reception with/carrying/comprising the DCI includes/comprises (or is associated with) the two PDCCH candidates from the two search space sets. The behavior of the wireless device may be the same as that of monitoring both of the two PDCCH candidates (e.g., in FIG. 19), for example, even though the wireless device does not monitor (or is not required to monitor) one of the two PDCCH candidates, for example, during/in the non-active time/duration/period of the DTX. The behavior of the wireless device may be the same as that of monitoring both of the two PDCCH candidates (e.g., in FIG. 19), for example, based on (e.g., upon) reception of DCI via a monitored PDCCH candidate of the two PDCCH candidates.

A PDCCH monitoring occasion may be the union of at least two PDCCH monitoring occasions of/for at least two PDCCH candidates. A PDCCH monitoring occasion may be the union of at least two PDCCH monitoring occasions of/for at least two PDCCH candidates, for example, if the PDCCH reception includes/comprises (or is associated with) the at least two PDCCH candidates from the at least two search space sets. For example, the PDCCH monitoring occasion may be the union of the first PDCCH monitoring occasion and the second PDCCH monitoring occasion.

The start of the PDCCH reception may be the start of a PDCCH candidate that starts earlier in time. The start of the PDCCH reception may be the start of a PDCCH candidate, among at least two PDCCH candidates, that starts earlier (e.g., earliest) in time, for example, if the PDCCH reception includes/comprises (or is associated with) the at least two PDCCH candidates from the at least two search space sets. The end of the PDCCH reception may be the end of a PDCCH candidate that ends later in time. The end of the PDCCH reception may be the end of a PDCCH candidate, among the at least two PDCCH candidates, that ends later (e.g., latest) in time, for example, if the PDCCH reception includes/comprises (or is associated with) the at least two PDCCH candidates from the two search space sets.

The wireless device may complete a beam failure recovery. The wireless device may complete a beam failure recovery, for example, based on receiving the DCI. The wireless device may complete a beam failure recovery, for example, based on receiving the PDCCH reception with the DCI.

The wireless device may send (e.g., transmit) uplink signals (e.g., PUCCH, PUSCH, SRS, Uplink transmission in FIG. 19 and FIG. 20) with/using a transmission power. The wireless device may send (e.g., transmit) uplink signals (e.g., PUCCH, PUSCH, SRS, Uplink transmission 2030/2031 in FIG. 19 and FIG. 20) with/using a transmission power determined, for example, based on a candidate reference signal of (or identified for/during) the beam failure recovery. The wireless device may send (e.g., transmit) the uplink signals with/using the transmission power. The wireless device may send (e.g., transmit) the uplink signals with/using the transmission power, for example, a number (or quantity) of symbols (e.g., 28 symbols) starting from a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The wireless device may send (e.g., transmit) uplink signals (e.g., PUCCH, PUSCH, SRS, Uplink transmission in FIG. 19 and FIG. 20) with/using a transmission power. The wireless device may send (e.g., transmit) uplink signals (e.g., PUCCH, PUSCH, SRS, Uplink transmission in FIG. 19 and FIG. 20) with/using a transmission power determined, for example, based on default power control parameters (e.g., target-received power, pathloss compensation factor, closed-loop index) indicated/associated with an uplink power control with a lowest/smallest uplink power control index/identity. The wireless device may send (e.g., transmit) the uplink signals with/using the transmission power. The wireless device may send (e.g., transmit) the uplink signals with/using the transmission power, for example, a number (or quantity) of symbols (e.g., 28 symbols) starting from a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The wireless device may monitor downlink control channels (e.g., PDCCH, Downlink reception in FIG. 19 and FIG. 20). The wireless device may monitor, via one or more coresets, downlink control channels (e.g., PDCCH, Downlink reception in FIG. 19 and FIG. 20), for example, based on a candidate reference signal of (or identified for/during) the beam failure recovery. The wireless device may monitor the downlink control channels. The wireless device may monitor, via the one or more coresets, the downlink control channels, for example, based on the candidate reference signal, for example, a number of symbols (e.g., 28 symbols) starting from a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate. At least one DM-RS antenna port of a downlink reception (e.g., DCI) via a coreset of the one or more coresets may be quasi co-located with the candidate reference signal.

The wireless device may receive downlink receptions (e.g., PDSCH, aperiodic CSI-RS, Downlink reception in FIG. 19 and FIG. 20). The wireless device may receive downlink receptions (e.g., PDSCH, aperiodic CSI-RS, Downlink reception in FIG. 19 and FIG. 20), for example, based on a candidate reference signal of (or identified for/during) the beam failure recovery. The wireless device may receive the downlink receptions, for example, based on the candidate reference signal, for example, a number of symbols (e.g., 28 symbols) starting from a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate. At least one DM-RS antenna port of a downlink reception of the downlink receptions may be quasi co-located with the candidate reference signal.

As shown in 1940 in FIG. 19 and/or in 2040 in FIG. 20, a wireless device may use a default PDCCH candidate (or a default search space set) to determine parameters (e.g., processing time(s), PUCCH resource to transmit HARQ-ACK, transmission power), for example, for uplink transmission and/or downlink reception. As shown in 2140 in FIG. 21, a wireless device may use a first PDCCH candidate (e.g., PDCCH candidate 1, or a search space set 1) to determine parameters (e.g., processing time(s), PUCCH resource to transmit HARQ-ACK, transmission power), for example, for uplink transmission and/or downlink reception.

The DCI may schedule/trigger an uplink transmission (e.g., PUSCH transmission, PUCCH transmission, aperiodic SRS transmission, PRACH transmission, Uplink transmission in FIG. 19 and FIG. 20). The wireless device may determine, for the uplink transmission, a transmission power. The wireless device may send (e.g., transmit) the uplink transmission with/using the transmission power. The wireless device may determine the transmission power, for example, based on a number (or quantity) of symbols, for example, after a last/ending symbol of the PDCCH reception with the DCI and before a starting/first symbol of the uplink transmission. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate. The wireless device may determine the transmission power, for example, based on transmit power control (TPC) values received the number of symbols, for example, before an uplink transmission occasion of the uplink transmission.

The DCI may be, for example, a PDCCH order initiating/triggering a random-access procedure. The wireless device may determine, for the uplink transmission (e.g., PRACH transmission, preamble), a PRACH occasion. The wireless device may send (e.g., transmit) the uplink transmission (e.g., PRACH transmission, preamble) in/via the PRACH occasion. The wireless device may determine the PRACH occasion, for example, based on a last/ending symbol of the PDCCH reception with the DCI (e.g., an uplink slot that overlaps with the last/ending symbol of the PDCCH reception with the DCI). The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The DCI may schedule/trigger a downlink reception (e.g., PDSCH reception, aperiodic CSI-RS reception). The wireless device may determine, for transmission of HARQ-ACK information/feedback of the downlink reception, a PUCCH resource. The wireless device may send (e.g., transmit), via the PUCCH resource, the HARQ-ACK information/feedback (e.g., uplink transmission 1930 in FIG. 19 and uplink transmission 2030 in FIG. 20) of the downlink reception. The wireless device may determine the PUCCH resource, for example, based on a coreset of the PDCCH reception with the DCI. The coreset of the PDCCH reception with the DCI may be a coreset associated with a search space set with a smaller search space set index. The coreset of the PDCCH reception with the DCI may be a coreset associated with a search space set, among the two search space sets, with a smaller search space set index, for example, if the PDCCH reception includes/comprises (or is associated with) the two PDCCH candidates from the two search space sets. The wireless device may determine the PUCCH resource, for example, based on a number (or quantity) of control channel elements (CCEs) of the coreset associated with the search space set. The first coreset associated with the first search space set and the second coreset associated with the second search space set may comprise the coreset. The wireless device may or may not receive the DCI via the coreset. The coreset (or the search space set) may be a default coreset (or a default search space set).

The DCI may comprise a PDCCH monitoring adaptation field. The PDCCH monitoring adaptation field in the DCI may indicate to the wireless device to start PDCCH monitoring according to search space sets with a first group index and to stop PDCCH monitoring according to search space sets with a second group index. The wireless device may use the indication in/by the PDCCH monitoring adaptation field at the beginning of a first/starting/earliest time slot that is at least a number (or quantity) of symbols. The wireless device may use the indication in/by the PDCCH monitoring adaptation field at the beginning of a first/starting/earliest time slot that is at least a number (or quantity) of symbols, for example, after the last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The DCI may be a DCI format 2_1 indicating downlink pre-emption. The wireless device may ignore/discard (or may assume no transmission in) one or more symbols among a set of symbols. The DCI format 2_1 may indicate the one or more symbols among the set of symbols. The set of symbols may be a number of symbols prior to a starting/first/earliest symbol of the PDCCH reception with the DCI (or with the DCI format 2_1). The starting/first/earliest symbol of the PDCCH reception with the DCI may be a starting/first/earliest symbol of a PDCCH candidate that starts earlier in time (e.g., PDCCH candidate 1 in FIG. 19 and FIG. 20). The starting/first/earliest symbol of the PDCCH reception with the DCI may be a starting/first/earliest symbol of a PDCCH candidate, among the two PDCCH candidates, that starts earlier in time (e.g., PDCCH candidate 1 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The DCI may be a DCI format 2_4 indicating uplink cancellation. The wireless device may cancel/ignore/discard (or may assume no transmission in) one or more symbols among a set of symbols of the uplink transmission. The DCI format 2_4 may indicate a number of the one or more symbols. The wireless device may determine a starting/first/earliest symbol of the one or more symbols. The wireless device may determine a starting/first/earliest symbol of the one or more symbols, for example, based on a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The wireless device may determine whether to receive or not receive (or ignore) the downlink reception (e.g., downlink reception 1931 in FIG. 19 and downlink reception 2031 in FIG. 20). The wireless device may determine whether to receive or not receive (or ignore) the downlink reception (e.g., downlink reception 1931 in FIG. 19 and downlink reception 2031 in FIG. 20), for example, based on a processing time (e.g., PDSCH processing time) that starts, for example, after a last/ending symbol of the PDCCH reception with the DCI. The wireless device may determine whether to send (e.g., transmit) or not send (e.g., transmit) (or ignore) the uplink reception. The wireless device may determine whether to send (e.g., transmit) or not send (e.g., transmit) (or ignore) the uplink reception, for example, based on a processing time (e.g.,

PUSCH processing time) that starts, for example, after a last/ending symbol of the PDCCH reception with the DCI. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The wireless device may determine a starting symbol of the downlink reception and/or the uplink transmission (e.g., uplink transmission 1930/downlink reception 1931 in FIG. 19 and uplink transmission 2030/downlink reception 2031 in FIG. 20). The wireless device may determine a starting symbol of the downlink reception and/or the uplink transmission (e.g., uplink transmission 1930/downlink reception 1931 in FIG. 19 and uplink transmission 2030/downlink reception 2031 in FIG. 20), for example, based on a last/ending symbol of the PDCCH reception with the DCI. The wireless device may receive/send (e.g., transmit) the downlink reception/uplink transmission, for example, based on the starting symbol. The last/ending symbol of the PDCCH reception with the DCI may be a last/ending symbol of a PDCCH candidate that ends later in time (e.g., PDCCH candidate 2 in FIG. 19 and FIG. 20). The last/ending symbol of the PDCCH reception with the DCI may be a last/ending symbol of a PDCCH candidate, among the two PDCCH candidates, that ends later in time (e.g., PDCCH candidate 2 in FIG. 19 and FIG. 20), for example, if the PDCCH reception includes/comprises (or is associated with) the two PDCCH candidates from the two search space sets. The wireless device may or may not receive the PDCCH candidate. The PDCCH candidate may be a default PDCCH candidate.

The DCI may schedule/trigger a downlink reception (e.g., PDSCH reception, Downlink reception in FIG. 19 and FIG. 20). The wireless device may determine a starting resource block (RB) of the downlink reception. The wireless device may receive the downlink reception, for example, based on the starting RB. The wireless device may determine the starting RB, for example, based on a lowest RB of a coreset of the PDCCH reception with the DCI. The coreset of the PDCCH reception with the DCI may be a coreset with a smaller/lower coreset index/identity. The coreset of the PDCCH reception with the DCI may be a coreset, among the first coreset and the second coreset, with a smaller/lower coreset index/identity, for example, if the PDCCH reception includes/comprises (or is associated with) the two PDCCH candidates from the two search space sets. The wireless device may or may not receive the DCI via the coreset. The coreset may be a default coreset.

In FIG. 19 and FIG. 20, the PDCCH candidate, among the two PDCCH candidates, that ends later in time is PDCCH candidate 2. The wireless device may not receive the DCI via the PDCCH candidate 2. The wireless device may receive the DCI via the PDCCH candidate 2.

In FIG. 19 and FIG. 20, the PDCCH candidate, among the two PDCCH candidates, that starts earlier in time is PDCCH candidate 1. The wireless device may not receive the DCI via the PDCCH candidate 1. The wireless device may receive the DCI via the PDCCH candidate 1.

A wireless device may receive, from a base station, one or more messages (e.g., RRC messages, RRC reconfiguration messages) comprising one or more configuration parameters. The base station may send (e.g., transmit) the one or more messages. The one or more configuration parameters may indicate/provide/comprise, by a first DTX higher layer parameter (e.g., *TRP-DTX-Config*) of the one or more configuration parameters, a first DTX configuration of a cell (e.g., a serving cell, a non-serving cell, a candidate/target/neighbor cell). The one or more configuration parameters may indicate/provide/comprise, by a second DTX higher layer parameter (e.g., *TRP-DTX Config2*) of the one or more configuration parameters, a second DTX configuration of the cell, for example, if the wireless device sends (e.g., transmits)/provides/reports a capability of two DTX per/for cell (e.g., *twoDTXcapability*).

The wireless device may receive a PDCCH reception. The wireless device may receive the PDCCH reception, for example, during/in a non-active time/duration/period of a DTX configuration among the first DTX configuration and the second DTX configuration.

The wireless device may not monitor (or may not be required to monitor) one of the two PDCCH candidates from/in the two search space sets linked for PDCCH repetition. The wireless device may not monitor (or may not be required to monitor), for example, during/in the non-active time/duration/period of the DTX configuration, one of the two PDCCH candidates from/in the two search space sets linked for PDCCH repetition.

The wireless device may not monitor (or may not be required to monitor) the first PDCCH candidate of the two PDCCH candidates from/in the first search space set of the two search space sets linked for PDCCH repetition. For example, the wireless device may not monitor (or may not be required to monitor) the first PDCCH candidate of the two PDCCH candidates from/in the first search space set of the two search space sets linked for PDCCH repetition, for example, during/in the non-active time/duration/period of the DTX configuration. The wireless device may monitor the second PDCCH candidate of the two PDCCH candidates. The wireless device may monitor the second PDCCH candidate of the two PDCCH candidates from/in the second search space set of the two search space sets linked for PDCCH repetition. The wireless device may monitor the second PDCCH candidate of the two PDCCH candidates from/in the second search space set of the two search space sets linked for PDCCH repetition, for example, during/in the non-active time/duration/period of the DTX configuration. The wireless device may receive the PDCCH reception, for example, in/via the second PDCCH candidate. The PDCCH reception may be the second PDCCH candidate.

The wireless device may not monitor (or may not be required to monitor) the second PDCCH candidate of the two PDCCH candidates from/in the second search space set of the two search space sets linked for PDCCH repetition. For example, the wireless device may not monitor (or may not be required to monitor) the second PDCCH candidate of the two PDCCH candidates from/in the second search space set of the two search space sets linked for PDCCH repetition, for example, during/in the non-active time/duration/period of the DTX configuration. The wireless device may monitor the first PDCCH candidate of the two PDCCH candidates from/in the first search space set of the two search space sets linked for PDCCH repetition. The wireless device may monitor the first PDCCH candidate of the two PDCCH candidates from/in the first search space set of the two search space sets linked for PDCCH repetition, for example, during/in the non-active time/duration/period of the DTX configuration. The wireless device may receive the PDCCH reception, for example, in/via the first PDCCH candidate. The PDCCH reception may be the first PDCCH candidate.

The PDCCH reception may be, for example, DCI. The PDCCH reception may be, for example, a PDCCH candidate. The PDCCH reception may, for example, carry/comprise (or may be with) DCI. The PDCCH reception may include/comprise the two PDCCH candidates, for example, if the wireless device does not (or is not required to) monitor the one of the two PDCCH candidates, for example, during/in the non-active time/duration/period of the DTX configuration.

The wireless device may send (e.g., transmit)/receive to/from the base station with/using a transmission parameter (e.g., transmission power, PUCCH resource, default TCI state). The wireless device may send (e.g., transmit)/receive to/from the base station with/using a transmission parameter (e.g., transmission power, PUCCH resource, default TCI state), for example, based on a PDCCH candidate, among the two PDCCH candidates, that is not monitored, for example, if the PDCCH reception includes/comprises the two PDCCH candidates. The wireless device may send (e.g., transmit)/receive to/from the base station with/using a transmission parameter (e.g., transmission power, PUCCH resource, default TCI state), for example, based on a PDCCH candidate, among the two PDCCH candidates, that is not monitored, for example, during/in the non-active time/duration/period of the DTX configuration. The wireless device may determine whether to send (e.g., transmit)/receive to/from the base station (e.g., processing time). The wireless device may determine whether to send (e.g., transmit)/receive to/from the base station (e.g., processing time), for example, based on a PDCCH candidate, among the two PDCCH candidates, that is not monitored, for example, if the PDCCH reception includes/comprises the two PDCCH candidates. The wireless device may determine whether to send (e.g., transmit)/receive to/from the base station (e.g., processing time), for example, based on a PDCCH candidate, among the two PDCCH candidates, that is not monitored, for example, during/in the non-active time/duration/period of the DTX configuration.

The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, based on monitoring the one of the two PDCCH candidates in/of/for/from the two search space sets for detection of the DCI (e.g., in FIG. 21), for example, during/in the non-active time/duration/period of the DTX. The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, when/if the wireless device monitors the one of the two PDCCH candidates in/of/for/from the two search space sets, for example, during/in the non-active time/duration/period of the DTX. The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, based on monitoring either the first PDCCH candidate in/of/for/from the first search space set or the second PDCCH candidate in/of/for/from the second search space set for detection of the DCI, for example, during/in the non-active time/duration/period of the DTX. The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, when/if the wireless device monitors either the first PDCCH candidate in/of/for/from the first search space set or the second PDCCH candidate in/of/for/from the second search space set for detection of the DCI, for example, during/in the non-active time/duration/period of the DTX.

The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, when/if the wireless device is not required to monitor the one of the two PDCCH candidates in/of/for/from the two search space sets, for example, during/in the non-active time/duration/period of the DTX. The PDCCH reception with/carrying/comprising the DCI may not include/comprise (or be associated with) the two PDCCH candidates from the two search space sets. The PDCCH reception with/carrying/comprising the DCI may not include/comprise (or be associated with) the two PDCCH candidates from the two search space sets, for example, when/if the wireless device is not required to monitor either the first PDCCH candidate in/of/for/from the first search space set or the second PDCCH candidate in/of/for/from the second search space set for detection of the DCI, for example, during/in the non-active time/duration/period of the DTX.

The wireless device may assume no PDCCH repetition. The wireless device may assume no PDCCH repetition, for example, if the PDCCH reception with/carrying/comprising the DCI does not include/comprise (or is not associated with) the two PDCCH candidates from the two search space sets. The behavior of the wireless device may be based on the monitored PDCCH candidate, for example, based on (e.g., upon) reception of DCI via a monitored PDCCH candidate of the two PDCCH candidates. The behavior of the wireless device may not be based on a PDCCH candidate, among the two PDCCH candidates, that is not monitored.

A PDCCH monitoring occasion may be one of the two PDCCH monitoring occasions monitored by the wireless device. A PDCCH monitoring occasion may be one of the two PDCCH monitoring occasions monitored by the wireless device, for example, during/in the non-active time/duration/period of the DTX, for example, if the PDCCH reception does not include/comprise (or is not associated with) the two PDCCH candidates from the two search space sets.

The PDCCH monitoring occasion may be the first PDCCH monitoring occasion. The PDCCH monitoring occasion may be the first PDCCH monitoring occasion, for example, if the wireless device monitors the first PDCCH candidate and does not monitor the second PDCCH candidate, for example, during/in the non-active time/duration/period of the DTX. The PDCCH monitoring occasion may be the second PDCCH monitoring occasion. The PDCCH monitoring occasion may be the second PDCCH monitoring occasion, for example, if the wireless device monitors the second PDCCH candidate and does not monitor the first PDCCH candidate, for example, during/in the non-active time/duration/period of the DTX.

The start of the PDCCH reception may be the start of the one of the two PDCCH candidates that the wireless device monitors/receives/detects. The start of the PDCCH reception may be the start of the one of the two PDCCH candidates that the wireless device monitors/receives/detects, for example, if the PDCCH reception does not include/-comprise (or is not associated with) the two PDCCH candidates from the two search space sets.

The start of the PDCCH reception may be the start of a PDCCH candidate that the wireless device receives/detects. The start of the PDCCH reception may be the start of a PDCCH candidate that the wireless device receives/detects, for example, if the PDCCH reception does not include/comprise (or is not associated with) the two PDCCH candidates from the two search space sets. The wireless device may receive/detect the first PDCCH candidate. The wireless device may receive/detect the first PDCCH candidate, for example, if the wireless device monitors the first PDCCH candidate and does not monitor the second PDCCH candidate, for example, during/in the non-active time/duration/period of the DTX. The one of the two PDCCH candidates that the wireless device monitors/receives/detects may be the first PDCCH candidate. The start of the PDCCH reception may be the start of the first PDCCH candidate that the wireless device receives/detects. The start of the PDCCH reception may not be the start of the second PDCCH candidate that is not monitored by the wireless device. The wireless device may receive/detect the second PDCCH candidate. The wireless device may receive/detect the second PDCCH candidate, for example, if the wireless device monitors the second PDCCH candidate and does not monitor the first PDCCH candidate, for example, during/in the non-active time/duration/period of the DTX. The one of the two PDCCH candidates that the wireless device monitors/receives/detects may be the second PDCCH candidate. The start of the PDCCH reception may be the start of the second PDCCH candidate that the wireless device receives/detects. The start of the PDCCH reception may not be the start of the first PDCCH candidate that is not monitored by the wireless device.

The end of the PDCCH reception may be the end of the one of the two PDCCH candidates that the wireless device monitors/receives/detects. The end of the PDCCH reception may be the end of the one of the two PDCCH candidates that the wireless device monitors/receives/detects, for example, if the PDCCH reception does not include/comprise (or is not associated with) the two PDCCH candidates from the two search space sets.

The end of the PDCCH reception may be the end of a PDCCH candidate that the wireless device receives/detects. The end of the PDCCH reception may be the end of a PDCCH candidate that the wireless device receives/detects, for example, if the PDCCH reception does not include/comprise (or is not associated with) the two PDCCH candidates from the two search space sets. The wireless device may receive/detect the first PDCCH candidate. The wireless device may receive/detect the first PDCCH candidate, for example, if the wireless device monitors the first PDCCH candidate and does not monitor the second PDCCH candidate, for example, during/in the non-active time/duration/period of the DTX. The one of the two PDCCH candidates that the wireless device monitors/receives/detects may be the first PDCCH candidate. The end of the PDCCH reception may be the end of the first PDCCH candidate that the wireless device receives/detects. The end of the PDCCH reception may not be the start of the second PDCCH candidate that is not monitored by the wireless device. The wireless device may receive/detect the second PDCCH candidate, for example, if the wireless device monitors the second PDCCH candidate and does not monitor the first PDCCH candidate, for example, during/in the non-active time/duration/period of the DTX. The one of the two PDCCH candidates that the wireless device monitors/receives/detects may be the second PDCCH candidate. The end of the PDCCH reception may be the end of the second PDCCH candidate that the wireless device receives/detects. The end of the PDCCH reception may not be the start of the first PDCCH candidate that is not monitored by the wireless device.

The wireless device may complete a beam failure recovery, for example, based on receiving the DCI. The wireless device may complete a beam failure recovery, for example, based on receiving the PDCCH reception with the DCI.

The wireless device may send (e.g., transmit) uplink signals (e.g., PUCCH, PUSCH, SRS, Uplink transmission 2130 in FIG. 21) with/using a transmission power. The wireless device may send (e.g., transmit) uplink signals (e.g., PUCCH, PUSCH, SRS, Uplink transmission 2130 in FIG. 21) with/using a transmission power determined, for example, based on a candidate reference signal of (or identified for/during) the beam failure recovery. The wireless device may send (e.g., transmit) the uplink signals with/using the transmission power, for example, a number (or quantity) of symbols (e.g., 28 symbols) starting from a last/ending symbol of the PDCCH reception with the DCI. The last/ending symbol of the PDCCH reception with the DCI may be a last/ending symbol of the PDCCH candidate that the wireless device receives/detects. The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The wireless device may send (e.g., transmit) uplink signals (e.g., PUCCH, PUSCH, SRS, Uplink transmission 2130 in FIG. 21) with/using a transmission power. The wireless device may send (e.g., transmit) uplink signals (e.g., PUCCH, PUSCH, SRS, Uplink transmission 2130 in FIG. 21) with/using a transmission power determined, for example, based on default power control parameters (e.g., target-received power, pathloss compensation factor, closed-loop index) indicated/associated with an uplink power control with a lowest/smallest uplink power control index/identity. The wireless device may send (e.g., transmit) the uplink signals with/using the transmission power, for example, a number (or quantity) of symbols (e.g., 28 symbols) starting from a last/ending symbol of the PDCCH reception with the DCI. The last/ending symbol of the PDCCH reception with the DCI may be a last/ending symbol of the PDCCH candidate that the wireless device receives/detects. The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The wireless device may monitor, via one or more coresets, downlink control channels (e.g., PDCCH, Downlink reception 2131 in FIG. 21). The wireless device may monitor, via one or more coresets, downlink control channels (e.g., PDCCH, Downlink reception 2131 in FIG. 21), for example, based on a candidate reference signal of (or identified for/during) the beam failure recovery. The wireless device may monitor, via the one or more coresets, the downlink control channels, for example, based on the candidate reference signal, for example, a number (or quantity) of symbols (e.g., 28 symbols) starting from a last/ending symbol of the PDCCH reception with the DCI. The last/ending symbol of the PDCCH reception with the DCI may be a last/ending symbol of the PDCCH candidate that the wireless device receives/detects (e.g., PDCCH candidate 1 in FIG. 21). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets. At least one DM-RS antenna port of a downlink reception (e.g., DCI) via a coreset of the one or more coresets may be quasi co-located with the candidate reference signal.

The wireless device may receive downlink receptions (e.g., PDSCH, aperiodic CSI-RS, downlink reception 2131 in FIG. 21). The wireless device may receive downlink receptions (e.g., PDSCH, aperiodic CSI-RS, downlink reception 2131 in FIG. 21), for example, based on a candidate reference signal of (or identified for/during) the beam failure recovery. The wireless device may receive the downlink receptions, for example, based on the candidate reference signal, for example, a number (or quantity) of symbols (e.g., 28 symbols) starting from a last/ending symbol of the PDCCH reception with the DCI. The last/ending symbol of the PDCCH reception with the DCI may be a last/ending symbol of the PDCCH candidate that the wireless device receives/detects (e.g., PDCCH candidate 1 in FIG. 21). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets. At least one DM-RS antenna port of a downlink reception of the downlink receptions may be quasi co-located with the candidate reference signal.

The DCI may schedule/trigger an uplink transmission (e.g., PUSCH transmission, PUCCH transmission, aperiodic SRS transmission, PRACH transmission, uplink transmission 2130 in FIG. 21). The wireless device may determine, for the uplink transmission, a transmission power. The wireless device may send (e.g., transmit) the uplink transmission with/using the transmission power. The wireless device may determine the transmission power, for example, based on a number (or quantity) of symbols, for example, after a last/ending symbol of the PDCCH reception with the DCI and before a starting/first symbol of the uplink transmission. The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets. The wireless device may determine the transmission power, for example, based on transmit power control (TPC) values received the number of symbols, for example, before an uplink transmission occasion of the uplink transmission.

The DCI may be, for example, a PDCCH order initiating/triggering a random-access procedure. The wireless device may determine a PRACH occasion, for example, for the uplink transmission (e.g., PRACH transmission, preamble). The wireless device may send (e.g., transmit) the uplink transmission (e.g., PRACH transmission, preamble), for example, in/via the PRACH occasion. The wireless device may determine the PRACH occasion, for example, based on a last/ending symbol of the PDCCH reception with the DCI (e.g., an uplink slot that overlaps with the last/ending symbol of the PDCCH reception with the DCI). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The DCI may schedule/trigger a downlink reception (e.g., PDSCH reception, aperiodic CSI-RS reception). The wireless device may determine a PUCCH resource, for example, for transmission of HARQ-ACK information/feedback of the downlink reception. The wireless device may send (e.g., transmit) the HARQ-ACK information/feedback (e.g., uplink transmission 2130 in FIG. 21) of the downlink reception, for example, via the PUCCH resource. The wireless device may determine the PUCCH resource, for example, based on a coreset of the PDCCH reception with the DCI. The coreset of the PDCCH reception with the DCI may be a coreset associated with a search space set, among the two search space sets, that the DCI (or the PDCCH candidate (e.g., PDCCH candidate 1 in FIG. 21)) is received/detected, for example, if the PDCCH reception does not include/comprise (or is not associated with) the two PDCCH candidates from the two search space sets. The wireless device may determine the PUCCH resource, for example, based on a number (or quantity) of control channel elements (CCEs) of the coreset associated with the search space set. The first coreset associated with the first search space set and the second coreset associated with the second search space set may comprise the coreset.

The DCI may comprise a PDCCH monitoring adaptation field. The PDCCH monitoring adaptation field in the DCI may indicate to the wireless device to start PDCCH monitoring according to search space sets with a first group index and to stop PDCCH monitoring according to search space sets with a second group index. The wireless device may use the indication in/by the PDCCH monitoring adaptation field at the beginning of a first/starting/earliest time slot that is at least a number (or quantity) of symbols. The wireless device may use the indication in/by the PDCCH monitoring adaptation field at the beginning of a first/starting/earliest time slot that is at least a number of symbols, for example, after the last/ending symbol of the PDCCH reception with the DCI. The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The DCI may be a DCI format 2_1 indicating downlink pre-emption. The wireless device may ignore/discard (or may assume no transmission in) one or more symbols among a set of symbols. The DCI format 2_1 may indicate the one or more symbols among the set of symbols. The set of symbols may be a number (or quantity) of symbols prior to a starting/first/earliest symbol of the PDCCH reception with the DCI (or with the DCI format 2_1). The starting/first/earliest symbol of the PDCCH reception with the DCI may be a starting/first/earliest symbol of the PDCCH candidate that the wireless device receives/detects (e.g., PDCCH candidate 1 in FIG. 21). The starting/first/earliest symbol of the PDCCH reception with the DCI may be a starting/first/earliest symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The DCI may be a DCI format 2_4 indicating uplink cancellation. The wireless device may cancel/ignore/discard (or may assume no transmission in) one or more symbols among a set of symbols of the uplink transmission. The DCI format 2_4 may indicate a number (or quantity) of the one or more symbols. The wireless device may determine a starting/first/earliest symbol of the one or more symbols. The wireless device may determine a starting/first/earliest symbol of the one or more symbols, for example, based on a last/ending symbol of the PDCCH reception with the DCI. The last/ending symbol of the PDCCH reception with the DCI may be a last/ending symbol of the PDCCH candidate that the wireless device receives/detects (e.g., PDCCH candidate 1 in FIG. 21). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/-comprise (or is not associated with) the two PDCCH candidates from the two search space sets.

The wireless device may determine whether to receive or not receive (or ignore) the downlink reception (e.g., downlink reception 2131 in FIG. 21). The wireless device may determine whether to receive or not receive (or ignore) the downlink reception (e.g., downlink reception 2131 in FIG. 21), for example, based on a processing time (e.g., PDSCH processing time) that starts, for example, after a last/ending symbol of the PDCCH reception with the DCI. The wireless device may determine whether to send (e.g., transmit) or not send (e.g., transmit) (or ignore) the uplink reception. The wireless device may determine whether to send (e.g., transmit) or not send (e.g., transmit) (or ignore) the uplink reception, for example, based on a processing time (e.g., PUSCH processing time) that starts, for example, after a last/ending symbol of the PDCCH reception with the DCI. The last/ending symbol of the PDCCH reception with the DCI may be a last/ending symbol of the PDCCH candidate that the wireless device receives/detects (e.g., PDCCH candidate 1 in FIG. 21). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The wireless device may determine a starting symbol of the downlink reception and/or the uplink transmission (e.g., uplink transmission 2130/downlink reception 2131 in FIG. 21). The wireless device may determine a starting symbol of the downlink reception and/or the uplink transmission (e.g., uplink transmission 2130/downlink reception 2131 in FIG. 21), for example, based on a last/ending symbol of the PDCCH reception with the DCI. The wireless device may receive/send (e.g., transmit) the downlink reception/uplink transmission. The wireless device may receive/send (e.g., transmit) the downlink reception/uplink transmission, for example, based on the starting symbol. The last/ending symbol of the PDCCH reception with the DCI may be a last/ending symbol of the PDCCH candidate that the wireless device receives/detects (e.g., PDCCH candidate 1 in FIG. 21). The last/ending symbol of the PDCCH reception with the DCI may be a last/ending symbol of the PDCCH candidate, among the two PDCCH candidates, that the wireless device receives/detects (e.g., PDCCH candidate 1 in FIG. 21), for example, if the PDCCH reception does not include/comprise (or is not associated with) the two PDCCH candidates from the two search space sets.

The DCI may schedule/trigger a downlink reception (e.g., PDSCH reception, downlink reception 2131 in FIG. 21). The wireless device may determine a starting resource block (RB) of the downlink reception. The wireless device may receive the downlink reception, for example, based on the starting RB. The wireless device may determine the starting RB, for example, based on a lowest RB of a coreset of the PDCCH reception with the DCI. The coreset of the PDCCH reception with the DCI may be a coreset, among the first coreset and the second coreset, that the DCI (or the PDCCH candidate (e.g., PDCCH candidate 1 in FIG. 21)) is received/detected, for example, if the PDCCH reception does not include/comprise (or is not associated with) the two PDCCH candidates from the two search space sets.

In FIG. 21, the PDCCH candidate, among the two PDCCH candidates, that the wireless device receives/detects may be PDCCH candidate 1. The wireless device may receive the DCI, for example, via the PDCCH candidate 1. The wireless device may not receive the DCI via the PDCCH candidate 2.

The wireless device may receive a PDCCH reception. The wireless device may receive the PDCCH reception, for example, during/in a non-active time/duration/period of a DTX configuration among the first DTX configuration and the second DTX configuration.

The wireless device may not monitor (or may not be required to monitor) one of the two PDCCH candidates from/in the two search space sets linked for PDCCH repetition, for example, during/in the non-active time/duration/period of the DTX configuration. The wireless device may not monitor (or may not be required to monitor) the first PDCCH candidate of the two PDCCH candidates from/in the first search space set of the two search space sets linked for PDCCH repetition, for example, during/in the non-active time/duration/period of the DTX configuration. The wireless device may monitor the second PDCCH candidate of the two PDCCH candidates from/in the second search space set of the two search space sets linked for PDCCH repetition, for example, during/in the non-active time/duration/period of the DTX configuration. The wireless device may receive the PDCCH reception, for example, in/via the second PDCCH candidate. The PDCCH reception may be the second PDCCH candidate.

The wireless device may not monitor (or may not be required to monitor) the second PDCCH candidate of the two PDCCH candidates from/in the second search space set of the two search space sets linked for PDCCH repetition. The wireless device may not monitor (or may not be required to monitor) the second PDCCH candidate of the two PDCCH candidates from/in the second search space set of the two search space sets linked for PDCCH repetition, for example, during/in the non-active time/duration/period of the DTX configuration. The wireless device may monitor the first PDCCH candidate of the two PDCCH candidates from/in the first search space set of the two search space sets linked for PDCCH repetition. The wireless device may monitor the first PDCCH candidate of the two PDCCH candidates from/in the first search space set of the two search space sets linked for PDCCH repetition, for example, during/in the non-active time/duration/period of the DTX configuration. The wireless device may receive the PDCCH reception in/via the first PDCCH candidate. The PDCCH reception may be the first PDCCH candidate.

The PDCCH reception may be, for example, DCI. The PDCCH reception may be, for example, a PDCCH candidate. The PDCCH reception may, for example, carry/comprise (or may be with) DCI.

The PDCCH reception may not include/comprise the two PDCCH candidates. The PDCCH reception may not include/comprise the two PDCCH candidates, for example, if the wireless device does not (or is not required to) monitor the one of the two PDCCH candidates, for example, during/in the non-active time/duration/period of the DTX configuration.

The wireless device may send (e.g., transmit)/receive to/from the base station with/using a transmission parameter (e.g., transmission power, PUCCH resource, default TCI state). The wireless device may send (e.g.,

transmit)/receive to/from the base station with/using a transmission parameter (e.g., transmission power, PUCCH resource, default TCI state), for example, based on a PDCCH candidate, among the two PDCCH candidates, that the wireless device receives/detects the PDCCH reception (or the DCI), for example, if the PDCCH reception does not include/comprise the two PDCCH candidates. The wireless device may not send (e.g., transmit)/receive to/from the base station with/using a transmission parameter (e.g., transmission power, PUCCH resource, default TCI state). The wireless device may not send (e.g., transmit)/receive to/from the base station with/using a transmission parameter (e.g., transmission power, PUCCH resource, default TCI state), for example, based on a PDCCH candidate, among the two PDCCH candidates, that is not monitored, for example, during/in the non-active time/duration/period of the DTX configuration, for example, if the PDCCH reception does not include/comprise the two PDCCH candidates.

The wireless device may determine whether to send (e.g., transmit)/receive to/from the base station (e.g., processing time). The wireless device may determine whether to send (e.g., transmit)/receive to/from the base station (e.g., processing time), for example, based on a PDCCH candidate, among the two PDCCH candidates, that the wireless device receives/detects the PDCCH reception (or the DCI), for example, if the PDCCH reception does not include/comprise the two PDCCH candidates. The wireless device may not determine whether to send (e.g., transmit)/receive to/from the base station (e.g., processing time). The wireless device may not determine whether to send (e.g., transmit)/receive to/from the base station (e.g., processing time), for example, based on a PDCCH candidate, among the two PDCCH candidates, that is not monitored, for example, during/in the non-active time/duration/period of the DTX configuration, for example, if the PDCCH reception does not include/comprise the two PDCCH candidates.

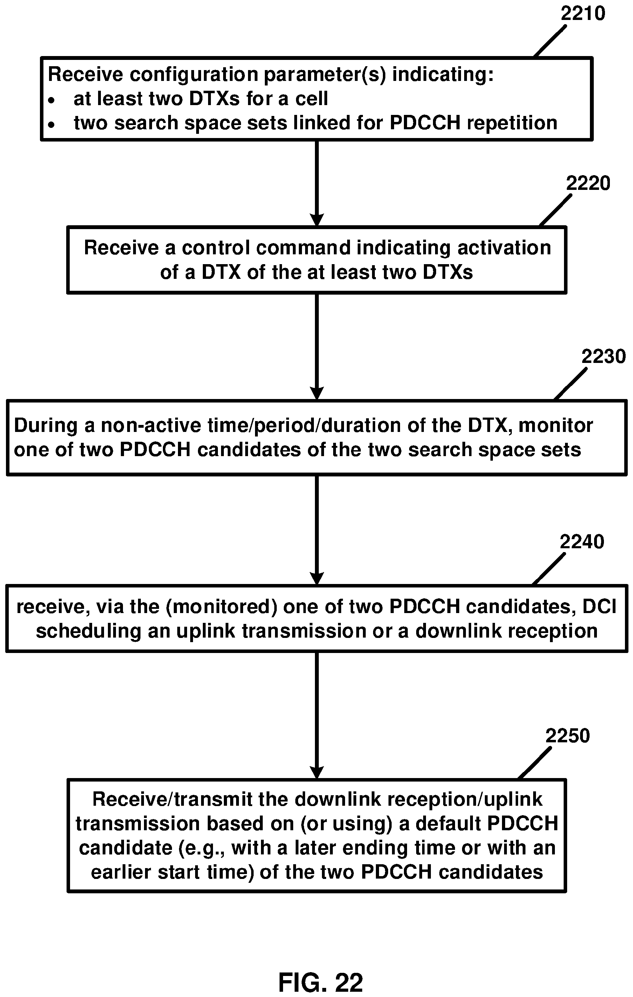

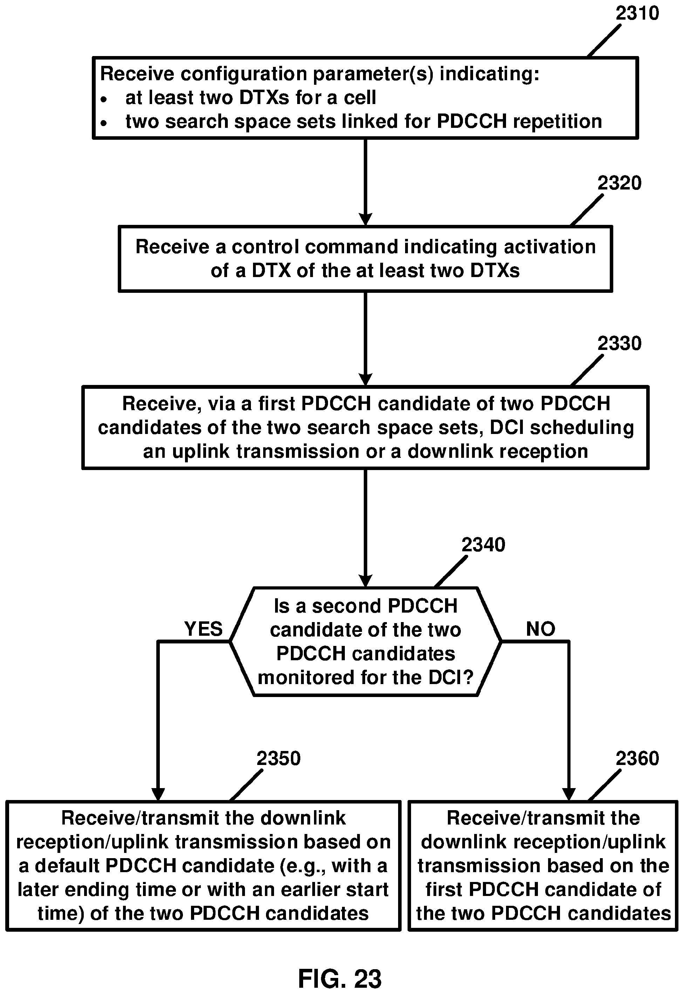

FIG. 22 and FIG. 23 shows example methods (e.g., flowcharts) of energy saving. One or more steps of FIG. 22 and/or FIG. 23 may be performed by a wireless device (e.g., the wireless device 106, 156A, 156B, 210, 1205, 1301, and/or 1701 in FIGs. 1A, 1B, 2A, 2B, 12A, 12B, 13A-13C, 17). All or portions of the flowcharts may be implemented by a wireless device (e.g., the wireless device 106, 156A, 156B, 210, 1205, 1301, and/or 1701 in FIGs. 1A, 1B, 2A, 2B, 12A, 12B, 13A-13C, 17), and/or an example computing device 1530 in FIG. 15B.

At step 2210 and/or step 2310, a wireless device may receive (e.g., from a base station) one or more messages (e.g., RRC messages, RRC reconfiguration messages). The base station may send (e.g., transmit) the one or more messages. The one or more messages may comprise one or more configuration parameters of a cell. The one or more configuration parameters may indicate at least two DTXs (or at least two DTX configurations) for/of the cell. The at least two DTXs of the cell may comprise a first DTX of the cell and a second DTX of the cell. The one or more configuration parameters may indicate two search space sets that are linked for PDCCH repetition.

At step 2220 and/or step 2320, the wireless device may receive a control command (e.g., DCI format 2_9, DCI format 2_10, and the like) indicating activation of a DTX of the at least two DTXs of the cell. The base station may send (e.g., transmit) the control command.

The wireless device may monitor, for detection of a DCI format with same information (or of repetitions of a DCI format), two PDCCH candidates in/for/of the two search space sets. The wireless device may monitor, for detection of the DCI format, each PDCCH candidate of two PDCCH candidates in/for/of a respective search space set of the two search space sets. The wireless device may monitor the two PDCCH candidates in two PDCCH monitoring occasions. The wireless device may monitor each PDCCH candidate of the two PDCCH candidates in a respective PDCCH monitoring occasion of the two PDCCH monitoring occasions. The wireless device may monitor the two PDCCH candidates, for example, during/in an active time/period/duration of the DTX.

The wireless device may receive at least one PDCCH candidate of the two PDCCH candidates. The wireless device may decode the at least one PDCCH candidate according to the (monitored) DCI format. The wireless device may receive/detect a first DCI with the DCI format, for example, based on the decoding.

The base station may send (e.g., transmit) the first DCI, for example, via the two PDCCH monitoring occasions. The base station may send (e.g., transmit) a first repetition of the first DCI, for example, via a first PDCCH monitoring occasion of the two PDCCH monitoring occasions. The base station may send (e.g., transmit) a second repetition of the first DCI, for example, via a second PDCCH monitoring occasion of the two PDCCH monitoring occasions. The first DCI may schedule/trigger/activate a first uplink transmission (e.g., PUSCH/PUCCH/PRACH/SRS) or a first downlink reception (e.g., PDSCH/PDCCH/CSI-RS).

The wireless device may send (e.g., transmit)/receive the uplink transmission/downlink reception. The wireless device may send (e.g., transmit)/receive the uplink transmission/downlink reception, for example, based on (or using) a PDCCH candidate, among the two PDCCH candidates, that ends later. The PDCCH candidate may be a default PDCCH candidate. The wireless device may not receive the PDCCH candidate. The wireless device may send (e.g., transmit)/receive the uplink transmission/downlink reception, for example, based on a last symbol of the PDCCH candidate. The base station may receive/send (e.g., transmit) the uplink transmission/downlink reception. The base station may receive/send (e.g., transmit) the uplink transmission/downlink reception, for example, based on (or using) the PDCCH candidate, among the two PDCCH candidates, that ends later. The base station may receive/send (e.g., transmit) the uplink transmission/downlink reception, for example, based on the last symbol of the PDCCH candidate.

The wireless device may send (e.g., transmit)/receive the uplink transmission/downlink reception, for example, based on (or using) a PDCCH candidate, among the two PDCCH candidates, that starts earlier. The PDCCH candidate may be a default PDCCH candidate. The wireless device may not receive the PDCCH candidate. The wireless device may send (e.g., transmit)/receive the uplink transmission/downlink reception, for example, based on a starting symbol of the PDCCH candidate. The base station may receive/send (e.g., transmit) the uplink transmission/downlink reception. The base station may receive/send (e.g., transmit) the uplink transmission/downlink reception, for example, based on (or using) the PDCCH candidate, among the two PDCCH candidates, that starts earlier. The base station may receive/send (e.g., transmit) the uplink transmission/downlink reception, for example, based on the starting symbol of the PDCCH candidate.

The wireless device may send (e.g., transmit)/receive the uplink transmission/downlink reception, for example, based on the PDCCH candidate that ends later or that starts earlier. The wireless device may send (e.g., transmit)/receive the uplink transmission/downlink reception, for example, based on (or using) the PDCCH candidate, among the two PDCCH candidates, that ends later or that starts earlier, for example, if the wireless device monitors, for detection of the DCI format, the two PDCCH candidates in/for/of the two search space sets (YES path in FIG. 23). The wireless device may send (e.g., transmit)/receive the uplink transmission/downlink reception, for example, using the PDCCH candidate that ends later or that starts earlier, for example, based on monitoring, for detection of the DCI format, the two PDCCH candidates in/for/of the two search space sets.

At step 2230, the wireless device may monitor, for detection of the DCI format, one of the two PDCCH candidates in/for/of the two search space sets. The wireless device may monitor the one of the two PDCCH candidates in one of the two PDCCH monitoring occasions. The wireless device may monitor the one of the two PDCCH candidates, for example, during/in a non-active time/period/duration of the DTX.

The wireless device may not monitor, for detection of the DCI format, one of the two PDCCH candidates in/for/of the two search space sets. The wireless device may not monitor the one of the two PDCCH candidates in one of the two PDCCH monitoring occasions. The wireless device may not monitor the one of the two PDCCH candidates, for example, during/in the non-active time/period/duration of the DTX.

The wireless device may receive the one of the two PDCCH candidates that is monitored. The wireless device may decode the (received) one of the two PDCCH candidates according to the (monitored) DCI format. The wireless device may receive/detect a second DCI with the DCI format, for example, based on the decoding. At step 2240, the wireless device may receive DCI scheduling an uplink transmission or a downlink reception, for example, via the (monitored) one of two PDCCH candidates. At step 2330, the wireless device may receive DCI scheduling an uplink transmission or a downlink reception, for example, via a first PDCCH candidate of two PDCCH candidates of the two search space sets.

The base station may send (e.g., transmit) the second DCI, for example, via the one of the two PDCCH candidates that is monitored by the wireless device. The base station may send (e.g., transmit) the second DCI, for example, via/in the one of the two PDCCH monitoring occasions that is monitored by the wireless device.

The base station may not send (e.g., transmit) the second DCI, for example, via the one of the two PDCCH candidates that is not monitored by the wireless device. The base station may not send (e.g., transmit) the second DCI, for example, via/in the one of the two PDCCH monitoring occasions that is not monitored by the wireless device.

At step 2340, the wireless device may determine if a second PDCCH candidate of the two PDCCH candidates is monitored for the DCI. The wireless device may monitor a first PDCCH candidate of the two PDCCH candidates, for example, for detection of a DCI format. The wireless device may monitor the first PDCCH candidate in/from/via a first search space set of the two search space sets, for example, for detection of the DCI format. The wireless device may monitor the first PDCCH candidate in a first PDCCH monitoring occasion of the two PDCCH monitoring occasions. The wireless device may not monitor a second PDCCH candidate of the two PDCCH candidates, for example, for detection of a DCI format. The wireless device may not monitor the second PDCCH candidate in/from/via a second search space set of the two search space sets. The wireless device may not monitor the second PDCCH candidate in a second PDCCH monitoring occasion of the two PDCCH monitoring occasions. The wireless device may not monitor the second PDCCH candidate, for example, during/in a non-active time/period/duration of the second DTX. The wireless device may monitor the first PDCCH candidate, for example, during/in the non-active time/period/duration of the second DTX.

The wireless device may receive the first PDCCH candidate. The wireless device may decode the first PDCCH candidate according to the (monitored) DCI format. The wireless device may receive/detect a second DCI with the DCI format, for example, based on the decoding. At step 2360, the wireless device may receive/send (e.g., transmit) the downlink reception/uplink transmission, for example, based on the first PDCCH candidate of the two PDCCH candidates, for example, if the second PDCCH candidate of the two PDCCH candidates is not monitored for the DCI.

The base station may send (e.g., transmit) the second DCI via the first PDCCH candidate (or in the first search space set) that is monitored by the wireless device. The base station may send (e.g., transmit) the second DCI via/in the first PDCCH monitoring occasion that is monitored by the wireless device. The base station may not send (e.g., transmit) the second DCI via the second PDCCH candidate (or in the second search space set) that is not monitored by the wireless device. The base station may not send (e.g., transmit) the second DCI via/in the second PDCCH monitoring occasion that is not monitored by the wireless device. The second DCI may schedule/trigger/activate a second uplink transmission (e.g., PUSCH/PUCCH/PRACH/SRS) or a second downlink reception (e.g., PDSCH/PDCCH/CSI-RS).

The wireless device may send (e.g., transmit)/receive the uplink transmission/downlink reception, for example, based on (or using) a PDCCH candidate, among at least two (e.g., two) PDCCH candidates, that ends later. The PDCCH candidate may be a default PDCCH candidate. The wireless device may not receive the PDCCH candidate. The wireless device may not monitor the PDCCH candidate, for example, during/in the non-active time/period/duration of the DTX. The wireless device may send (e.g., transmit)/receive the uplink transmission/downlink reception, for example, based on a last symbol of the PDCCH candidate. The base station may receive/send (e.g., transmit) the uplink transmission/downlink reception, for example, based on (or using) the PDCCH candidate, among the two PDCCH candidates, that ends later. The base station may receive/send (e.g., transmit) the uplink transmission/downlink reception, for example, based on the last symbol of the PDCCH candidate.

At step 2250, the wireless device may send (e.g., transmit)/receive the uplink transmission/downlink reception, for example, based on (or using) a PDCCH candidate, among at least two (e.g., two) PDCCH candidates, that starts earlier. The PDCCH candidate may be a default PDCCH candidate (e.g., with a later ending time or with an earlier start time). At step 2350, the wireless device may receive/send (e.g., transmit) the downlink reception/uplink transmission, for example, based on a default PDCCH candidate (e.g., with a later ending time or with an earlier start time) of the two PDCCH candidates, for example, if a second PDCCH candidate of the two PDCCH candidates is monitored for the DCI. The wireless device may not receive the PDCCH candidate. The wireless device may not monitor the PDCCH candidate, for example, during/in the non-active time/period/duration of the DTX. For example, the wireless device may send (e.g., transmit)/receive the uplink transmission/downlink reception, for example, based on a starting symbol of the PDCCH candidate. The base station may receive/send (e.g., transmit) the uplink transmission/downlink reception, for example, based on (or using) the PDCCH candidate, among the two PDCCH candidates, that starts earlier. The base station may receive/send (e.g., transmit) the uplink transmission/downlink reception, for example, based on the starting symbol of the PDCCH candidate.

The wireless device may send (e.g., transmit)/receive the uplink transmission/downlink reception, for example, based on (or using) the PDCCH candidate, among at least two (e.g., two) PDCCH candidates, that ends later or that starts earlier, for example, if the wireless device monitors, for detection of the DCI format, the one of the two PDCCH candidates, for example, during/in the non-active time/period/duration of the DTX (FIG. 22). The wireless device may send (e.g., transmit)/receive the uplink transmission/downlink reception, for example, based on (or using) the PDCCH candidate, among at least two (e.g., two) PDCCH candidates, that ends later or that starts earlier, for example, if the wireless device does not monitor, for detection of the DCI format, the one of the two PDCCH candidates, for example, during/in the non-active time/period/duration of the DTX (FIG. 22).

The wireless device may send (e.g., transmit)/receive the uplink transmission/downlink reception, for example, based on (or using) the one (received) of the two PDCCH candidates. The wireless device may send (e.g., transmit)/receive the uplink transmission/downlink reception, for example, based on a last symbol of the one (received) of the two PDCCH candidates. The base station may receive/send (e.g., transmit) the uplink transmission/downlink reception, for example, based on (or using) the one (received) of the two PDCCH candidates that the base station sends (e.g., transmits). The base station may receive/send (e.g., transmit) the uplink transmission/downlink reception, for example, based on the last symbol of the one (received) of the two PDCCH candidates.

The wireless device may send (e.g., transmit)/receive the uplink transmission/downlink reception, for example, based on a starting symbol of the one (received) of the two PDCCH candidates. The base station may receive/send (e.g., transmit) the uplink transmission/downlink reception, for example, based on the starting symbol of the one (received) of the two PDCCH candidates.

The wireless device may send (e.g., transmit)/receive the uplink transmission/downlink reception, for example, based on (or using) the one (received) of the two PDCCH candidates, for example, if the wireless device monitors, for detection of the DCI format, the one of the two PDCCH candidates, for example, during/in the non-active time/period/duration of the DTX (NO path FIG. 23). The wireless device may send (e.g., transmit)/receive the uplink transmission/downlink reception, for example, based on (or using) the one (received) of the two PDCCH candidates, for example, if the wireless device does not monitor, for detection of the DCI format, the one of the two PDCCH candidates, for example, during/in the non-active time/period/duration of the DTX (NO path FIG. 23).

The wireless device may send (e.g., transmit)/receive the uplink transmission/downlink reception, for example, based on (or using) the first PDCCH candidate that the wireless device receives/detects. The wireless device may not send (e.g., transmit)/receive the uplink transmission/downlink reception, for example, based on (or using) the second PDCCH candidate that the wireless device does not monitor, for example, during/in the non-active time/period/duration of the second DTX. The wireless device may send (e.g., transmit)/receive the uplink transmission/downlink reception, for example, based on a last symbol of the first PDCCH candidate. The base station may receive/send (e.g., transmit) the uplink transmission/downlink reception, for example, based on (or using) the first PDCCH candidate that the base station transmits. The base station may receive/send (e.g., transmit) the uplink transmission/downlink reception, for example, based on the last symbol of the first PDCCH candidate that the base station transmits. The base station may receive/send (e.g., transmit) the uplink transmission/downlink reception, for example, based on (or using) the first PDCCH monitoring that the wireless device monitors the first PDCCH candidate. The base station may receive/send (e.g., transmit) the uplink transmission/downlink reception, for example, based on the last symbol of the first PDCCH monitoring that the wireless device monitors the first PDCCH candidate.

The wireless device may send (e.g., transmit)/receive the uplink transmission/downlink reception, for example, based on a starting symbol of the first PDCCH candidate. The base station may receive/send (e.g., transmit) the uplink transmission/downlink reception, for example, based on the starting symbol of the first PDCCH candidate that the base station transmits. The base station may receive/send (e.g., transmit) the uplink transmission/downlink reception, for example, based on the starting symbol of the first PDCCH monitoring that the wireless device monitors the first PDCCH candidate.

The wireless device may send (e.g., transmit)/receive the uplink transmission/downlink reception, for example, based on (or using) the first PDCCH candidate that the wireless device receives/detects, for example, if the wireless device monitors, for detection of the DCI format, the first PDCCH candidate and does not monitor the second PDCCH candidate. The wireless device may send (e.g., transmit)/receive the uplink transmission/downlink reception, for example, based on (or using) the first PDCCH candidate that the wireless device receives/detects, for example, if the wireless device does not monitor the second PDCCH candidate, for example, during/in the non-active time/period/duration of the DTX (NO path FIG. 23). The wireless device may send (e.g., transmit)/receive the uplink transmission/downlink reception, for example, based on (or using) the first PDCCH candidate that the wireless device receives/detects, for example, if the wireless device does not monitor, for detection of the DCI format, the one of the two PDCCH candidates, for example, during/in the non-active time/period/duration of the DTX (NO path FIG. 23).

A last symbol of a PDCCH candidate may be (or may be replaced with or may be interchangeably used with) a last symbol of a PDCCH monitoring occasion that the wireless device monitors the PDCCH candidate. A starting symbol of a PDCCH candidate may be (or may be replaced with or may be interchangeably used with) a starting symbol of a PDCCH monitoring occasion that the wireless device monitors the PDCCH candidate.

The one or more configuration parameters may indicate whether to use the PDCCH repetition mode or no PDDCH repetition mode. The one or more configuration parameters may indicate whether to use the PDCCH repetition mode or no PDDCH repetition mode, for example, if the wireless device does not monitor, for detection of the DCI format, the one of the two PDCCH candidates, for example, during/in the non-active time/period/duration of the DTX.

The one or more configuration parameters may comprise a parameter. A first value of the parameter may indicate the PDCCH repetition mode. A first value of the parameter may indicate the PDCCH repetition mode, for example, if the wireless device does not monitor, for detection of the DCI format, the one of the two PDCCH candidates, for example, during/in the non-active time/period/duration of the DTX. A second value of the parameter may indicate the no PDCCH repetition mode. A second value of the parameter may indicate the no PDCCH repetition mode, for example, if the wireless device does not monitor, for detection of the DCI format, the one of the two PDCCH candidates, for example, during/in the non-active time/period/duration of the DTX.

A presence of the parameter in the one or more configuration parameters may indicate the PDCCH repetition mode. A presence of the parameter in the one or more configuration parameters may indicate the PDCCH repetition mode, for example, if the wireless device does not monitor, for detection of the DCI format, the one of the two PDCCH candidates, for example, during/in the non-active time/period/duration of the DTX. An absence of the parameter in the one or more configuration parameters may indicate the no PDCCH repetition mode. An absence of the parameter in the one or more configuration parameters may indicate the no PDCCH repetition mode, for example, if the wireless device does not monitor, for detection of the DCI format, the one of the two PDCCH candidates, for example, during/in the non-active time/period/duration of the DTX.

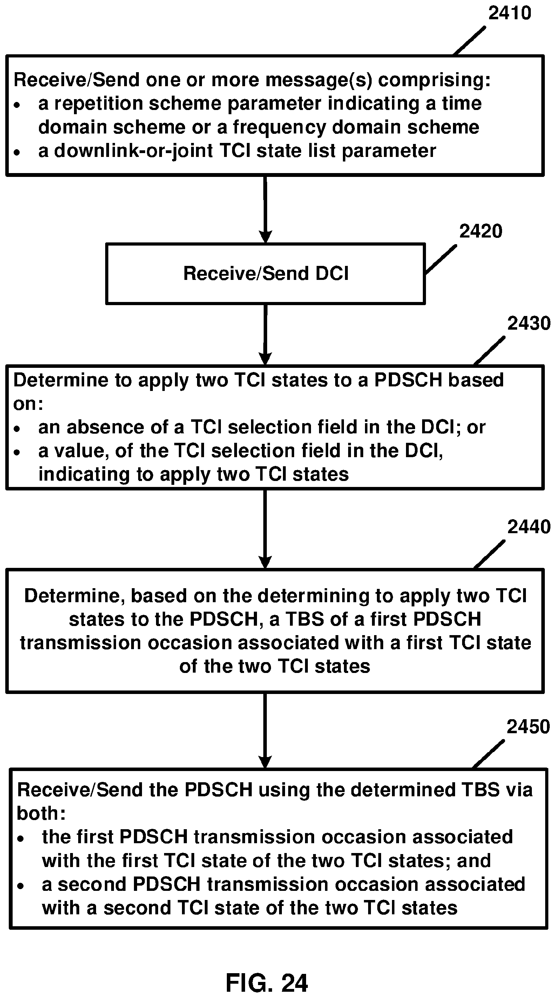

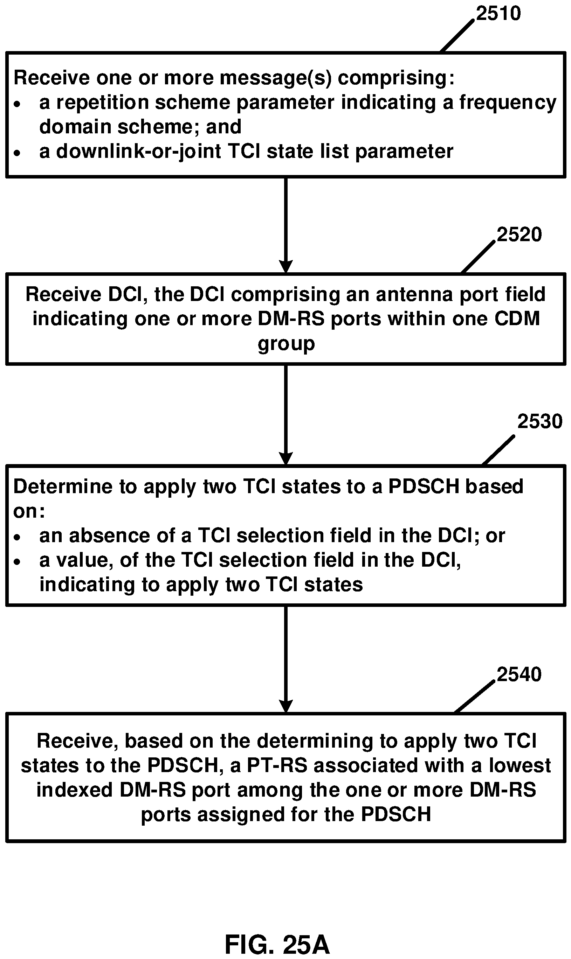

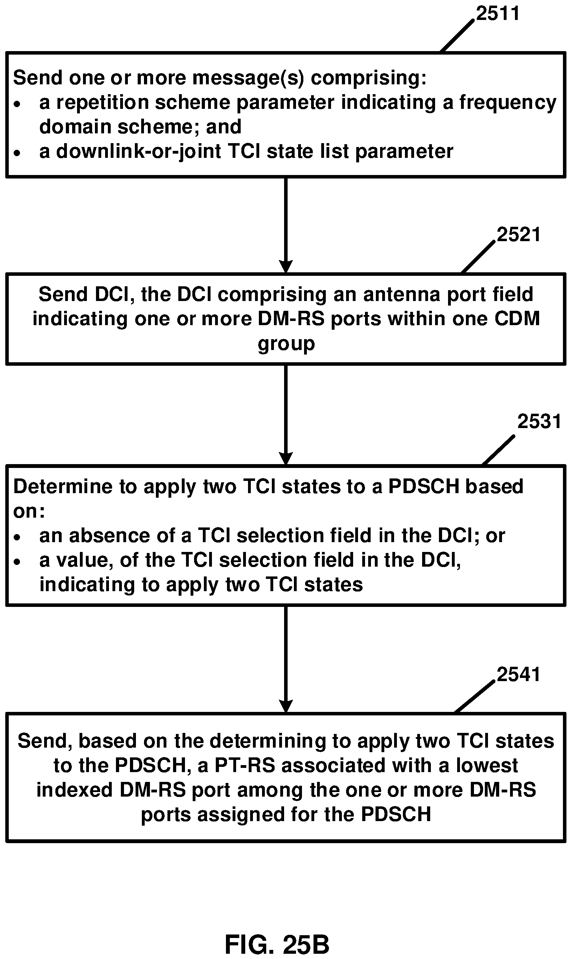

FIG. 24 shows an example method for determining transport block size (TBS). FIG. 25A shows an example method for receiving a phase-tracking reference signal (PT-RS). FIG. 25B shows an example method for sending a PT-RS. FIG. 24, FIG. 25A, and FIG. 25B are based on the examples described herein. Their steps have been described by the examples and are not repeated herein.

A wireless device may receive a single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if the wireless device is not configured with a higher layer parameter *dl-OrJointTCI-StateList* and is indicated with two TCI states in a codepoint of *'Transmission Configuration Indication'* field in the DCI. The wireless device may receive the single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if/when a wireless device is configured by a higher layer parameter *repetitionScheme* set to one of 'fdmSchemeA', 'fdmSchemeB', 'tdmSchemeA' (e.g., by receiving one or more messages comprising a repetition scheme parameter indicating a time domain scheme or a frequency domain scheme, as shown at step 2410 in FIG. 24 and/or step 2510 in FIG. 25), and if the wireless device is indicated with DM-RS port(s) within one CDM group by *'Antenna Port(s)'* field in a DCI scheduling/activating a transport block (e.g., or a PDSCH reception or a downlink reception).

A wireless device may receive a single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if the wireless device is configured with a higher layer parameter *dl-OrJointTCI-StateList* (e.g., by receiving one or more messages comprising a downlink-or-joint TCI state list parameter, as shown at step 2410 in FIG. 24 and/or step 2510 in FIG. 25) and is indicated with two joint/downlink TCI states in a codepoint of *'TCI selection'* field in the DCI. The wireless device may receive the single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive a single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if the wireless device is configured with a higher layer parameter *dl-OrJointTCI-StateList* and the wireless device is not configured with a higher layer parameter *tciSelection-PresentInDCI.* The wireless device may receive the single PDSCH transmission occasion of the transport block with each TCI state associated to a non-overlapping frequency domain resource allocation, for example, if/when two TCI states or two joint/downlink TCI states are indicated in DCI and a higher layer parameter *repetitionScheme* is set to 'fdmSchemeA', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if the wireless device is not configured with a higher layer parameter *dl-OrJointTCI-StateList* and is indicated with two TCI states in a codepoint of *'Transmission Configuration Indication'* field in the DCI. The wireless device may receive two PDSCH transmission occasions of the (same) transport block with each TCI state associated to the PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if the wireless device is configured with a higher layer parameter *dl-OrJointTCI-StateList* and is indicated with two joint/downlink TCI states in a codepoint of *'TCI selection'* field in the DCI. The wireless device may receive two PDSCH transmission occasions of the (same) transport block with each TCI state associated to the PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if the wireless device is configured with a higher layer parameter *dl-OrJointTCI-StateList* and the wireless device is not configured with a higher layer parameter *tciSelection-PresentInDCI*. The wireless device may receive two PDSCH transmission occasions of the (same) transport block with each TCI state associated to the PDSCH transmission occasion which has non-overlapping frequency domain resource allocation with respect to the other PDSCH transmission occasion, for example, if/when the two TCI states or the two joint/downlink TCI states are indicated in the DCI and the higher layer parameter *repetitionScheme* is set to 'fdmSchemeB', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if the wireless device is not configured with a higher layer parameter *dl-OrJointTCI-StateList* and is indicated with two TCI states in a codepoint of *'Transmission Configuration Indication'* field in the DCI. A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if the wireless device is configured with a higher layer parameter *dl-OrJointTCI-StateList* and is indicated with two joint/downlink TCI states in a codepoint of *'TCI selection'* field in the DCI. A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if the wireless device is configured with a higher layer parameter *dl-OrJointTCI-StateList* and the wireless device is not configured with a higher layer parameter *tciSelection-PresentInDCI*. A wireless device may receive two PDSCH transmission occasions of the (same) transport block with each TCI state associated to a PDSCH transmission occasion which has non-overlapping time domain resource allocation with respect to the other PDSCH transmission occasion and both PDSCH transmission occasions may be received, by the wireless device, within a slot, for example, if/when the two TCI states or the two joint/downlink TCI states are indicated in the DCI and the higher layer parameter *repetitionScheme* is set to 'tdmSchemeA', for example, if/when a wireless device is configured by a higher layer parameter *repetitionScheme* set to one of 'fdmSchemeA', 'fdmSchemeB', 'tdmSchemeA', and if the wireless device is indicated with DM-RS port(s) within one CDM group by *'Antenna Port(s)'* field in a DCI scheduling/activating a transport block (e.g., or a PDSCH reception or a downlink reception).

A wireless device may perform one or more operations based on one or more conditions. For example, the wireless device may perform the one or more operations based on a first condition of the wireless device being configured/provided/indicated, by a base station, with/by a higher layer parameter *repetitionScheme* set to 'fdmSchemeB' (e.g., by receiving one or more messages comprising a repetition scheme parameter indicating a time domain scheme or a frequency domain scheme, as shown at step 2410 in FIG. 24 and/or step 2510 in FIG. 25A), and based on a second condition of the wireless device being indicated, by the base station, with DM-RS port(s) within one CDM group in/by *'Antenna Port(s)'* field in DCI scheduling/activating a PDSCH reception (e.g., by receiving DCI, as shown at step 2420 in FIG. 24 and/or step 2520 in FIG. 25A). Additionally, the wireless device may perform the one or more operations based on one or more third conditions such as:

the wireless device being indicated with two TCI states in a codepoint of *'Transmission Configuration Indication'* field in the DCI when/if the wireless device is not configured/provided/indicated with a higher layer parameter *dl-OrJointTCI-StateList,* or

the wireless device being indicated with two joint/downlink TCI states in a codepoint of *'TCI selection'* field in the DCI when/if the wireless device is configured/indicated/provided with a higher layer parameter *dl-OrJointTCI-StateList* and with a higher layer parameter *tciSelection-PresentInDCI,* or

the wireless device being configured/indicated/provided with a higher layer parameter *dl-OrJointTCI-StateList* and is not configured/indicated/provided with a higher layer parameter *tciSelection-PresentInDCI* (e.g., corresponding to step 2430 of FIG. 24 and/or step 2530 in FIG. 25A and/or step 2531 in FIG. 25B).

Based on the first condition, the second condition, and the one or more third conditions being satisfied, the wireless device may perform the one or more operations. The one or more operations may comprise determining a transport block size (TBS) in/of a first PDSCH transmission occasion of two PDSCH transmission occasions of a PDSCH reception (e.g., corresponding to step 2440 of FIG. 24), for example, based on a total number (or quantity) of resource elements (REs) allocated for the PDSCH reception. The one or more operations may comprise determining the total number of REs, for example, based on a total number (or quantity) of allocated PRBs corresponding to the first TCI state of the two TCI states or to the first joint/downlink TCI state of the two joint/downlink TCI states. The determined TBS of the first PDSCH transmission occasion may be applied to the second PDSCH transmission occasion associated with the second TCI state of the two TCI states. The one or more operations may comprise applying/using the determined TBS of the first PDSCH transmission occasion associated with the first TCI state or the first joint/downlink TCI state to/for a second PDSCH transmission occasion, of the two PDSCH transmission occasions of the PDSCH reception, associated with the second TCI state of the two TCI states or the second joint/downlink TCI state of the two joint/downlink TCI states. The one or more operations may comprise receiving the PDSCH reception using the determined TBS, for example, in the first PDSCH transmission occasion. The one or more operations may comprise receiving the PDSCH reception using the determined TBS, for example, in the second PDSCH transmission occasion. The one or more operations may comprise receiving the PDSCH reception using the determined TBS, for example, in/via both the first PDSCH transmission occasion and the second PDSCH transmission occasion (e.g., corresponding to step 2450 of FIG. 24).

A base station may send (e.g., transmit), to a wireless device, one or more RRC messages comprising one or more configuration parameters. A base station may perform one or more operations based on one or more conditions. For example, the base station may perform the one or more operations based on a first condition of the one or more configuration parameters comprising a higher layer parameter *repetitionScheme* set to 'fdmSchemeB' (e.g., by sending one or more messages comprising a repetition scheme parameter indicating a time domain scheme or a frequency domain scheme, as shown at step 2410 in FIG. 24 and/or step 2511 in FIG. 25B), based on a second condition of the base station sending (e.g., transmitting), to the wireless device, DCI scheduling/activating a PDSCH reception, and based on a third condition of *'Antenna Port(s)'* field in the DCI indicating DM-RS port(s) within one CDM group (e.g., by sending DCI, as shown at step 2420 in FIG. 24 and/or step 2521 in FIG. 25B). Additionally, the base station may perform the one or more operations based on one or more fourth conditions such as:

a codepoint of *'Transmission Configuration Indication'* field in the DCI indicating two TCI states when/if the one or more configuration parameters do not comprise a higher layer parameter *dl-OrJointTCI-StateList,* or

a codepoint of *"TCI selection'* field in the DCI indicating two joint/downlink TCI states when/if the one or more configuration parameters comprise a higher layer parameter *dl-OrJointTCI-StateList* and a higher layer parameter *tciSelection-PresentInDCI,* or

the one or more configuration parameters comprising a higher layer parameter *dl-OrJointTCI-StateList* and not comprising a higher layer parameter *tciSelection-PresentInDCI* (e.g., corresponding to step 2430 of FIG. 24 and/or step 2530 in FIG. 25A and/or step 2531 in FIG. 25B).

Based on the first condition, the second condition, the third condition, and the one or more fourth conditions being satisfied, the base station may perform the one or more operations. The one or more operations may comprise determining a transport block size (TBS) in/of a first PDSCH transmission occasion of two PDSCH transmission occasions of the PDSCH reception (e.g., corresponding to step 2440 of FIG. 24), for example, based on a total number (or quantity) of resource elements (REs) allocated for the PDSCH reception. The one or more operations may comprise determining the total number of REs, for example, based on a total number (or quantity) of allocated PRBs corresponding to the first TCI state of the two TCI states or to the first joint/downlink TCI state of the two joint/downlink TCI states. The determined TBS of the first PDSCH transmission occasion may be applied to the second PDSCH transmission occasion associated with the second TCI state of the two TCI states. The one or more operations may comprise applying/using the determined TBS of the first PDSCH transmission occasion associated with the first TCI state or the first joint/downlink TCI state to/for a second PDSCH transmission occasion, of the two PDSCH transmission occasions of the PDSCH reception, associated with the second TCI state of the two TCI states or the second joint/downlink TCI state of the two joint/downlink TCI states. The one or more operations may comprise sending (e.g., transmitting), to the wireless device and in the first PDSCH transmission occasion, the PDSCH reception using the determined TBS. The one or more operations may comprise sending (e.g., transmitting), to the wireless device and in the second PDSCH transmission occasion, the PDSCH reception using the determined TBS. The one or more operations may comprise sending (e.g., transmitting), to the wireless device and in/via both the first PDSCH transmission occasion and the second PDSCH transmission occasion, the PDSCH reception using the determined TBS (e.g., corresponding to step 2450 of FIG. 24).

A wireless device may perform one or more operations based on one or more conditions. For example, the wireless device may perform the one or more operations based on a first condition of the wireless device being configured/provided/indicated, by a base station, with/by a higher layer parameter *repetitionScheme* set to 'tdmSchemeA' (e.g., by receiving one or more messages comprising a repetition scheme parameter indicating a time domain scheme or a frequency domain scheme, as shown at step 2410 in FIG. 24 and/or step 2510 in FIG. 25A), and based on a second condition of the wireless device being indicated, by the base station, with DM-RS port(s) within one CDM group in/by *'Antenna Port(s)'* field in DCI scheduling/activating a PDSCH reception (e.g., by receiving DCI, as shown at step 2420 in FIG. 24 and/or step 2520 in FIG. 25A). Additionally, the wireless device may perform the one or more operations based on one or more third conditions such as:

the wireless device being indicated with two TCI states in a codepoint of *'Transmission Configuration Indication'* field in the DCI when/if the wireless device is not configured/provided/indicated with a higher layer parameter *dl-OrJointTCI-StateList,* or

the wireless device being indicated with two joint/downlink TCI states in a codepoint of *'TCI selection'* field in the DCI when/if the wireless device is configured/indicated/provided with a higher layer parameter *dl-OrJointTCI-StateList* and with a higher layer parameter *tciSelection-PresentInDCI,* or

the wireless device being configured/indicated/provided with a higher layer parameter *dl-OrJointTCI-StateList* and is not configured/indicated/provided with a higher layer parameter *tciSelection-PresentInDCI* (e.g., corresponding to step 2430 of FIG. 24 and/or step 2530 in FIG. 25A and/or step 2531 in FIG. 25B).

Based on the first condition, the second condition, and the one or more third conditions being satisfied, the wireless device may perform the one or more operations. The one or more operations may comprise determining a transport block size (TBS) in/of a first PDSCH transmission occasion of two PDSCH transmission occasions of the PDSCH reception (e.g., corresponding to step 2440 of FIG. 24), for example, based on a number (or quantity) of resource elements (REs) allocated for the PDSCH reception within a PRB. The one or more operations may comprise determining the number of REs, for example, based on a number (or quantity) of symbols of a PDSCH allocation in the first PDSCH transmission, within a slot, corresponding to the first TCI state of the two TCI states or to the first joint/downlink TCI state of the two joint/downlink TCI states. The determined TBS of the first PDSCH transmission occasion may be applied to the second PDSCH transmission occasion associated with the second TCI state of the two TCI states. The one or more operations may comprise applying/using the determined TBS of the first PDSCH transmission occasion associated with the first TCI state or the first joint/downlink TCI state to/for a second PDSCH transmission occasion, of the two PDSCH transmission occasions of the PDSCH reception, associated with the second TCI state of the two TCI states or the second joint/downlink TCI state of the two joint/downlink TCI states. The one or more operations may comprise receiving the PDSCH reception using the determined TBS, for example, in the first PDSCH transmission occasion. The one or more operations may comprise receiving the PDSCH reception using the determined TBS, for example, in the second PDSCH transmission occasion. The one or more operations may comprise receiving the PDSCH reception using the determined TBS, for example, in/via both the first PDSCH transmission occasion and the second PDSCH transmission occasion (e.g., corresponding to step 2450 of FIG. 24).

A base station may send (e.g., transmit), to a wireless device, one or more RRC messages comprising one or more configuration parameters. A base station may perform one or more operations based on one or more conditions. For example, the base station may perform the one or more operations based on a first condition of the one or more configuration parameters comprising a higher layer parameter *repetitionScheme* set to 'tdmSchemeA' (e.g., by sending one or more messages comprising a repetition scheme parameter indicating a time domain scheme or a frequency domain scheme, as shown at step 2410 in FIG. 24 and/or step 2511 in FIG. 25B), based on a second condition of the base station sending (e.g., transmitting), to the wireless device, DCI scheduling/activating a PDSCH reception, and based on a third condition of *'Antenna Port(s)'* field in the DCI indicating DM-RS port(s) within one CDM group (e.g., by sending DCI, as shown at step 2420 in FIG. 24 and/or step 2521 in FIG. 25B). Additionally, the base station may perform the one or more operations based on one or more fourth conditions such as:

a codepoint of *'Transmission Configuration Indication'* field in the DCI indicating two TCI states when/if the one or more configuration parameters do not comprise a higher layer parameter *dl-OrJointTCI-StateList,* or

a codepoint of *"TCI selection'* field in the DCI indicating two joint/downlink TCI states when/if the one or more configuration parameters comprise a higher layer parameter *dl-OrJointTCI-StateList* and a higher layer parameter *tciSelection-PresentInDCI,* or

the one or more configuration parameters comprising a higher layer parameter *dl-OrJointTCI-StateList* and not comprising a higher layer parameter *tciSelection-PresentInDCI* (e.g., corresponding to step 2430 of FIG. 24 and/or step 2530 in FIG. 25A and/or step 2531 in FIG. 25B).

Based on the first condition, the second condition, the third condition, and the one or more fourth conditions being satisfied, the base station may perform the one or more operations. The one or more operations may comprise determining a transport block size (TBS) in/of a first PDSCH transmission occasion of two PDSCH transmission occasions of the PDSCH reception (e.g., corresponding to step 2440 of FIG. 24), for example, based on a number (or quantity) of resource elements (REs) allocated for the PDSCH reception within a PRB. The one or more operations may comprise determining the number of REs, for example, based on a number (or quantity) of symbols of a PDSCH allocation in the first PDSCH transmission occasion, within a slot, corresponding to the first TCI state of the two TCI states or to the first joint/downlink TCI state of the two joint/downlink TCI states. The determined TBS of the first PDSCH transmission occasion may be applied to the second PDSCH transmission occasion associated with the second TCI state of the two TCI states. The one or more operations may comprise applying/using the determined TBS of the first PDSCH transmission occasion associated with the first TCI state or the first joint/downlink TCI state to/for a second PDSCH transmission occasion, of the two PDSCH transmission occasions of the PDSCH reception, associated with the second TCI state of the two TCI states or the second joint/downlink TCI state of the two joint/downlink TCI states. The one or more operations may comprise sending (e.g., transmitting), to the wireless device and in the first PDSCH transmission occasion, the PDSCH reception using the determined TBS. The one or more operations may comprise sending (e.g., transmitting), to the wireless device and in the second PDSCH transmission occasion, the PDSCH reception using the determined TBS. The one or more operations may comprise sending (e.g., transmitting), to the wireless device and in/via both the first PDSCH transmission occasion and the second PDSCH transmission occasion, the PDSCH reception using the determined TBS (e.g., corresponding to step 2450 of FIG. 24).

A wireless device may perform one or more operations based on one or more conditions. For example, the wireless device may perform the one or more operations based on a first condition of the wireless device being configured/provided/indicated, by a base station, with/by a higher layer parameter *repetitionScheme* set to 'fdmSchemeA' or 'fdmSchemeB', and based on a second condition of the wireless device being indicated, by the base station, with DM-RS antenna port(s) within one CDM group in/by *'Antenna Port(s)'* field in DCI scheduling/activating a PDSCH reception. Additionally, the wireless device may perform the one or more operations based on one or more third conditions such as:

the wireless device being indicated with two TCI states in a codepoint of *'Transmission Configuration Indication'* field in the DCI when/if the wireless device is not configured/provided/indicated with a higher layer parameter *dl-OrJointTCI-StateList,* or

the wireless device being indicated with two joint/downlink TCI states in a codepoint of *'TCI selection'* field in the DCI when/if the wireless device is configured/indicated/provided with a higher layer parameter *dl-OrJointTCI-StateList* and with a higher layer parameter *tciSelection-PresentInDCI,* or

the wireless device being configured/indicated/provided with a higher layer parameter *dl-OrJointTCI-StateList* and is not configured/indicated/provided with a higher layer parameter *tciSelection-PresentInDCI.*

Based on the first condition, the second condition, and the one or more third conditions being satisfied, the wireless device may perform the one or more operations. The one or more operations may comprise receiving a (single) PT-RS associated with a lowest indexed DM-RS antenna port among the DM-RS antenna port(s) assigned for the PDSCH reception (e.g., corresponding to step 2540 of FIG. 25A). The one or more operations may comprise determining a first PT-RS frequency density, for example, based on a number (or quantity) of PRBs associated/allocated to the first TCI state of the two TCI states or the first joint/downlink TCI state of the two joint/downlink TCI states. The one or more operations may comprise determining a first PT-RS resource element mapping, for example, based on the allocated PRBs for the first TCI state or the first joint/downlink TCI state. The one or more operations may comprise receiving the PDSCH reception, for example, based on (or using) the first PT-RS frequency density. The one or more operations may comprise receiving the PDSCH reception, for example, based on (or using) the first PT-RS resource element mapping. The one or more operations may comprise determining a second PT-RS frequency density, for example, based on a number (or quantity) of PRBs associated/allocated to the second TCI state of the two TCI states or the second joint/downlink TCI state of the two joint/downlink TCI states. The one or more operations may comprise determining a second PT-RS resource element mapping, for example, based on the allocated PRBs for the second TCI state or the second joint/downlink TCI state. The one or more operations may comprise receiving the PDSCH reception, for example, based on (or using) the second PT-RS frequency density. The one or more operations may comprise receiving the PDSCH reception, for example, based on (or using) the second PT-RS resource element mapping.

A base station may send (e.g., transmit), to a wireless device, one or more RRC messages comprising one or more configuration parameters. A base station may perform one or more operations based on one or more conditions. For example, the base station may perform the one or more operations based on a first condition of the one or more configuration parameters comprising a higher layer parameter *repetitionScheme* set to 'fdmSchemeA' or 'fdmSchemeB', based on a second condition of the base station sending (e.g., transmitting), to the wireless device, DCI scheduling/activating a PDSCH reception, and based on a third condition of *'Antenna Port(s)'* field in the DCI indicating DM-RS port(s) within one CDM group. Additionally, the base station may perform the one or more operations based on one or more fourth conditions such as:

a codepoint of *'Transmission Configuration Indication'* field in the DCI indicating two TCI states when/if the one or more configuration parameters do not comprise a higher layer parameter *dl-OrJointTCI-StateList,* or

a codepoint of *'TCI selection'* field in the DCI indicating two joint/downlink TCI states when/if the one or more configuration parameters comprise a higher layer parameter *dl-OrJointTCI-StateList* and a higher layer parameter *tciSelection-PresentInDCI,* or

the one or more configuration parameters comprising a higher layer parameter *dl-OrJointTCI-StateList* and not comprising a higher layer parameter *tciSelection-PresentInDCI.*

Based on the first condition, the second condition, the third condition, and the one or more fourth conditions being satisfied, the base station may perform the one or more operations. The one or more operations may comprise sending (e.g., transmitting), to the wireless device, a (single) PT-RS associated with a lowest indexed DM-RS antenna port among the DM-RS antenna port(s) assigned for the PDSCH reception (e.g., corresponding to step 2541 of FIG. 25B). The one or more operations may comprise determining a first PT-RS frequency density, for example, based on a number (or quantity) of PRBs associated/allocated to the first TCI state of the two TCI states or the first joint/downlink TCI state of the two joint/downlink TCI states. The one or more operations may comprise determining a first PT-RS resource element mapping, for example, based on the allocated PRBs for the first TCI state or the first joint/downlink TCI state. The one or more operations may comprise sending (e.g., transmitting), to the wireless device, the PDSCH reception, for example, based on (or using) the first PT-RS frequency density. The one or more operations may comprise sending (e.g., transmitting), to the wireless device, the PDSCH reception, for example, based on (or using) the first PT-RS resource element mapping. The one or more operations may comprise determining a second PT-RS frequency density, for example, based on a number (or quantity) of PRBs associated/allocated to the second TCI state of the two TCI states or the second joint/downlink TCI state of the two joint/downlink TCI states. The one or more operations may comprise determining a second PT-RS resource element mapping, for example, based on the allocated PRBs for the second TCI state or the second joint/downlink TCI state. The one or more operations may comprise sending (e.g., transmitting), to the wireless device, the PDSCH reception, for example, based on (or using) the second PT-RS frequency density. The one or more operations may comprise sending (e.g., transmitting), to the wireless device, the PDSCH reception, for example, based on (or using) the second PT-RS resource element mapping.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, one or more messages comprising: a repetition scheme parameter indicating a time domain scheme or a frequency domain scheme; and a downlink-or-joint transmission configuration indication (TCI) state list parameter.

Clause 2. The method of clause 1, further comprising: receiving downlink control information (DCI).

Clause 3. The method of clause 1 or clause 2, further comprising: determining to apply two TCI states to a physical downlink shared channel (PDSCH) based on: an absence of a TCI selection field in the DCI; or a value, of the TCI selection field in the DCI, indicating to apply two TCI states.

Clause 4. The method of any one of clauses 1 to 3, further comprising: determining, based on the determining to apply two TCI states to the PDSCH, a transport block size (TBS) of a first PDSCH transmission occasion associated with a first TCI state of the two TCI states.

Clause 5. The method of any one of clauses 1 to 4, further comprising: performing PDSCH reception using the determined TBS via both: the first PDSCH transmission occasion associated with the first TCI state of the two TCI states; and a second PDSCH transmission occasion associated with a second TCI state of the two TCI states.

Clause 6. The method of any one of clauses 1 to 5, wherein the DCI comprises an antenna port field indicating one or more demodulation reference signal (DM-RS) ports within one code division multiplexing (CDM) group, and wherein the performing the PDSCH reception comprises receiving a phase-tracking reference signal (PT-RS) associated with a lowest indexed DM-RS port among the one or more DM-RS ports assigned for the PDSCH.

Clause 7. The method of any one of clauses 1 to 6, wherein the determining the TBS is based on one or more of: the one or more messages comprising the downlink-or-joint TCI state list parameter; the DCI indicating one or more demodulation reference signal (DM-RS) ports within one code division multiplexing (CDM) group; a total quantity of allocated physical resource blocks corresponding to the first TCI state; or a quantity of allocated symbols corresponding to the first TCI state.

Clause 8. The method of any one of clauses 1 to 7, wherein the performing the PDSCH reception using the determined TBS comprises: receiving, via the first PDSCH transmission occasion, at least one first transport block having a size corresponding to the TBS; and receiving, via the second PDSCH transmission occasion, at least one second transport block having a size corresponding to the TBS.

Clause 9. The method of any one of clauses 1 to 8, wherein the repetition scheme parameter indicates a frequency domain scheme that is a frequency domain multiplexing (FDM) scheme.

Clause 10. The method of any one of clauses 1 to 9, wherein the repetition scheme parameter indicates a time domain scheme that is a time domain multiplexing (TDM) scheme.

Clause 11. The method of any one of clauses 1 to 10, further comprising: receiving one or more second messages comprising a second repetition scheme parameter indicating the time domain scheme or the frequency domain scheme; receiving second DCI configured to schedule a second PDSCH reception, wherein the second DCI comprises a TCI field indicating second two TCI states for the second PDSCH reception; based on the second DCI indicating the second two TCI states for the second PDSCH reception, determining a second TBS for a third PDSCH transmission occasion associated with a first TCI state of the second two TCI states; and performing the second PDSCH reception using the determined second TBS via both: the third PDSCH transmission occasion associated with the first TCI state of the second two TCI states; and a fourth PDSCH transmission occasion associated with a second TCI state of the second two TCI states.

Clause 12. A method comprising: receiving, by a wireless device, one or more messages comprising: a repetition scheme parameter indicating a time domain scheme or a frequency domain scheme; and a downlink-or-joint transmission configuration indication (TCI) state list parameter.

Clause 13. The method of clause 12, further comprising: receiving downlink control information (DCI).

Clause 14. The method of clause 12 or clause 13, further comprising: determining to apply two TCI states to a physical downlink shared channel (PDSCH) based on: an absence of a TCI selection field in the DCI; or a value, of the TCI selection field in the DCI, indicating to apply two TCI states.

Clause 15. The method of any one of clauses 12 to 14, further comprising: determining, based on the determining to apply two TCI states to the PDSCH, a transport block size (TBS) of a first PDSCH transmission occasion associated with a first TCI state of the two TCI states.

Clause 16. The method of any one of clauses 12 to 15, further comprising: applying the determined TBS of the first PDSCH transmission occasion to a second PDSCH transmission occasion associated with a second TCI state of the two TCI states.

Clause 17. The method of any one of clauses 12 to 16, wherein the DCI comprises an antenna port field indicating one or more demodulation reference signal (DM-RS) ports within one code division multiplexing (CDM) group, and the method further comprises receiving a phase-tracking reference signal (PT-RS) associated with a lowest indexed DM-RS port among the one or more DM-RS ports assigned for the PDSCH.

Clause 18. The method of any one of clauses 12 to 17, wherein the determining the TBS is based on one or more of: the one or more messages comprising the downlink-or-joint TCI state list parameter; the DCI indicating one or more demodulation reference signal (DM-RS) ports within one code division multiplexing (CDM) group; a total quantity of allocated physical resource blocks corresponding to the first TCI state; or a quantity of allocated symbols corresponding to the first TCI state.

Clause 19. The method of any one of clauses 12 to 18, further comprises: receiving, via the first PDSCH transmission occasion, at least one first transport block having a size corresponding to the TBS; and receiving, via the second PDSCH transmission occasion, at least one second transport block having a size corresponding to the TBS.

Clause 20. The method of any one of clauses 12 to 19, wherein the repetition scheme parameter indicates a frequency domain scheme that is a frequency domain multiplexing (FDM) scheme.

Clause 21. The method of any one of clauses 12 to 20, wherein the repetition scheme parameter indicates a time domain scheme that is a time domain multiplexing (TDM) scheme.

Clause 22. The method of any one of clauses 12 to 21, further comprising: receiving one or more second messages comprising a second repetition scheme parameter indicating the time domain scheme or the frequency domain scheme; receiving second DCI configured to schedule a second PDSCH reception, wherein the second DCI comprises a TCI field indicating second two TCI states for the second PDSCH reception; based on the second DCI indicating the second two TCI states for the second PDSCH reception, determining a second TBS for a third PDSCH transmission occasion associated with a first TCI state of the second two TCI states; and applying the determined second TBS of the third PDSCH transmission occasion to a fourth PDSCH transmission occasion associated with a second TCI state of the second two TCI states.

Clause 23. A method comprising: receiving, by a wireless device, one or more messages comprising: a repetition scheme parameter indicating a frequency domain scheme; and a downlink-or-joint transmission configuration indication (TCI) state list parameter.

Clause 24. The method of clause 23, further comprising: receiving downlink control information (DCI), wherein the DCI comprises an antenna port field indicating one or more demodulation reference signal (DM-RS) ports within one code division multiplexing (CDM) group.

Clause 25. The method of clause 23 or clause 24, further comprising: determining to apply two TCI states to a physical downlink shared channel (PDSCH) based on: an absence of a TCI selection field in the DCI; or a value, of the TCI selection field in the DCI, indicating to apply two TCI states.

Clause 26. The method of any one of clauses 23 to 25, further comprising: receiving, based on the determining to apply two TCI states to the PDSCH, a phase-tracking reference signal (PT-RS) associated with a lowest indexed DM-RS port among the one or more DM-RS ports assigned for the PDSCH.

Clause 27. The method of any one of clauses 23 to 26, further comprising: determining, based on the determining to apply two TCI states to the PDSCH, a transport block size (TBS) of a first PDSCH transmission occasion associated with a first TCI state of the two TCI states; and performing PDSCH reception using the determined TBS via both: the first PDSCH transmission occasion associated with the first TCI state of the two TCI states; and a second PDSCH transmission occasion associated with a second TCI state of the two TCI states.

Clause 28. The method of any one of clauses 23 to 27, further comprising: determining, based on the determining to apply two TCI states to the PDSCH, a transport block size (TBS) of a first PDSCH transmission occasion associated with a first TCI state of the two TCI states; and applying the determined TBS of the first PDSCH transmission occasion to a second PDSCH transmission occasion associated with a second TCI state of the two TCI states.

Clause 29. The method of any one of clauses 23 to 28, wherein the frequency domain scheme is one of: a first frequency domain multiplexing (FDM) scheme; or a second FDM scheme different from the first FDM scheme.

Clause 30. The method of any one of clauses 23 to 29, wherein the receiving the PT-RS is further based on one or more of: the one or more messages comprising the downlink-or-joint TCI state list parameter; a codepoint of the TCI selection field in the DCI indicating to apply the two TCI states to the PDSCH reception; the one or more messages not comprising a TCI selection parameter; or the DCI indicating the one or more DM-RS ports within one CDM group.

Clause 31. The method of any one of clauses 23 to 30, further comprising: receiving one or more second messages comprising a second repetition scheme parameter indicating the frequency domain scheme; receiving second DCI configured to schedule a second PDSCH reception, wherein the second DCI comprises: a second antenna port field indicating one or more second DM-RS ports within one CDM group; and a TCI field indicating second two TCI states for the second PDSCH reception; and based on the second DCI indicating the second two TCI states for the second PDSCH reception, receiving a second PT-RS associated with a lowest indexed DM-RS port among the one or more second DM-RS ports assigned for the second PDSCH reception.

Clause 32. A computing device comprising: one or more processors; and memory storing instructions that, when executed by the one or more processors, cause the computing device to perform the method of any one of clauses 1 to 31.

Clause 33. A system comprising: a wireless device configured to perform the method of any one of clauses 1 to 31; and a base station configured to send the one or more messages.

Clause 34. A computer-readable medium storing instructions that, when executed, cause performance of the method of any one of clauses 1 to 31.

Clause 35. A method comprising: receiving, by a wireless device, one or more messages comprising: a repetition scheme parameter indicating a time domain scheme or a frequency domain scheme; a downlink-or-joint transmission configuration indication (TCI) state list parameter.

Clause 36. The method of clause 35, further comprising: receiving a downlink control information (DCI) scheduling or activating a physical downlink shared channel (PDSCH) reception, wherein: a TCI selection field in the DCI indicates to apply two TCI states to the PDSCH reception; or an absence of a TCI selection field in the DCI indicates to apply two TCI states to the PDSCH reception.

Clause 37. The method of clause 35 or clause 36, further comprising: based on the TCI selection field or the absence of the TCI selection field indicating to apply the two TCI states to the PDSCH reception, determining a transport block size (TBS) for a first PDSCH transmission occasion associated with a first TCI state of the two TCI states.

Clause 38. The method of any one of clauses 35 to 37, further comprising: receiving the PDSCH reception using the TBS in both: the first PDSCH transmission occasion; and a second PDSCH transmission occasion associated with a second TCI state of the two TCI states.

Clause 39. The method of any one of clauses 35 to 38, wherein the determining the TBS is based on the one or more messages comprising the downlink-or-joint TCI state list parameter.

Clause 40. The method of any one of clauses 35 to 39, wherein the TCI selection field is different from a TCI field.

Clause 41. The method of any one of clauses 35 to 40, wherein the DCI comprises an antenna port field indicating one or more demodulation reference signal (DM-RS) ports within one code division multiplexing (CDM) group.

Clause 42. The method of any one of clauses 35 to 41, wherein the determining the TBS is further based on the DCI indicating the one or more DM-RS ports within one CDM group.

Clause 43. The method of any one of clauses 35 to 42, wherein the one or more messages do not comprise a TCI selection parameter that indicates the presence of a TCI selection field in a DCI format, wherein the DCI is with the DCI format.

Clause 44. The method of any one of clauses 35 to 43, wherein the one or more messages not comprising the TCI selection parameter indicates to apply the two TCI states to the PDSCH reception.

Clause 45. The method of any one of clauses 35 to 44, wherein the receiving the PDSCH reception using the TBS comprises applying the TBS to both: the first PDSCH transmission occasion; and the second PDSCH transmission occasion.

Clause 46. The method of any one of clauses 35 to 45, wherein the frequency domain scheme is a frequency domain multiplexing (FDM) scheme (e.g., fdmSchemeB).

Clause 47. The method of any one of clauses 35 to 46, wherein in the FDM scheme, the receiving the PDSCH reception is in two PDSCH transmission occasions with the non-overlapping frequency domain resources, wherein: each TCI state of the two TCI states is associated with a respective PDSCH transmission occasion of the two PDSCH transmission occasions; and the two PDSCH transmission occasions comprise the first PDSCH transmission and the second PDSCH transmission occasion.

Clause 48. The method of any one of clauses 35 to 47, wherein the determining the TBS is based on a total number of allocated physical resource blocks corresponding to the first TCI state.

Clause 49. The method of any one of clauses 35 to 48, wherein the time domain scheme is a time domain multiplexing (TDM) scheme (e.g., tdmSchemeA).

Clause 50. The method of any one of clauses 35 to 49, wherein in the TDM scheme, the receiving the PDSCH reception is in two PDSCH transmission occasions with the non-overlapping time domain resources, wherein: each TCI state of the two TCI states is associated with a respective PDSCH transmission occasion of the two PDSCH transmission occasions; and the two PDSCH transmission occasions comprise the first PDSCH transmission and the second PDSCH transmission occasion.

Clause 51. The method of any one of clauses 35 to 50, wherein the determining the TBS is based on a number of allocated symbols corresponding to the first TCI state.

Clause 52. The method of any one of clauses 35 to 51, further comprising receiving one or more second messages comprising a second repetition scheme parameter indicating the time domain scheme or the frequency domain scheme; receiving a second DCI scheduling or activating a second PDSCH reception, wherein the second DCI comprises a TCI field indicating second two TCI states for the second PDSCH reception; based on the second DCI indicating the second two TCI states for the second PDSCH reception, determining a second TBS for a third PDSCH transmission occasion associated with a first TCI state of the second two TCI states receiving: receiving the third PDSCH reception using the second TBS in both: the third PDSCH transmission occasion; and a fourth PDSCH transmission occasion associated with a second TCI state of the second two TCI states.

Clause 53. The method of any one of clauses 35 to 52, wherein the one or more second messages do not comprise a downlink-or-joint TCI state list parameter (e.g., dl-OrJointTCI-StateList).

Clause 54. A method comprising: receiving, by a wireless device, one or more messages comprising: a repetition scheme parameter indicating a frequency domain scheme; and a downlink-or-joint transmission configuration indication (TCI) state list parameter.

Clause 55. The method of clause 54, further comprising: receiving a downlink control information (DCI) scheduling or activating a physical downlink shared channel (PDSCH) reception, wherein the DCI comprises an antenna port field indicating one or more demodulation reference signal (DM-RS) ports within one code division multiplexing (CDM) group.

Clause 56. The method of clause 54 or clause 55, further comprising: based on a TCI selection field in the DCI indicating to apply two TCI states to the PDSCH reception or the DCI not comprising a TCI selection field, receiving a phase-tracking reference signal (PT-RS) port associated with a lowest indexed DM-RS port among the one or more DM-RS ports assigned for the PDSCH reception.

Clause 57. The method of any one of clauses 54 to 56, further comprising determining a PT-RS frequency density based on a number of physical resource blocks (PRBs) for each TCI state of the two TCI states.

Clause 58. The method of any one of clauses 54 to 57, wherein a PT-RS resource element mapping is associated to allocated PRBs for each TCI state of the two TCI states.

Clause 59. The method of any one of clauses 54 to 58, wherein the frequency domain scheme is: a first frequency domain multiplexing (FDM) scheme (e.g., fdmSchemeA); or a second FDM scheme (e.g., fdmSchemeB).

Clause 60. The method of any one of clauses 54 to 59, wherein in the first FDM scheme, the receiving the PDSCH reception is in a single PDSCH transmission occasion with the non-overlapping frequency domain resources, wherein each TCI state of the two TCI states is associated with a respective frequency domain resource of the non-overlapping frequency domain resources.

Clause 61. The method of any one of clauses 54 to 60, wherein in the second FDM scheme, the receiving the PDSCH reception is in two PDSCH transmission occasions with the non-overlapping frequency domain resources, wherein each TCI state of the two TCI states is associated with a respective PDSCH transmission occasion of the two PDSCH transmission occasions.

Clause 62. The method of any one of clauses 54 to 61, wherein the receiving the PT-RS port is further based on the one or more messages comprising the downlink-or-joint TCI state list parameter.

Clause 63. The method of any one of clauses 54 to 62, wherein the receiving the PT-RS port is further based on a codepoint of the TCI selection field in the DCI indicating to apply the two TCI states to the PDSCH reception.

Clause 64. The method of any one of clauses 54 to 63, wherein the one or more messages do not comprise a TCI selection parameter that indicates the presence of a TCI selection field in a DCI format, wherein the DCI is with the DCI format.

Clause 65. The method of any one of clauses 54 to 64, wherein the receiving the PT-RS port is further based on the one or more messages not comprising the TCI selection parameter.

Clause 66. The method of any one of clauses 54 to 65, wherein the receiving the PT-RS port is further based on the DCI indicating the one or more DM-RS ports within one CDM group.

Clause 67. The method of any one of clauses 54 to 66, wherein the TCI selection field is different from a TCI field.

Clause 68. The method of any one of clauses 54 to 67, wherein the PT-RS port is a single PT-RS port.

Clause 69. The method of any one of clauses 54 to 68, further comprising receiving one or more second messages comprising a second repetition scheme parameter indicating the frequency domain scheme; receiving a second DCI scheduling or activating a second PDSCH reception with a second number of RBs, wherein the second DCI comprises: a second antenna port field indicating one or more second DM-RS ports within one CDM group; and a TCI field indicating second two TCI states for the second PDSCH reception; and based on the second DCI indicating the second two TCI states for the second PDSCH reception, receiving a second PT-RS port associated with a lowest indexed DM-RS port among the one or more second DM-RS ports assigned for the second PDSCH reception.

Clause 70. The method of any one of clauses 54 to 69, wherein the one or more second messages do not comprise a downlink-or-joint TCI state list parameter.

Clause 71. A method comprising: receiving, by a wireless device from a base station, one or more messages comprising one or more configuration parameters of a cell, wherein the one or more configuration parameters indicate: two discontinuous transmission (DTX) configurations; and two search space sets linked for physical downlink control channel (PDCCH) repetition.

Clause 72. The method of clause 71, further comprising: receiving a control command indicating activation of a first DTX configuration of the two DTX configurations.

Clause 73. The method of clause 71 or clause 72, further comprising: monitoring, for detection of a DCI format (or of repetitions of a DCI format) with same information and during/in an active time/period/duration of the first DTX configuration, two PDCCH candidates in/for/of the two search space sets.

Clause 74. The method of any one of clauses 71 to 73, further comprising: receiving, via at least one PDCCH candidate of the two PDCCH candidates, a first DCI with the DCI format, wherein the first DCI schedules/triggers a first uplink transmission or a first downlink reception.

Clause 75. The method of any one of clauses 71 to 74, further comprising: performing the first uplink transmission or the first downlink reception based on a PDCCH candidate, among the two PDCCH candidates, that ends later.

Clause 76. The method of any one of clauses 71 to 75, further comprising: monitoring, for detection of the DCI format and during/in a non-active time/period/duration of the first DTX configuration, a second PDCCH candidate, of the two PDCCH candidates, in/for/of a first search space set of the two search space sets.

Clause 77. The method of any one of clauses 71 to 76, further comprising: not monitoring, during/in the non-active time/period/duration of the first DTX configuration, a first PDCCH candidate, of the two PDCCH candidates, in/for/of a second search space set of the two search space sets.

Clause 78. The method of any one of clauses 71 to 77, further comprising: receiving, via the second PDCCH candidate, a second DCI with the DCI format, wherein the second DCI schedules/triggers a second uplink transmission or a second downlink reception.

Clause 79. The method of any one of clauses 71 to 78, further comprising: based on not monitoring the first PDCCH candidate during the non-active time/period/duration of the first DTX configuration, performing the second uplink transmission or the second downlink reception based on the first second candidate that the second DCI is received.

A wireless device may perform a method comprising multiple operations. The wireless device may receive one or more messages comprising a repetition scheme parameter indicating a time domain scheme or a frequency domain scheme and a downlink-or-joint transmission configuration indication (TCI) state list parameter. The wireless device may receive downlink control information (DCI). The wireless device may determine to apply two TCI states to a physical downlink shared channel (PDSCH) based on: an absence of a TCI selection field in the DCI; or a value, of the TCI selection field in the DCI, indicating to apply two TCI states. The wireless device may determine a transport block size (TBS) of a first PDSCH transmission occasion associated with a first TCI state of two TCI states, for example, based on the determining to apply two TCI states to the PDSCH. The wireless device may perform PDSCH reception using the determined TBS in/via both: the first PDSCH transmission occasion associated with the first TCI state of the two TCI states; and a second PDSCH transmission occasion associated with a second TCI state of the two TCI states. The DCI may comprise an antenna port field indicating one or more demodulation reference signal (DM-RS) ports within one code division multiplexing (CDM) group, and the performing the PDSCH reception may comprise receiving a phase-tracking reference signal (PT-RS) associated with a lowest indexed DM-RS port among the one or more DM-RS ports assigned for the PDSCH reception. The determining the TBS may be based on one or more of: the one or more messages comprising the downlink-or-joint TCI state list parameter; the DCI indicating one or more demodulation reference signal (DM-RS) ports within one code division multiplexing (CDM) group; a total quantity of allocated physical resource blocks corresponding to the first TCI state; or a quantity of allocated symbols corresponding to the first TCI state. The performing the PDSCH reception using the determined TBS may comprise receiving, for example, via the first PDSCH transmission occasion, at least one first transport block having a size corresponding to the TBS. The performing the PDSCH reception using the determined TBS may comprise receiving, for example, via the second PDSCH transmission occasion, at least one second transport block having a size corresponding to the TBS. The repetition scheme parameter may indicate a frequency domain scheme that may be a frequency domain multiplexing (FDM) scheme. The repetition scheme parameter may indicate a time domain scheme that may be a time domain multiplexing (TDM) scheme. The wireless device may receive one or more second messages comprising a second repetition scheme parameter indicating the time domain scheme or the frequency domain scheme. The wireless device may receive second DCI configured to schedule a second PDSCH reception. The second DCI may comprise a TCI field indicating second two TCI states for the second PDSCH reception. The wireless device may determine a second TBS for a third PDSCH transmission occasion associated with a first TCI state of the second two TCI states, for example, based on the second DCI indicating the second two TCI states for the second PDSCH reception. The wireless device may perform the second PDSCH reception using the determined second TBS in/via both: the third PDSCH transmission occasion associated with the first TCI state of the second two TCI states; and a fourth PDSCH transmission occasion associated with a second TCI state of the second two TCI states. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a time domain scheme or a frequency domain scheme and a downlink-or-joint transmission configuration indication (TCI) state list parameter. The wireless device may receive downlink control information (DCI). The wireless device may determine to apply two TCI states to a physical downlink shared channel (PDSCH) based on: an absence of a TCI selection field in the DCI; or a value, of the TCI selection field in the DCI, indicating to apply two TCI states. The wireless device may determine a transport block size (TBS) of a first PDSCH transmission occasion associated with a first TCI state of two TCI states, for example, based on the determining to apply two TCI states to the PDSCH. The wireless device may apply the determined TBS of the first PDSCH transmission occasion to a second PDSCH transmission occasion associated with a second TCI state of the two TCI states. The DCI may comprise an antenna port field indicating one or more demodulation reference signal (DM-RS) ports within one code division multiplexing (CDM) group. The wireless device may receive a phase-tracking reference signal (PT-RS) associated with a lowest indexed DM-RS port among the one or more DM-RS ports assigned for the PDSCH. The determining the TBS may be based on one or more of: the one or more messages comprising the downlink-or-joint TCI state list parameter; the DCI indicating one or more demodulation reference signal (DM-RS) ports within one code division multiplexing (CDM) group; a total quantity of allocated physical resource blocks corresponding to the first TCI state; or a quantity of allocated symbols corresponding to the first TCI state. The wireless device may receive at least one first transport block having a size corresponding to the TBS, for example, via the first PDSCH transmission occasion. The wireless device may receive at least one second transport block having a size corresponding to the TBS, for example, via the second PDSCH transmission occasion. The repetition scheme parameter may indicate a frequency domain scheme that may be a frequency domain multiplexing (FDM) scheme. The repetition scheme parameter may indicate a time domain scheme that may be a time domain multiplexing (TDM) scheme. The wireless device may receive one or more second messages comprising a second repetition scheme parameter indicating the time domain scheme or the frequency domain scheme. The wireless device may receive second DCI configured to schedule a second PDSCH reception. The second DCI may comprise a TCI field indicating second two TCI states for the second PDSCH reception. The wireless device may determine a second TBS for a third PDSCH transmission occasion associated with a first TCI state of the second two TCI states, for example, based on the second DCI indicating the second two TCI states for the second PDSCH reception. The wireless device may apply the determined second TBS of the third PDSCH transmission occasion to a fourth PDSCH transmission occasion associated with a second TCI state of the second two TCI states. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a frequency domain scheme and a downlink-or-joint transmission configuration indication (TCI) state list parameter. The wireless device may receive downlink control information (DCI). The DCI may comprise an antenna port field indicating one or more demodulation reference signal (DM-RS) ports within one code division multiplexing (CDM) group. The wireless device may determine to apply two TCI states to a physical downlink shared channel (PDSCH) based on: an absence of a TCI selection field in the DCI; or a value, of the TCI selection field in the DCI, indicating to apply two TCI states. The wireless device may receive a phase-tracking reference signal (PT-RS) associated with a lowest indexed DM-RS port among the one or more DM-RS ports assigned for the PDSCH reception, for example, based on the determining to apply two TCI states to the PDSCH. The wireless device may determine a transport block size (TBS) for a first PDSCH transmission occasion associated with a first TCI state of the two TCI states, for example, based on the determining to apply two TCI states to the PDSCH. The wireless device may perform the PDSCH reception using the determined TBS via both: the first PDSCH transmission occasion associated with the first TCI state of the two TCI states; and a second PDSCH transmission occasion associated with a second TCI state of the two TCI states. The wireless device may determine a transport block size (TBS) of a first PDSCH transmission occasion associated with a first TCI state of the two TCI states, for example, based on the determining to apply two TCI states to the PDSCH. The wireless device may apply the determined TBS of the first PDSCH transmission occasion to a second PDSCH transmission occasion associated with a second TCI state of the two TCI states. The frequency domain scheme may be one of: a first frequency domain multiplexing (FDM) scheme; or a second FDM scheme different from the first FDM scheme. The receiving the PT-RS may be further based on one or more of: the one or more messages may comprise the downlink-or-joint TCI state list parameter; a codepoint of the TCI selection field in the DCI may indicate to apply the two TCI states to the PDSCH reception; the one or more messages may not comprise a TCI selection parameter; or the DCI may indicate the one or more DM-RS ports within one CDM group. The wireless device may receive one or more second messages comprising a second repetition scheme parameter indicating the frequency domain scheme. The wireless device may receive second DCI configured to schedule a second PDSCH reception. The second DCI may comprise a second antenna port field indicating one or more second DM-RS ports within one CDM group and a TCI field indicating second two TCI states for the second PDSCH reception. The wireless device may receive a second PT-RS associated with a lowest indexed DM-RS port among the one or more second DM-RS ports assigned for the second PDSCH reception, for example, based on the second DCI indicating the second two TCI states for the second PDSCH reception. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a time domain scheme or a frequency domain scheme and a downlink-or-joint transmission configuration indication (TCI) state list parameter. The wireless device may receive downlink control information (DCI) configured to schedule a physical downlink shared channel (PDSCH) reception. A TCI selection field in the DCI may indicate to apply two TCI states to the PDSCH reception. Alternatively, an absence of a TCI selection field in the DCI may indicate to apply two TCI states to the PDSCH reception. The wireless device may determine a transport block size (TBS) for a first PDSCH transmission occasion associated with a first TCI state of two TCI states, for example, based on the TCI selection field or the absence of the TCI selection field indicating to apply the two TCI states to the PDSCH reception. The wireless device may receive the PDSCH reception using the TBS in/via both: the first PDSCH transmission occasion associated with the first TCI state of the two TCI states; and a second PDSCH transmission occasion associated with a second TCI state of the two TCI states. The DCI may comprise an antenna port field indicating one or more demodulation reference signal (DM-RS) ports within one code division multiplexing (CDM) group, and the receiving the PDSCH reception may comprise receiving a phase-tracking reference signal (PT-RS) associated with a lowest indexed DM-RS port among the one or more DM-RS ports assigned for the PDSCH reception. The determining the TBS may be based on one or more of: the one or more messages comprising the downlink-or-joint TCI state list parameter; the DCI indicating one or more demodulation reference signal (DM-RS) ports within one code division multiplexing (CDM) group; a total quantity of allocated physical resource blocks corresponding to the first TCI state; or a quantity of allocated symbols corresponding to the first TCI state. The receiving the PDSCH reception using the TBS may comprise receiving, for example, via the first PDSCH transmission occasion, at least one first transport block having a size corresponding to the TBS. The receiving the PDSCH reception using the TBS may comprise receiving, for example, via the second PDSCH transmission occasion, at least one second transport block having a size corresponding to the TBS. The repetition scheme parameter may be a frequency domain scheme that may be a frequency domain multiplexing (FDM) scheme. The repetition scheme parameter may indicate a time domain scheme that may be a time domain multiplexing (TDM) scheme. The wireless device may receive one or more second messages comprising a second repetition scheme parameter indicating the time domain scheme or the frequency domain scheme. The wireless device may receive second DCI configured to schedule a second PDSCH reception. The second DCI may comprise a TCI field indicating second two TCI states for the second PDSCH reception. The wireless device may determine a second TBS for a third PDSCH transmission occasion associated with a first TCI state of the second two TCI states, for example, based on the second DCI indicating the second two TCI states for the second PDSCH reception. The wireless device may receive the second PDSCH reception using the second TBS in/via both: the third PDSCH transmission occasion associated with the first TCI state of the second two TCI states; and a fourth PDSCH transmission occasion associated with a second TCI state of the second two TCI states. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a frequency domain scheme and a downlink-or-joint transmission configuration indication (TCI) state list parameter. The wireless device may receive downlink control information (DCI) configured to schedule a physical downlink shared channel (PDSCH) reception. The DCI may comprise an antenna port field indicating one or more demodulation reference signal (DM-RS) ports within one code division multiplexing (CDM) group. The wireless device may receive a phase-tracking reference signal (PT-RS) associated with a lowest indexed DM-RS port among the one or more DM-RS ports assigned for the PDSCH reception. The receiving may be based on a TCI selection field in the DCI indicating to apply two TCI states to the PDSCH reception. Alternatively, the receiving may be based on an absence of a TCI selection field in the DCI. The wireless device may determine a transport block size (TBS) for a first PDSCH transmission occasion associated with a first TCI state of the two TCI states, for example, based on the TCI selection field or the absence of the TCI selection field indicating to apply the two TCI states to the PDSCH reception. The wireless device may receive the PDSCH reception using the TBS via both: the first PDSCH transmission occasion associated with the first TCI state of the two TCI states; and a second PDSCH transmission occasion associated with a second TCI state of the two TCI states. A wireless device may determine a PT-RS frequency density, for example, based on a quantity of physical resource blocks (PRBs) for each TCI state of the two TCI states. The frequency domain scheme may be one of: a first frequency domain multiplexing (FDM) scheme; or a second FDM scheme different from the first FDM scheme. The receiving the PT-RS may be further based on one or more of: the one or more messages may comprise the downlink-or-joint TCI state list parameter; a codepoint of the TCI selection field in the DCI may indicate to apply the two TCI states to the PDSCH reception; the one or more messages may not comprise a TCI selection parameter; or the DCI may indicate the one or more DM-RS ports within one CDM group. The receiving the PT-RS may comprise receiving the PT-RS via a single PT-RS port. The wireless device may receive one or more second messages comprising a second repetition scheme parameter indicating the frequency domain scheme. The wireless device may receive second DCI configured to schedule a second PDSCH reception. The second DCI may comprise a second antenna port field indicating one or more second DM-RS ports within one CDM group and a TCI field indicating second two TCI states for the second PDSCH reception. The wireless device may receive a second PT-RS associated with a lowest indexed DM-RS port among the one or more second DM-RS ports assigned for the second PDSCH reception, for example, based on the second DCI indicating the second two TCI states for the second PDSCH reception. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A base station may perform a method comprising multiple operations. The base station may send one or more messages comprising a repetition scheme parameter indicating a time domain scheme or a frequency domain scheme and a downlink-or-joint transmission configuration indication (TCI) state list parameter. The base station may send downlink control information (DCI) configured to schedule a physical downlink shared channel (PDSCH) transmission. A TCI selection field in the DCI may indicate to apply two TCI states to the PDSCH transmission. Alternatively, an absence of a TCI selection field in the DCI may indicate to apply two TCI states to the PDSCH transmission. The base station may determine a transport block size (TBS) for a first PDSCH transmission occasion associated with a first TCI state of the two TCI states, for example, based on the TCI selection field, or the absence of the TCI selection field, indicating to apply the two TCI states to the PDSCH transmission. The base station may send the PDSCH transmission using the TBS in/via both: the first PDSCH transmission occasion associated with the first TCI state of the two TCI states; and a second PDSCH transmission occasion associated with a second TCI state of the two TCI states. The DCI may comprise an antenna port field indicating one or more demodulation reference signal (DM-RS) ports within one code division multiplexing (CDM) group. The sending the PDSCH transmission may comprise sending a phase-tracking reference signal (PT-RS) associated with a lowest indexed DM-RS port among the one or more DM-RS ports assigned for the PDSCH transmission. The base station may determine the TBS, for example, based on the one or more of: the one or more messages comprising the downlink-or-joint TCI state list parameter; the DCI indicating one or more DM-RS ports within one CDM group; a total quantity of allocated physical resource blocks corresponding to the first TCI state; or a quantity of allocated symbols corresponding to the first TCI state. The repetition scheme parameter may indicate a frequency domain scheme that is a frequency domain multiplexing (FDM) scheme. The repetition scheme parameter may indicate a time domain scheme that is a time domain multiplexing (TDM) scheme. The base station may send one or more second messages comprising a second repetition scheme parameter indicating the time domain scheme or the frequency domain scheme. The base station may send second DCI configured to schedule a second PDSCH transmission. The second DCI may comprise a TCI field indicating second two TCI states for the second PDSCH transmission. The base station may determine a second TBS for a third PDSCH transmission occasion associated with a first TCI state of the second two TCI states, for example, based on the second DCI indicating the second two TCI states for the second PDSCH transmission. The base station may send the second PDSCH transmission using the second TBS in/via both: the third PDSCH transmission occasion associated with the first TCI state of the second two TCI states; and a fourth PDSCH transmission occasion associated with a second TCI state of the second two TCI states. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a wireless device configured to receive the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a time domain scheme or a frequency domain scheme. The wireless device may receive one or more messages comprising a downlink-or-joint transmission configuration indication (TCI) state list parameter. The wireless device may receive a downlink control information (DCI) scheduling or activating a physical downlink shared channel (PDSCH) reception. A TCI selection field in the DCI may indicate to apply two TCI states to the PDSCH reception. Alternatively, an absence of a TCI selection field in the DCI may indicate to apply two TCI states to the PDSCH reception. The wireless device may determine a transport block size (TBS) for a first PDSCH transmission occasion associated with a first TCI state of the two TCI states, for example, based on the TCI selection field or the absence of the TCI selection field indicating to apply the two TCI states to the PDSCH reception. The wireless device may receive the PDSCH reception using the TBS in/via both: the first PDSCH transmission occasion and a second PDSCH transmission occasion associated with a second TCI state of the two TCI states. The determining the TBS may be based on the one or more messages comprising the downlink-or-joint TCI state list parameter. The TCI selection field may be different from a TCI field. The DCI may comprise an antenna port field indicating one or more demodulation reference signal (DM-RS) ports within one code division multiplexing (CDM) group. The determining the TBS may be further based on the DCI indicating the one or more DM-RS ports within one CDM group. The one or more messages may not comprise a TCI selection parameter that indicates the presence of a TCI selection field in a DCI format. The DCI may be with the DCI format. The one or more messages may not comprise the TCI selection parameter indicates to apply the two TCI states to the PDSCH reception. The receiving the PDSCH reception using the TBS may comprise applying the TBS to both the first PDSCH transmission occasion and the second PDSCH transmission occasion. The frequency domain scheme may be a frequency domain multiplexing (FDM) scheme (e.g., fdmSchemeB). The receiving the PDSCH reception may be in two PDSCH transmission occasions with the non-overlapping frequency domain resources, for example, in the FDM scheme. Each TCI state of the two TCI states may be associated with a respective PDSCH transmission occasion of the two PDSCH transmission occasions. The two PDSCH transmission occasions may comprise the first PDSCH transmission and the second PDSCH transmission occasion. The determining the TBS may be based on a total number of allocated physical resource blocks corresponding to the first TCI state. The time domain scheme may be a time domain multiplexing (TDM) scheme (e.g., tdmSchemeA). The receiving the PDSCH reception may be in two PDSCH transmission occasions with the non-overlapping time domain resources, for example, in the TDM scheme. Each TCI state of the two TCI states may be associated with a respective PDSCH transmission occasion of the two PDSCH transmission occasions. The two PDSCH transmission occasions may comprise the first PDSCH transmission and the second PDSCH transmission occasion. The determining the TBS may be based on a number of allocated symbols corresponding to the first TCI state. The wireless device may receive one or more second messages comprising a second repetition scheme parameter indicating the time domain scheme or the frequency domain scheme. The wireless device may receive a second DCI scheduling or activating a second PDSCH reception. The second DCI may comprise a TCI field indicating second two TCI states for the second PDSCH reception. The wireless device may determine a second TBS for a third PDSCH transmission occasion associated with a first TCI state of the second two TCI states receiving, for example, based on the second DCI indicating the second two TCI states for the second PDSCH reception. The wireless device may receive the third PDSCH reception using the second TBS in/via both the third PDSCH transmission occasion and a fourth PDSCH transmission occasion associated with a second TCI state of the second two TCI states. The one or more second messages may not comprise a downlink-or-joint TCI state list parameter (e.g., *dl-OrJointTCI-StateList*). The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages comprising a repetition scheme parameter indicating a frequency domain scheme and a downlink-or-joint transmission configuration indication (TCI) state list parameter. The wireless device may receive a downlink control information (DCI) scheduling or activating a physical downlink shared channel (PDSCH) reception. The DCI may comprise an antenna port field indicating one or more demodulation reference signal (DM-RS) ports within one code division multiplexing (CDM) group. The wireless device may receive a phase-tracking reference signal (PT-RS) port associated with a lowest indexed DM-RS port among the one or more DM-RS ports assigned for the PDSCH reception, for example, based on a TCI selection field in the DCI indicating to apply two TCI states to the PDSCH reception or the DCI not comprising a TCI selection field. The wireless device may determine a PT-RS frequency density based on a number of physical resource blocks (PRBs) for each TCI state of the two TCI states. A PT-RS resource element mapping may be associated to allocated PRBs for each TCI state of the two TCI states. The frequency domain scheme may be a first frequency domain multiplexing (FDM) scheme (e.g., fdmSchemeA). Alternatively, the frequency domain scheme may be a second FDM scheme (e.g., fdmSchemeB). The receiving the PDSCH reception may be in a single PDSCH transmission occasion with the non-overlapping frequency domain resources, for example, in the first FDM scheme. Each TCI state of the two TCI states may be associated with a respective frequency domain resource of the non-overlapping frequency domain resources. The receiving the PDSCH reception may be in two PDSCH transmission occasions with the non-overlapping frequency domain resources, for example, in the second FDM scheme. Each TCI state of the two TCI states may be associated with a respective PDSCH transmission occasion of the two PDSCH transmission occasions. The receiving the PT-RS port may be further based on the one or more messages comprising the downlink-or-joint TCI state list parameter. The receiving the PT-RS port may be further based on a codepoint of the TCI selection field in the DCI indicating to apply the two TCI states to the PDSCH reception. The one or more messages may not comprise a TCI selection parameter that indicates the presence of a TCI selection field in a DCI format. The DCI may be with the DCI format. The receiving the PT-RS port may be further based on the one or more messages not comprising the TCI selection parameter. The receiving the PT-RS port may be further based on the DCI indicating the one or more DM-RS ports within one CDM group. The TCI selection field may be different from a TCI field. The PT-RS port may be a single PT-RS port. The wireless device may receive one or more second messages comprising a second repetition scheme parameter indicating the frequency domain scheme. The wireless device may receive a second DCI scheduling or activating a second PDSCH reception with a second number of RBs. The second DCI may comprise: a second antenna port field indicating one or more second DM-RS ports within one CDM group; and a TCI field indicating second two TCI states for the second PDSCH reception. The wireless device may receive a second PT-RS port associated with a lowest indexed DM-RS port among the one or more second DM-RS ports assigned for the second PDSCH reception, for example, based on the second DCI indicating the second two TCI states for the second PDSCH reception. The one or more second messages may not comprise a downlink-or-joint TCI state list parameter. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. A wireless device may receive one or more messages comprising one or more configuration parameters of a cell. The one or more configuration parameters may indicate two discontinuous transmission (DTX) configurations and two search space sets linked for physical downlink control channel (PDCCH) repetition. The wireless device may receive a control command indicating activation of a first DTX configuration of the two DTX configurations. The wireless device may monitor, for example, for detection of a DCI format (or of repetitions of a DCI format) with same information and during/in an active time/period/duration of the first DTX configuration, two PDCCH candidates in/for/of the two search space sets. The wireless device may receive, for example, via at least one PDCCH candidate of the two PDCCH candidates, a first DCI with the DCI format. The first DCI may schedule/trigger a first uplink transmission or a first downlink reception. The wireless device may perform the first uplink transmission or the first downlink reception based on a PDCCH candidate, among the two PDCCH candidates, that ends later. The wireless device may monitor, for example, for detection of the DCI format and during/in a non-active time/-period/duration of the first DTX configuration, a second PDCCH candidate, of the two PDCCH candidates, in/for/of a first search space set of the two search space sets. The wireless device may not monitor, for example, during/in the non-active time/period/duration of the first DTX configuration, a first PDCCH candidate, of the two PDCCH candidates, in/for/of a second search space set of the two search space sets. The wireless device may receive, for example, via the second PDCCH candidate, a second DCI with the DCI format. The second DCI may schedule/trigger a second uplink transmission or a second downlink reception. The wireless device may perform the second uplink transmission or the second downlink reception based on the first second candidate that the second DCI is received, for example, based on not monitoring the first PDCCH candidate during the non-active time/period/duration of the first DTX configuration. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:

   receiving, by a wireless device, one or more messages comprising:

   a repetition scheme parameter indicating a time domain scheme or a frequency domain scheme; and
   a downlink-or-joint transmission configuration indication (TCI) state list parameter;

receiving downlink control information (DCI);
determining to apply two TCI states to a physical downlink shared channel (PDSCH) based on:

an absence of a TCI selection field in the DCI; or
a value, of the TCI selection field in the DCI, indicating to apply two TCI states;

determining, based on the determining to apply two TCI states to the PDSCH, a transport block size (TBS) of a first PDSCH transmission occasion associated with a first TCI state of the two TCI states; and
applying the determined TBS of the first PDSCH transmission occasion to a second PDSCH transmission occasion associated with a second TCI state of the two TCI states.

2. The method of claim 1, wherein the DCI comprises an antenna port field indicating one or more demodulation reference signal (DM-RS) ports within one code division multiplexing (CDM) group, and the method further comprises receiving a phase-tracking reference signal (PT-RS) associated with a lowest indexed DM-RS port among the one or more DM-RS ports assigned for the PDSCH.

3. The method of claim 1 or claim 2, wherein the determining the TBS is based on one or more of:

the one or more messages comprising the downlink-or-joint TCI state list parameter;
the DCI indicating one or more demodulation reference signal (DM-RS) ports within one code division multiplexing (CDM) group;
a total quantity of allocated physical resource blocks corresponding to the first TCI state; or
a quantity of allocated symbols corresponding to the first TCI state.

4. The method of any one of claims 1 to 3, further comprises:

receiving, via the first PDSCH transmission occasion, at least one first transport block having a size corresponding to the TBS; and
receiving, via the second PDSCH transmission occasion, at least one second transport block having a size corresponding to the TBS.

5. The method of any one of claims 1 to 4, wherein the repetition scheme parameter indicates a frequency domain scheme that is a frequency domain multiplexing (FDM) scheme.

6. The method of any one of claims 1 to 5, wherein the repetition scheme parameter indicates a time domain scheme that is a time domain multiplexing (TDM) scheme.

7. The method of any one of claims 1 to 6, further comprising:

receiving one or more second messages comprising a second repetition scheme parameter indicating the time domain scheme or the frequency domain scheme;
receiving second DCI configured to schedule a second PDSCH reception, wherein the second DCI comprises a TCI field indicating second two TCI states for the second PDSCH reception;
based on the second DCI indicating the second two TCI states for the second PDSCH reception, determining a second TBS for a third PDSCH transmission occasion associated with a first TCI state of the second two TCI states; and
applying the determined second TBS of the third PDSCH transmission occasion to a fourth PDSCH transmission occasion associated with a second TCI state of the second two TCI states.

8. The method of any one of claims 1 to 7, wherein the frequency domain scheme is one of:

a first frequency domain multiplexing (FDM) scheme; or
a second FDM scheme different from the first FDM scheme.

9. The method of any one of claims 1 to 8, further comprises receiving a phase-tracking reference signal (PT-RS) via a single PT-RS port.

10. The method of any one of claims 1 to 9, wherein the TCI selection field is different from a TCI field.

11. The method of any one of claims 1 to 10, wherein the repetition scheme parameter indicates a frequency domain scheme that is a frequency domain multiplexing (FDM) scheme, and the method further comprises:
in the FDM scheme, performing PDSCH reception via two PDSCH transmission occasions with non-overlapping frequency domain resources, wherein:

each TCI state of the two TCI states is associated with a respective PDSCH transmission occasion of the two PDSCH transmission occasions; and
the two PDSCH transmission occasions comprise the first PDSCH transmission occasion and the second PDSCH transmission occasion.

12. The method of any one of claims 1 to 11, wherein the repetition scheme parameter indicates a time domain scheme that is a time domain multiplexing (TDM) scheme, and the method further comprises:
in the TDM scheme, performing PDSCH reception via two PDSCH transmission occasions with non-overlapping time domain resources, wherein:

each TCI state of the two TCI states is associated with a respective PDSCH transmission occasion of the two PDSCH transmission occasions; and
the two PDSCH transmission occasions comprise the first PDSCH transmission occasion and the second PDSCH transmission occasion.

13. A computing device comprising:

one or more processors; and
memory storing instructions that, when executed by the one or more processors, cause the computing device to perform the method of any one of claims 1 to 12.

14. A system comprising:

a wireless device configured to perform the method of any one of claims 1 to 12; and
a base station configured to send the one or more messages.

15. A computer-readable medium storing instructions that, when executed, cause performance of the method of any one of claims 1 to 12.

**FIG. 1A**

**FIG. 1B**

EP 4 531 322 A1

**FIG. 2A**

**FIG. 2B**

**IP Packets**

QoS
Flows

SDAP
215/225

QoS Flow Handling

Radio
Bearers

Header Comp.,
Ciphering

Header Comp.,
Ciphering

PDCP
214/224

Reordering,
Retransmission

Reordering,
Retransmission

RLC
Channels

RLC
213/223

Segmentation,
ARQ

Segmentation,
ARQ

Logical
Channels

Multiplexing

MAC
212/222

HARQ

Transport
Channel

PHY
211/221

Coding, Resource Mapping

**FIG. 3**

**FIG. 4A**

IP Packet *n* — IP Packet *n+1* — IP Packet *m*

SDAP 225: SDAP SDU (H), SDAP SDU (H), SDAP SDU (H)

radio bearer 402 — radio bearer 404

PDCP 224: PDCP SDU (H), PDCP SDU (H), PDCP SDU (H)

SDAP PDU

RLC 223: RLC SDU (H), RLC SDU (H), SDU Seg. (H), SDU Seg. (H), SDU Seg. (H)

MAC 222: MAC SDU (H), MAC SDU (H), MAC SDU (H), MAC SDU (H)

PHY 221: PHY SDU (Transport Block), PHY SDU

**FIG. 4B**

R | F | LCID | SDU Length

H | MAC CE | H | MAC CE | H | MAC CE | H | MAC SDU | H | MAC SDU

MAC PDU

**FIG. 5A**

**FIG. 5B**

FIG. 6

FIG. 7

EP 4 531 322 A1

FIG. 8

Resource Element (RE)
1 Symbol x 1 Subcarrier

Resource Block (RB)
12 Subcarriers

NR Carrier Bandwidth
(Up to 3300 Subcarriers)

Frequency

Time

One Slot (14 Symbols)

EP 4 531 322 A1

FIG. 9

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

**FIG. 10A**

PUCCH Group
1010

PUCCH Group
1050

Downlink
Component
Carriers

PCell
1011

SCell
1012

SCell
1013

PSCell
1051

SCell
1052

SCell
1053

UCI
1031

UCI
1032

UCI
1033

UCI
1071

UCI
1072

UCI
1073

Uplink
Component
Carriers

PCell
1021

SCell
1022

SCell
1023

PSCell
1061

SCell
1062

SCell
1063

**FIG. 10B**

FIG. 11A

FIG. 11B

**FIG. 12A**

**FIG. 12B**

Base Station 1302 — Wireless Device 1301

Configuration 1330

Preamble 1341

Msg A 1331

1342 Transport block

Msg B 1332

**FIG. 13C**

Configuration 1320

Msg 1 1321

Msg 2 1322

**FIG. 13B**

Configuration 1310

Msg 1 1311

Msg 2 1312

Msg 3 1313

Msg 4 1314

**FIG. 13A**

EP 4 531 322 A1

**FIG. 14A**

CORESET 1403

CORESET 1404

CORESET 1402

CORESET 1401

Bandwidth

One slot

CORESET → CCE-to-REG mapping → Search Space → PDCCH candidate
→ PDCCH candidate
→ PDCCH candidate

**FIG. 14B**

FIG. 15A

Display
1536

Network
1540

1530

Device
Controller
1537

Network
I/O
1539

ROM
1532

Removable
Media
1534

Processor
1531

RAM
1533

GPS
1541

Hard Drive
1535

WiFi
1543

Bluetooth
1542

1538

**FIG. 15B**

**FIG. 16A**

**FIG. 16B**

$s_l(t)$ → Split → $\text{Re}\{s_l(t)\}$ → ⊗ ← $\cos(2\pi f_0 t)$
$\text{Im}\{s_l(t)\}$ → ⊗ ← $-\sin(2\pi f_0 t)$
⊕ → Filtering →

**FIG. 16D**

$s_l^{(p)}(t)$ → Split → $\text{Re}\{s_l^{(p)}(t)\}$ → ⊗ ← $\cos(2\pi f_0 t)$
$\text{Im}\{s_l^{(p)}(t)\}$ → ⊗ ← $-\sin(2\pi f_0 t)$
⊕ → Filtering →

**FIG. 16C**

EP 4 531 322 A1

FIG. 17

EP 4 531 322 A1

FIG. 18A

FIG. 18B

Repetitions

DCI                    DCI

Uplink transmission/
Downlink reception                    1930

                                      1931

| Search space set 1 | Search space set 2 |
| (PDCCH candidate 1) | (PDCCH candidate 2) |

First DTX active time

1940

Use a default PDCCH candidate (or a default
search space set) to determine, for example,
processing time(s), PUCCH resource to
transmit HARQ-ACK, transmission power

**FIG. 19**

**Repetitions**

DCI

DCI

Uplink transmission/
Downlink reception

2030

2031

Search space set 1
(PDCCH candidate 1)

Search space set 2
(PDCCH candidate 2)

Not monitored

DTX non-active time

2040

Use a default PDCCH candidate (or a default
search space set) to determine, for example,
processing time(s), PUCCH resource to
transmit HARQ-ACK, transmission power

**FIG. 20**

EP 4 531 322 A1

FIG. 21

2210

Receive configuration parameter(s) indicating:
- at least two DTXs for a cell
- two search space sets linked for PDCCH repetition

2220

Receive a control command indicating activation
of a DTX of the at least two DTXs

2230

During a non-active time/period/duration of the DTX, monitor
one of two PDCCH candidates of the two search space sets

2240

receive, via the (monitored) one of two PDCCH candidates, DCI
scheduling an uplink transmission or a downlink reception

2250

Receive/transmit the downlink reception/uplink
transmission based on (or using) a default PDCCH
candidate (e.g., with a later ending time or with an
earlier start time) of the two PDCCH candidates

FIG. 22

2310

Receive configuration parameter(s) indicating:
- at least two DTXs for a cell
- two search space sets linked for PDCCH repetition

2320

Receive a control command indicating activation
of a DTX of the at least two DTXs

2330

Receive, via a first PDCCH candidate of two PDCCH
candidates of the two search space sets, DCI scheduling
an uplink transmission or a downlink reception

2340

Is a second PDCCH
candidate of the two
PDCCH candidates
monitored for the DCI?

YES                NO

2350

Receive/transmit the downlink
reception/uplink transmission based on
a default PDCCH candidate (e.g., with a
later ending time or with an earlier start
time) of the two PDCCH candidates

2360

Receive/transmit the
downlink reception/uplink
transmission based on the
first PDCCH candidate of
the two PDCCH candidates

FIG. 23

2410

Receive/Send one or more message(s) comprising:
- a repetition scheme parameter indicating a time domain scheme or a frequency domain scheme
- a downlink-or-joint TCI state list parameter

2420

Receive/Send DCI

2430

Determine to apply two TCI states to a PDSCH based on:
- an absence of a TCI selection field in the DCI; or
- a value, of the TCI selection field in the DCI, indicating to apply two TCI states

2440

Determine, based on the determining to apply two TCI states to the PDSCH, a TBS of a first PDSCH transmission occasion associated with a first TCI state of the two TCI states

2450

Receive/Send the PDSCH using the determined TBS via both:
- the first PDSCH transmission occasion associated with the first TCI state of the two TCI states; and
- a second PDSCH transmission occasion associated with a second TCI state of the two TCI states

FIG. 24

2510

Receive one or more message(s) comprising:
• a repetition scheme parameter indicating a frequency
  domain scheme; and
• a downlink-or-joint TCI state list parameter

2520

Receive DCI, the DCI comprising an antenna port field
indicating one or more DM-RS ports within one CDM
group

2530

Determine to apply two TCI states to a PDSCH based
on:
• an absence of a TCI selection field in the DCI; or
• a value, of the TCI selection field in the DCI,
  indicating to apply two TCI states

2540

Receive, based on the determining to apply two TCI
states to the PDSCH, a PT-RS associated with a lowest
indexed DM-RS port among the one or more DM-RS
ports assigned for the PDSCH

FIG. 25A

2511

Send one or more message(s) comprising:
• a repetition scheme parameter indicating a frequency domain scheme; and
• a downlink-or-joint TCI state list parameter

2521

Send DCI, the DCI comprising an antenna port field indicating one or more DM-RS ports within one CDM group

2531

Determine to apply two TCI states to a PDSCH based on:
• an absence of a TCI selection field in the DCI; or
• a value, of the TCI selection field in the DCI, indicating to apply two TCI states

2541

Send, based on the determining to apply two TCI states to the PDSCH, a PT-RS associated with a lowest indexed DM-RS port among the one or more DM-RS ports assigned for the PDSCH

FIG. 25B

Europäisches
Patentamt

European
Patent Office

Office européen
des brevets

# EUROPEAN SEARCH REPORT

**Application Number**

EP 24 20 3194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA: "Rel-17 editorial corrections for TS 38.214", 3GPP DRAFT; R1-2210790, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 27 October 2022 (2022-10-27), XP052260253, Retrieved from the Internet: URL:https://ftp.3gpp.org/tsg_ran/WG1_RL1/TSGR1_110b-e/Docs/R1-2210790.zip R1-2210790.docx [retrieved on 2022-10-27] * page 12 - page 43 * | 1-15 | INV. H04L5/00 H04W72/23 |
| A | US 2020/313796 A1 (PARK JINHYUN [KR] ET AL) 1 October 2020 (2020-10-01) * paragraph [0009] * * paragraph [0150] - paragraph [0196] * * claims 1-16 * | 1-15 | TECHNICAL FIELDS SEARCHED (IPC) H04L H04W |

The present search report has been drawn up for all claims

| Place of search | Date of completion of the search | Examiner |
|---|---|---|
| The Hague | 13 February 2025 | Dupuis, Hervé |

EPO FORM 1503 03.82 (P04C01)

## ANNEX TO THE EUROPEAN SEARCH REPORT
## ON EUROPEAN PATENT APPLICATION NO.

EP 24 20 3194

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| US 2020313796 A1 | 01-10-2020 | US | 2020313796 A1 | 01-10-2020 |
| | | WO | 2020204492 A1 | 08-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63540978